# EUROPEAN PATENT APPLICATION

(11) **EP 4 498 090 A1**
(43) Date of publication of application: **29.01.2025**
(21) Application number: 23759247.2
(22) Date of filing: 23.02.2023
(51) Int. Cl.: G01N 35/00, G01N 35/04

(54) **MOLECULAR DIAGNOSTIC APPARATUS, AND TEST CARD CONVEYING SEAT FOR MOLECULAR DIAGNOSTIC APPARATUS**

(30) Priority: 25.02.2022 CN 202220402035 U; 25.02.2022 CN 202210177162
(71) Applicant: Edan Instruments, Inc., Shenzhen, Guangdong 518000 (CN)
(72) Inventor: HUANG, Gaoxiang, Shenzhen, Guangdong 518000 (CN); ZHU, Yuanbao, Shenzhen, Guangdong 518000 (CN); LIU, Ze, Shenzhen, Guangdong 518000 (CN); ZHAO, Zhixiang, Shenzhen, Guangdong 518000 (CN)
(74) Representative: Herrero & Asociados, S.L.
(86) International application number: PCT/CN2023/077944
(87) International publication number: WO 2023/160625

(57) **Abstract**

A molecular diagnostic device and a detection card conveying seat for the same. The detection card conveying seat (20) includes: a pressure plate (50), arranged with a first slide rail component (58), where the pressure plate is slidable along a sliding direction of the first slide rail component; and a transporting assembly (60), configured to place a detection card. The transporting assembly includes: a sliding frame (61), where the sliding frame is slidable together with the pressure plate along the sliding direction under an action of an abutting force; and a card tray (65), connected to the sliding frame and configured to place the detection card, where the pressure plate is configured to move toward the detection card and movable to a position abutting against the detection card, in condition of the sliding frame being subjected to a force that overcomes the abutting force.

## Description

The present disclosure claims priority of Chinese Patent Application No. 202210177162.7, in the title of "MOLECULAR DIAGNOSTIC DEVICE AND DETECTION CARD CONVEYING SEAT FOR THE SAME", filed on February 25, 2022, and No. 202220402035.8, in the title of "MOLECULAR DIAGNOSTIC DEVICE AND DETECTION CARD CONVEYING SEAT FOR THE SAME", filed on February 25, 2022, the entire contents of which are hereby incorporated by reference in their entirety.

### TECHNICAL FIELD

The present disclosure relates to the field of molecular detection technologies, and in particular to a molecular diagnostic device and a detection card conveying seat for the same.

### BACKGROUND

A molecular diagnostic device utilizes molecular diagnostic technology, which refers to diagnostic technology where nucleic acids or proteins are taken as biomarkers for clinical testing, for providing information and a basis for decision-making for the prediction, diagnosis, prevention, treatment, and prognosis of diseases.

When the molecular diagnostic device performs a testing on a detection card, the detection card is required to be transported to a testing station for testing. Therefore, a detection card shipping device is required.

### SUMMARY OF THE DISCLOSURE

In a first aspect, the present disclosure provides a detection card conveying seat for a molecular diagnostic device, including:
a pressure plate, arranged with a first slide rail component, where the pressure plate is slidable along a sliding direction of the first slide rail component; and
a transporting assembly, configured to place a detection card and including:
   a sliding frame, where an abutting force exists between the sliding frame and the pressure plate in the sliding direction, and the sliding frame is slidable together with the pressure plate along the sliding direction under an action of the abutting force; and
   a card tray, connected to the sliding frame and configured to place the detection card, where the detection card is configured to be disposed on a side of the pressure plate away from the sliding frame along the sliding direction; the pressure plate is configured to move toward the detection card and movable to a position abutting against the detection card, in condition of the sliding frame being subjected to a force that overcomes the abutting force.

In a second aspect, the present disclosure provides detection card conveying seat for a molecular diagnostic device, including:
a pressure plate, arranged with a first slide rail component; and
a transporting assembly, configured to place a detection card and including:
   a sliding frame, arranged with a second slide rail component, where a sliding direction of the second slide rail component is consistent with a sliding direction of the first slide rail component; and
   a card tray, slidably connected to the sliding frame and configured to slide to a position for mounting the detection card, where the detection card is configured to be disposed on a side of the pressure plate away from the sliding frame along the sliding direction of the second slide rail component; the pressure plate is configured to move toward the detection card and movable to a position abutting against the detection card.

In a third aspect, the present disclosure provides a molecular diagnostic device, including:
a rack, having a frame structure;
a pressure plate, slidably connected to the rack to slide relative to the rack along a sliding direction; and
a transporting assembly, configured to place a detection card and including:
   a sliding frame, slidably connected to the rack to slide relative to the rack along the sliding direction, where an abutting force exists between the sliding frame and the pressure plate in the sliding direction, and the sliding frame is slidable together with the pressure plate relative to the rack along the sliding direction under an action of the abutting force; and
   a card tray, slidably connected to the sliding frame and configured to place the detection card, where the detection card is configured to be disposed on a side of the pressure plate away from the sliding frame along the sliding direction; the pressure plate is configured to move toward the detection card and movable to a position abutting against the detection card, in condition of the sliding frame being subjected to a force that overcomes the abutting force.

### BRIEF DESCRIPTION OF THE DRAWINGS

In order to more clearly illustrate the technical solution in the embodiments of the present disclosure, a brief description of the drawings needed for use in the embodiments is provided below. Obviously, the drawings described below are only some embodiments of the present disclosure, and for those skilled in the art, other drawings can be obtained without the expenditure of creative effort.
FIG. 1 is a perspective structural schematic view of a molecular diagnostic device according to some embodiments of the present disclosure.
FIG. 2 is an exploded view of the molecular diagnostic device in FIG. 1.
FIG. 3 is a perspective structural schematic view of a rack in FIG. 1.
FIG. 4 is an exploded view of a drive assembly in FIG. 3.
FIG. 5 is a schematic view illustrating a connection relationship between a rack body and a screw rod assembly in FIG. 3.
FIGS. 6 and 7 are perspective structural schematic views of a circuit mounting plate in FIG. 3 at different viewing angles.
FIG. 8 is a partial structural schematic view of the rack in FIG. 3.
FIG. 9 is a structural schematic view of a second limiting switch in FIG. 8.
FIG. 10 is an exploded schematic view of a pressure plate in FIG. 2.
FIGS. 11 and 12 are structural schematic views of a first housing in FIG. 10 at different viewing angles.
FIG. 13 is a structural schematic view of a pressing member in FIG. 10.
FIGS. 14 and 15 are structural schematic views of a first heating member in FIG. 10 at different viewing angles.
FIG. 16 is a structural schematic view of a first circuit board in FIG. 10.
FIG. 17 is a structural schematic view of a locking member in FIG. 10.
FIG. 18 is a cross-sectional schematic view along line XVII-XVII in FIG. 17.
FIGS. 19 and 20 are structural schematic views of a second housing in FIG. 10 at different viewing angles.
FIG. 21 is a perspective structural schematic view of a pressure plate in FIG. 10.
FIG. 22 is a structural schematic view of a first slide rail in FIG. 21.
FIG. 23 is a structural schematic view of a connection between a rack 10 and a pressure plate.
FIG. 24 is a structural schematic view of the transporting assembly in FIG. 2.
FIG. 25 is a structural schematic view of a sliding frame in FIG. 24.
FIG. 26 is a structural schematic view of the transporting member in FIG. 24.
FIGS. 27 and 28 are structural schematic views of a sliding seat in FIG. 26 at different viewing angles.
FIG. 29 is a structural schematic view of a connection between a third drive member 64 and a card tray in FIG. 26.
FIG. 30 is a structural schematic view of a connection between a third drive member 64 and a card tray and a pressing member in FIG. 2.
FIGS. 31 and 32 are structural schematic views of a connection between a pressure plate and the transporting assembly in FIG. 2 at different viewing angles.
FIG. 33 is an exploded view of the detection card detecting seat in FIG. 2.
FIG. 34 is an exploded view of a support seat in FIG. 33.
FIGS. 35 and 36 are structural schematic views of a support seat body in FIG. 34 at different viewing angles.
FIG. 37 is a structural schematic view of a light detection member in FIG. 34.
FIG. 38 is a cross-sectional schematic view along XXXVII-XXXVII in FIG. 37.
FIG. 39 is a structural schematic view of a sample addition chamber component in FIG. 34.
FIG. 40 is a cross-sectional schematic view of a sample addition chamber component along line XXXIX-XXXIX in FIG. 39.
FIG. 41 is a structural schematic view of a light generator in FIG. 33.
FIG. 42 is a cross-sectional schematic view of a first light generator in FIG. 41.
FIG. 43 is an exploded view of a light-receiving component in FIG. 33.
FIG. 44 is a mechanism view of a light-receiving member in FIG. 33.
FIG. 45 is a structural schematic view of a sub-light path component in FIG. 43.
FIG. 46 is a cross-sectional schematic view of the sub-light path component in FIG. 45.
FIG. 47 is a structural schematic view of a first washer in FIG. 43.
FIG. 48 is a structural schematic view of a second washer in FIG. 43.
FIG. 49 is a structural schematic view of a second clamping piece in FIG. 43.
FIG. 50 is a structural schematic view of a detection card according to some embodiments of the present disclosure.
FIG. 51 is a cross-sectional schematic view of the detection card along L-L in FIG. 50.
FIG. 52 is a perspective structural schematic view of the detection card in FIG. 50.
FIG. 53 is a schematic view of a processing of using the detection card in FIG. 50.

### DETAILED DESCRIPTION

The following description of the technical solutions in the embodiments of the present disclosure is presented clearly and completely with reference to the accompanying drawings in the embodiments of the present disclosure. It is apparent that the embodiments described are only some embodiments of the present disclosure and not all of the embodiments. All other embodiments obtained by those skilled in the art without creative effort based on the embodiments in the present disclosure fall within the scope of the present disclosure.

References to "embodiments" herein mean that particular features, structures, or properties described in conjunction with an embodiment may be included in at least one embodiment of the present disclosure. The occurrence of the phrase at various places in the specification does not necessarily mean that the same embodiment is referred to in each case, nor does it mean that the embodiments are mutually exclusive or alternative embodiments. It is expressly understood, and is implicitly understood by those skilled in the art, that the embodiments described herein may be combined with other embodiments.

The embodiments of the present disclosure provide a rack for a molecular diagnostic device, including:
a rack body, in the form of a frame structure; where the rack body is configured to mount a detection card detecting seat; the rack body is further configured to mount a detection card conveying seat above the detection card detecting seat, the detection card detecting seat being configured to carry a detection card; the rack body is arranged with a first guide rail, such that the detection card conveying seat is capable of sliding on the first guide rail and sliding to a position where the detection card is placed on the detection card detecting seat;
a first drive device, arranged on the rack body, for driving the detection card conveying seat to slide on the first guide rail; and
a first limiting switch, arranged on the rack body; where the first limiting switch is configured to be triggered when the detection card conveying seat places the detection card on the detection card detecting seat, and the first drive device stops driving the detection card conveying seat to move towards the detection card detecting seat in response to the first limiting switch being triggered.

In some embodiments, the first drive device includes:
at least one lead screw, arranged on the rack body for mounting the detection card conveying seat; and
a drive assembly, arranged on the rack body for driving the at least one lead screw, such that the at least one lead screw pushes the detection card conveying seat to slide on the first guide rail.

In some embodiments, the rack body includes:
a top plate; and
multiple legs, arranged on a side of the top plate for supporting the top plate; where the first guide rail is arranged on the multiple legs.

In some embodiments, the rack body further includes:
a reinforcing plate, fixed to adjacent two legs of the multiple legs.

In some embodiments, the drive assembly is arranged on the top plate, and the at least one lead screw is arranged on the top plate and the reinforcing plate.

In some embodiments, each of the at least one lead screw includes:
a screw body, respectively rotatably connected to the top plate and the reinforcing plate, for a threaded connection with the detection card conveying seat; and
a first runner, arranged on an end of the screw body and disposed on a side of the top plate away from the multiple legs; where the first runner is transmission-connected to the drive assembly, such that the drive assembly is capable of driving the first runner to rotate.

In some embodiments, the drive assembly includes:
a synchronization component, arranged on the top plate and transmission-connected to the at least one lead screw so as to synchronously drive the at least one lead screw; and
a first drive member, configured to be transmission-connected to the synchronization component.

In some embodiments, the top plate defines a mounting hole, and the drive assembly further includes:
a mounting frame, arranged on the mounting hole; where the synchronization component and the first drive member are arranged on the mounting frame.

In some embodiments, the mounting frame includes:
a mounting plate, on a side of which the first drive member is arranged, and on the other side of which the synchronization component is arranged; and
a crimping plate, arranged on the top plate at the installation hole, and disposed opposite the mounting plate on the side of the mounting plate on which the synchronization component is installed, in order to fix the synchronization component.

In some embodiments, the first drive member and the mounting plate are disposed on a side of the top plate close to the multiple legs.

In some embodiments, the synchronization component includes:
a first gear, sandwiched between the mounting plate and the crimping plate and arranged on an output shaft of the first drive member; and
at least one transmission gear set, sandwiched between the mounting plate and the crimping plate and engaged with the first gear; where the at least one transmission gear set is arranged facing the at least one lead screw in a one-to-one correspondence, and each of the at least one transmission gear set is transmission-connected to a corresponding lead screw.

In some embodiments, each of the at least one transmission gear set includes:
a second gear, engaged with the first gear; and
a second runner, coaxially disposed and fixedly connected to the second gear, for a transmission connection with a corresponding lead screw.

In some embodiments, a second limiting switch is arranged on the rack body, the detection card conveying seat is configured to extend to the second limiting switch and extend to an extended state in which the detection card can be arranged; the second limiting switch is configured to be triggered when the detection card conveying seat is in the extended state, such that the detection card conveying seat stops extending in response to the second limiting switch being triggered.

In some embodiments, the rack body is arranged with a code scanning device, and the code scanning device is configured to scan an information mark of the detection card on the detection card detecting seat when the detection card conveying seat is in the extended state.

In some embodiments, the top plate defines a strip-shaped opening at a position opposite to the detection card conveying seat, such that the detection card conveying seat is capable of sliding on the first guide rail towards away from the detection card detecting seat and into the strip-shaped opening; the strip-shaped opening extends towards the second limiting switch, such that the detection card conveying seat can extend in an extension direction of the strip-shaped opening and extend to the extended state.

In some embodiments, the rack body further includes a circuit mounting plate for mounting a control circuit board, the multiple legs including a first leg and a second leg, and the circuit mounting plate including:
a mounting plate body, arranged on an outer side of the first leg and the second leg; where a side of the mounting plate body away from the first leg and the second leg is configured to mount the control circuit board.

In some embodiments, the mounting plate body is arranged with a first enclosure disposed on an edge near each of the first leg and second leg, and the first enclosure is bent away from the control circuit board to cover a gap between the mounting plate body and a corresponding one of the first leg and second leg.

In some embodiments, the mounting plate body is arranged with a second enclosure disposed on an edge close to the top plate, and the second enclosure is bent from an edge of the mounting plate body toward away from the control circuit board.

In some embodiments, the rack further includes:
a support frame; where the rack body is arranged on the support frame, and the rack body is configured to mount the detection card detecting seat through the support frame.

In some embodiments, the detection card detecting seat includes a support seat and a detection component, and the support frame includes:
a base, fixedly connected to the rack body, for mounting the detection component; and
a fixing seat, arranged on the base, for mounting the support seat, such that the detection card conveying seat places the detection card on the support seat to be detected by the detection component.

In some embodiments, the rack body includes:
a top plate, opposite the base; and
multiple legs, arranged between the top plate and the base and surrounding the fixing seat, for supporting the top plate; where and the first guide rail is arranged on the multiple legs.

In some embodiments, the base includes a base body; where the base body defines a fixing groove on a side of the fixing seat for accommodating the fixing seat.

In some embodiments, the base body defines multiple isolation grooves peripherally around the fixing groove for cooperating with the detection component.

In some embodiments, the base is arranged with a support portion for mounting the support seat.

In some embodiments, the fixing seat includes:
a mounting seat, arranged on the base, for mounting the detection component;
a first fastening plate and a second fastening plate, for fastening the detection component; and
a support plate, arranged opposite the mounting seat and on the first fastening plate and second fastening plate, for mounting the support seat.

In some embodiments, the first limiting switch includes:
a first sub-limiting switch, arranged on the rack body; where the first sub-limiting switch is configured to be triggered when the detection card conveying seat places the detection card on the detection card detecting seat, and the first drive device stops driving the detection card conveying seat to move towards the detection card detecting seat in response to the first sub-limiting switch being triggered; and
a second sub-limiting switch, arranged on the rack body; where the second sub-limiting switch is configured to be triggered when the detection card conveying seat slides on the first guide rail and slides to a position where the detection card conveying seat can be extended, and the first drive device stops driving the detection card conveying seat to move away from the detection card detecting seat in response to the second sub-limiting switch being triggered.

The embodiments of the present disclosure provide a rack for a molecular diagnostic device, including:
a rack body, in the form of a frame structure; where the rack body is configured to mount a detection card detecting seat; the rack body is further configured to mount a detection card conveying seat above the detection card detecting seat, the detection card detecting seat being configured to carry a detection card, the rack body is arranged with a first guide rail, such that the detection card conveying seat is capable of sliding on the first guide rail and sliding to a position where the detection card is placed on the detection card detecting seat;
a first drive device, arranged on the rack body, for driving the detection card conveying seat to slide on the first guide rail;
a first limiting switch, arranged on the rack body; where the first limiting switch is configured to be triggered when the detection card conveying seat places the detection card on the detection card detecting seat, and the first drive device stops driving the detection card conveying seat to move towards the detection card detecting seat in response to the first limiting switch being triggered; and
a code scanning device, arranged on the rack body, for scanning an information mark on the detection card on the detection card conveying seat.

The embodiments of the present disclosure provide a molecular diagnostic device, including:
a rack body, in the form of a frame structure;
a detection card detecting seat, arranged on the rack body;
a detection card conveying seat, arranged on the rack body and disposed above the detection card detecting seat, and slidably connected to the rack body; where the detection card conveying seat is configured to slide in a sliding direction and slidable to a position where the detection card is placed on the detection card detecting seat;
a first drive device, arranged on the rack body, for driving the detection card conveying seat to slide in the sliding direction; and
a first limiting switch, arranged on the rack body; where the first limiting switch is configured to be triggered when the detection card conveying seat places the detection card on the detection card detecting seat, and the first drive device stops driving the detection card conveying seat to move towards the detection card detecting seat in response to the first limiting switch being triggered.

The embodiments of the present disclosure provide a card tray for a molecular diagnostic device, including:
a card tray body, configured to rotate around a rotating shaft to centrifuge a detection card, the detection card being arranged with a sample addition chamber and a detection chamber on the same side; and
multiple recesses, arranged on the same side of the card tray body, surrounding the rotating shaft; where each of the multiple recesses extends away from the rotating shaft and to an edge of the card tray body; each of the multiple recesses is configured to hold a corresponding detection card such that the detection chamber is disposed outside the card tray body at the edge of the card tray body to facilitate detection; each of the multiple recesses defines a receiving hole that passes through the card tray body, such that the sample addition chamber is disposed in the receiving hole to facilitate heating, and a first snap-in part is arranged in each of the multiple recesses to engage with a corresponding detection card during centrifugation of the detection card.

In some embodiments, the first snap-in part is a groove or a protruding post to engage with the detection card.

In some embodiments, each of the multiple recesses is a groove.

In some embodiments, the card tray body is arranged with multiple ribs on the same side to form the multiple recesses at intervals, and a side of the multiple ribs away from the card tray body is flush with a surface of the detection card placed in a corresponding recess of the multiple recesses.

In some embodiments, the multiple ribs are arranged with a second snap-in part for engaging with a pressing member that fixes the detection card.

In some embodiments, the second snap-in part is a protruding post, the pressing member defines a connecting hole, and the second snap-in part is configured to be placed in the connecting hole and engaged with the pressing member.

In some embodiments, a magnetic coupling member is arranged inside the card tray body to magnetically connect with the pressing member.

In some embodiments, the card tray body defines a positioning hole to position a rotating position of the card tray body around the rotating shaft.

In some embodiments, the card tray body is arranged with a positioning member on a side away from the multiple recesses to position the position of the detection card.

The embodiments of the present disclosure provide a molecular diagnostic device, including:
a card tray, for carrying detection cards on one side, including:
a card tray body, for surrounding the detection cards around a rotating shaft to centrifuge the detection cards about the rotating shaft; where the card tray body is arranged with a first snap-in part for engaging with the detection cards; each detection card is arranged with a sample addition chamber and a detection chamber; the card tray body defines a receiving hole for accommodating the sample addition chamber in the receiving hole to facilitate heating; and
multiple ribs, disposed on a side of the card tray body on which the detection cards are arranged, surrounding the rotating shaft; where the multiple ribs are configured to place the detection cards each between corresponding adjacent two ribs, such that the detection chamber is disposed outside an edge of the card tray body in a radial direction of the rotating shaft to facilitate detection; each of the multiple ribs and the card tray body defines a positioning holes for positioning a rotating position of the card tray body around the rotating shaft; and
a detection card detecting seat, for placing the detection cards on the card tray, for heating the sample addition chamber, for heating the detection chamber, and for detecting the detection chamber; where the detection card detecting seat is configured to be disposed on a side of the card tray away from the multiple ribs when the detection card is disposed on the detection card detecting seat.

**In** some embodiments, the detection card detecting seat includes:
a support seat body;
a detection chamber component, arranged on the support seat body, for accommodating the detection chamber of the detection card on the card tray, for heating the detection chamber, and for detecting the detection chamber; and
a sample addition chamber component, arranged on the support seat body, for accommodating the sample addition chamber of the detection card on the card tray, and for heating the sample addition chamber.

In some embodiments, a placement groove is defined on a side of the support seat body, and the placement groove is configured to accommodate the card tray body when the detection card is disposed on the detection card detecting seat.

In some embodiments, the support seat body defines a fastening hole in the placement groove, and the sample addition chamber component is arranged in the fastening hole.

In some embodiments, the sample addition chamber component includes:
a holding plate, fixed on a side of the support seat body away from the placement groove;
a sample addition chamber mount, arranged in the fastening hole and for heating the sample addition chamber; and
a support component, arranged between the holding plate and the sample addition chamber mount, for adjusting a distance between the sample addition chamber mount and the holding plate.

In some embodiments, the support component includes:
a sleeve pillar, arranged on the holding plate; and
a spring, sleeved on the sleeve pillar; where an end of the spring abuts against the holding plate, and the other end of the spring abuts against the sample addition chamber mount.

In some embodiments, the support seat body defines multiple extension grooves surrounds the placement groove, the multiple extension grooves being connected to the placement groove and forming mounting tables each between corresponding adjacent two extension grooves; where the detection chamber component is arranged on the mounting table.

In some embodiments, the support seat body defines a receiving hole at the position of the mounting table, and the detection chamber component is arranged in the receiving hole.

In some embodiments, the detection chamber component includes a light detection member arranged in the receiving hole, and the light detection member includes:
a detecting seat, for placing the detection chamber and heating the detection chamber;
an excitation fiber, one end of which is arranged on the detecting seat, for emitting excitation light to the detection chamber;
a receiving fiber, one end of which is arranged on the detecting seat, for receiving the excitation light emitted by the excitation fiber and fluorescence formed by the excitation light irradiating the detection chamber, so as to complete the detection of the detection chamber.

In some embodiments, a first positioning member is arranged on a side of the card tray body away from the multiple ribs, and a second positioning member is arranged in the placement groove of the support seat body. The first positioning member and the second positioning member are configured to cooperate with each other to position the card tray body on the support seat body.

In some embodiments, the support seat body defines a positioning hole, and the positioning hole of the card tray body and the positioning hole of the support seat body are configured to overlap to position the rotating position of the card tray body around the rotating shaft.

The embodiments of the present disclosure provide a molecular diagnostic device, including:
a rack, in the form of a frame structure;
a detection card detecting seat, arranged on the rack, for placing a detection card, the detection card being arranged with a sample addition chamber and a detection chamber disposed on the same side; where the detection card detecting seat is configured to detect the detection chamber;
a sliding frame, slidably connected to the rack, for sliding towards the detection card detecting seat; and
a card tray, slidably connected to the sliding frame to slide to a position for placing the detection card on the card tray, for rotating about a rotating shaft to centrifuge the detection card; where the card tray is configured to slide together with the sliding frame relative to the rack to convey the detection card to the detection card detecting seat; the card tray includes:
a card tray body; and
multiple recesses, arranged on the same side of the card tray body and surrounding the rotating shaft; where each of the multiple recesses extends away from the rotating shaft and to an edge of the card tray body; each of the multiple recesses is configured to hold a corresponding detection card such that the detection chamber is disposed outside the card tray body at the edge of the card tray body; each of the multiple recesses defines a receiving hole that passes through the card tray body, such that the sample addition chamber is disposed in the receiving hole.

In some embodiments, the molecular diagnostic device further includes:
a pressing member, for engaging with the card tray body on a side of the card tray on which the multiple recesses are arranged to fix the detection card.

The embodiments of the present disclosure provide a molecular diagnostic device, including:
a rack;
a sliding frame, arranged in the rack and slidably connected to the rack to slide in the rack; and
a card tray, slidably connected to the sliding frame; where the card tray is configured to slide relative to the sliding frame to an outside of the rack and to slide relative to the rack together with the sliding frame in the rack; where the card tray is configured to carry the detection card and to centrifuge the detection card in the rack.

In some embodiments, the sliding frame includes:
a fixing frame;
a first slide rail component, arranged on the fixing frame and slidably connected to the rack; and
a first guide rail, arranged on the fixing frame; where the card tray is slidably connected to the first guide rail to slide in an extension direction of the first guide rail, and a sliding direction of the first slide rail component relative to the rack is different from a sliding direction of the card tray relative to the first guide rail.

In some embodiments, the sliding direction of the first slide rail component relative to the rack is perpendicular to the sliding direction of the card tray relative to the first guide rail.

In some embodiments, the rack includes:
a rack body, arranged with a second guide rail; where the first slide rail component is slidably connected to the second guide rail to slide in an extension direction of the second guide rail.

In some embodiments, the rack body includes:
a top plate; and
multiple legs, arranged on a side of the top plate to support the top plate; where the second guide rail includes multiple second guide rails, and the multiple second guide rails are arranged on the multiple legs.

In some embodiments, the first slide rail component includes:
multiple slide rails, arranged around the fixing frame and correspond to the multiple second guide rails in a one-to-one correspondence; where each of the multiple slide rails is slidably connected to a corresponding one of the multiple second guide rails to slide in the extension direction of the second guide rail.

In some embodiments, each of the multiple slide rails includes:
a first slide rail mounting member, arranged on the fixing frame; and
a first slide rail member, arranged on the first slide rail mounting member and slidingly connected to a corresponding one of the multiple second guide rails.

In some embodiments, the card tray is arranged on a sliding seat, the sliding seat being slidably connected to the first guide rail; where the sliding seat is arranged with a first drive member, the first drive member being transmission-connected to the card tray to drive the card tray for centrifugation.

In some embodiments, the rack includes:
a top plate, defining a strip-shaped through hole; where the sliding frame is configured to slide relative to the rack to a position in which the first drive member is disposed within the strip-shaped through hole; the first drive member is configured to slide within the strip-shaped through hole while the sliding seat slides along the first guide rail; and
multiple legs, arranged on a side of the top plate, for supporting the top plate.

In some embodiments, the sliding frame further includes:
a first drive device, arranged on the fixing frame, for driving the sliding seat to slide on the first guide rail.

In some embodiments, the first drive device includes:
a second drive member, arranged on the fixing frame, and
a lead screw, transmission-connected to the second drive member, rotatably connected to the fixing frame, and threadedly connected to the sliding seat, for driving the sliding seat to slide on the first guide rail.

In some embodiments, the first guide rail includes:
a first sub-guide rail and a second sub-guide rail, that are arranged opposite each other; where each of the first sub-guide rail and the second sub-guide rail is slidably connected to the sliding seat so as to enable the sliding seat to slide on the first sub-guide rail and the second sub-guide rail.

In some embodiments, the sliding seat includes:
a sliding seat body, disposed between the first sub-guide rail and the second sub-guide rail;
a second slide rail component and a third slide rail component, that are arranged on opposite sides of the sliding seat body; where the second slide rail component is slidably connected to the first sub-guide rail, the third slide rail component is slidably connected to the second sub-guide rail and threadedly connected to the lead screw.

In some embodiments, the second slide rail component includes:
a second slide rail mounting member, arranged on the sliding seat body; and
a second slide rail member, arranged on the second slide rail mounting member.

In some embodiments, the third slide rail component includes:
a third slide rail mounting member, arranged on the sliding seat body;
a screw fitting, arranged on the third slide rail mounting member and threadedly connected to the lead screw; and
a third slide rail member, arranged on the screw fitting.

In some embodiments, the fixing frame is arranged with a light sensor, and the sliding seat is arranged with a first limit member; the sliding seat is configured to slide relative to the fixing frame to a position where the first limit member triggers the light sensor, and the first drive device stops driving the sliding seat to slide in response to the light sensor being triggered.

In some embodiments, the rack is arranged with a first limiting switch, and the sliding seat is arranged with a second limit member; the sliding seat is configured to slide relative to the fixing frame to a position where the second limit member triggers the first limiting switch, and the first drive device stops driving the sliding seat to slide in response to the first limiting switch being triggered.

In some embodiments, the fixing frame surrounds a periphery of the sliding seat.

In some embodiments, the card tray includes:
a card tray body, configured to rotate around a rotating shaft to centrifuge a detection card, the detection card being arranged with a sample addition chamber and a detection chamber on the same side; where an axial direction of the rotating shaft is the same as a sliding direction of the card tray relative to the first guide rail; and
multiple recesses, arranged on the same side of the card tray body, surrounding the rotating shaft; where each of the multiple recesses extends away from the rotating shaft and to an edge of the card tray body; each of the multiple recesses is configured to hold a corresponding detection card such that the detection chamber is disposed outside the card tray body at the edge of the card tray body to facilitate detection; each of the multiple recesses defines a receiving hole that passes through the card tray body, such that the sample addition chamber is disposed in the receiving hole to facilitate heating, and a first snap-in part is arranged in each of the multiple recesses to engage with a corresponding detection card during centrifugation of the detection card.

In some embodiments, the card tray body is arranged with multiple ribs on the same side to form the multiple recesses at intervals, and a side of the multiple ribs away from the card tray body is flush with a surface of the detection card placed in a corresponding recess of the multiple recesses.

In some embodiments, the multiple ribs are arranged with a second snap-in part for engaging with a pressing member that fixes the detection card.

In some embodiments, the second snap-in part is a protruding post, the pressing member defines a connecting hole, and the second snap-in part is configured to be placed in the connecting hole and engaged with the pressing member.

In some embodiments, a magnetic coupling member is arranged inside the card tray body to magnetically connect with the pressing member.

In some embodiments, the fixing frame is arranged with a positioning light generator, and the card tray body defines a positioning hole, such that light emitted by the positioning light generator passes through the positioning hole to position s rotating position of the card tray body around the rotating shaft.

The embodiments of the present disclosure provide a molecular diagnostic device, including:
a rack;
a sliding frame, slidably connected to the rack;
a card tray, slidably connected to the sliding frame and configured to carry the detection card for centrifuging the detection card; where the card tray is disposed on a side of the sliding frame in a sliding direction of the sliding frame;
a first limiting switch, arranged on the rack; where the card tray is configured to slide relative to the sliding frame towards the first limiting switch to a first position for mounting the detection card; the first limiting switch is configured to be triggered when the card tray is in the first position, and the card tray stops sliding in response to the first limiting switch being triggered; and
a second limiting switch, arranged on the sliding frame; where the card tray is configured to slide relative to the sliding frame towards the second limiting switch to a second position; the second limiting switch is configured to be triggered when the card tray is in the second position, and the card tray stops sliding in response to the second limiting switch being triggered; the card tray is configured to slide with the sliding frame relative to the rack in the second position.

The embodiments of the present disclosure provide a molecular diagnostic device, including:
a rack;
a transporting assembly, slidably connected to the rack, for placing a detection card to centrifuge the detection card; where the transporting assembly is configured to extend from the rack to an outside of the rack for placing the detection card and configured to slide relative to the rack when in the rack;
a detection card detecting seat, for detecting the detection card, arranged in the rack; where the transporting assembly is configured to slide relative to the rack to a first position on a side of the detection card detecting seat to transport the detection card to the detection card detecting seat; and
a first limiting switch, arranged on the rack; where the first limiting switch is configured to be triggered when the transporting assembly is in the first position, and the transporting assembly stops sliding in response to the first limiting switch being triggered.

The embodiments of the present disclosure provide a molecular diagnostic device, including:
a rack, in the form of a frame structure;
a sliding frame, arranged on the rack and slidably connected to the rack to slide between a first position and a second position;
a card tray, slidably connected to the sliding frame to slide between a third position and a fourth position; where the card tray is configured to hold the detection card and to centrifuge the detection card;
a first drive device, arranged on the rack and configured to drive the sliding frame to slide; and
a second drive device, arranged on the sliding frame and configured to drive the card tray to slide relative to the sliding frame when the sliding frame is in the first position.

In some embodiments, the first drive device includes:
at least one lead screw, arranged on the rack, for driving the sliding frame to slide; and
a drive assembly, arranged on the rack body, for driving the at least one lead screw, such that the at least one lead screw can drive the sliding frame to slide.

In some embodiments, the rack includes:
a top plate;
multiple legs, arranged on a side of the top plate, for supporting the top plate; and
a reinforcing plate, disposed between adjacent two legs of the multiple legs, for connecting the two adjacent legs.

In some embodiments, each of the at least one screw is rotatably connected to the top plate and the reinforcing plate.

In some embodiments, the drive assembly includes:
a mounting frame, arranged on the top plate;
a first drive member, arranged on the mounting frame; and
a synchronisation component, arranged on the mounting frame, and transmission-connected to the first drive member and the at least one lead screw, such that the at least one lead screw rotates synchronously.

In some embodiments, the mounting frame includes:
a mounting plate, on one side of which the first drive member is arranged;
a crimping plate, snapped together with the mounting plate on the other side; where the synchronisation component is arranged between the crimping plate and the mounting plate, and a rotating shaft of the first drive element is transmission-connected to the synchronisation component between the mounting plate and the crimping plate.

In some embodiments, the top plate defines a mounting hole, and the mounting frame is arranged in the mounting hole.

In some embodiments, the first drive element is disposed on a side of the top plate facing the multiple legs.

In some embodiments, the at least one lead screw includes a first lead screw and a second lead screw, and the synchronisation component includes:
a first gear, arranged on the rotating shaft of the first drive member and disposed between the mounting plate and the crimping plate; and
a first transmission gear set and a second transmission gear set, each engaged with the first gear and disposed between the mounting plate and the crimping plate; where the first transmission gear set is transmission-connected to the first lead screw, and the second transmission gear set is transmission-connected to the second lead screw.

In some embodiments, each of the first transmission gear set and the second transmission gear sets includes a second gear and a first runner arranged coaxially; where the second gear is engaged with the first gear, and the first runner is transmission-connected to one of the first lead screw and the second lead screw.

In some embodiments, the molecular diagnostic device further includes:
a pressure plate, arranged on the rack, slidably connected to the rack, and threadedly connected to the at least one lead screw; where a pressure force exists between the sliding frame and the pressure plate in the sliding direction of the sliding frame relative to the rack, such that the pressure plate and the sliding frame slide together relative to the rack.

In some embodiments, the sliding frame includes:
a fixing frame;
a first slide rail component, arranged on the fixing frame and slidably connected to the rack; and
a first guide rail, arranged on the fixing frame; where the card tray is slidably connected to the first guide rail for sliding in an extension direction of the first guide rail; a sliding direction of the first slide rail component relative to the rack is different from a sliding direction of the card tray relative to the first guide rail.

In some embodiments, the sliding direction of the first slide rail component relative to the rack is perpendicular to the sliding direction of the card tray relative to the first guide rail.

In some embodiments, the rack is arranged with a second guide rail, and the first slide rail component is slidably connected to the second guide rail to slide in an extension direction of the second guide rail.

In some embodiments, the first slide rail component includes:
multiple slide rails, arranged around the rack and correspond to multiple the second guide rails in a one-to-one correspondence; where each of the multiple slide rails is slidably connected to a corresponding one of the multiple the second guide rails to slide in the extension direction of the second guide rail.

In some embodiments, the card tray is arranged on a sliding seat slidably connected to the first guide rail; the first drive member is arranged on the sliding seat, and the first drive member is transmission-connected to the card tray to drive the card tray for centrifugation.

In some embodiments, the first drive device includes:
a second drive member, arranged on the fixing frame; and
a lead screw, rotatably connected to the second drive member and threadedly connected to the sliding seat to drive the sliding seat to slide on the first guide rail.

In some embodiments, the first guide rail includes:
a first sub-guide rail and a second sub-guide rail, that are arranged opposite each other; where each of the first sub-guide rail and the second sub-guide rail is slidably connected to the sliding seat to enable the sliding seat to slide on the first sub-guide rail and the second sub-guide rail.

In some embodiments, the sliding seat includes:
a sliding seat body, disposed between the first sub-guide rail and the second sub-guide rail; where the card tray and the first drive member are arranged on the sliding seat body;
a second slide rail component and a third slide rail component, that are arranged on opposite sides of the sliding seat body; where the second slide rail component is slidably connected to the first sub-guide rail, the third slide rail component is slidably connected to the second sub-guide rail and threadedly connected to the lead screw.

In some embodiments, the second slide rail component includes:
a first slide rail mounting member, arranged on the sliding seat body; and
a first slide rail member, arranged on the first slide rail mounting member.

In some embodiments, the third slide rail component includes:
a second slide rail mounting member, arranged on the sliding seat body;
a screw fitting, arranged on the second slide rail mounting member and threadedly connected to the lead screw; and
a second slide rail member, arranged on the screw fitting.

In some embodiments, the fixing frame surrounds s periphery of the sliding seat.

In some embodiments, the card tray includes:
a card tray body, for surrounding multiple the detection cards around a rotating shaft to centrifuge the detection cards around the rotating shaft; and
multiple ribs, disposed on a side of the card tray body on which the detection cards are arranged, surrounding the rotating shaft; where the multiple ribs are configured to position the detection cards each between corresponding adjacent two ribs.

In some embodiments, the molecular diagnostic device further includes:
a pressure plate, arranged on the rack, slidably connected to the rack, and transmission-connected to the first drive device, such that a pressing force exists between the pressure plate and the sliding frame in the sliding direction, such that the pressure plate and the sliding frame slide together relative to the rack, and the pressure plate is disposed on a side of the card tray body on which the multiple ribs are arranged.

In some embodiments, the pressure plate is arranged with a pressing member on a side facing the multiple ribs, the pressing member defining a connecting hole; where the multiple ribs are arranged with a protruding post, and the pressing member being configured to sandwich the detection card between the protruding post and the connecting hole when the protruding post is placed in the connecting hole.

In some embodiments, the pressure plate is magnetically connected to the pressing member.

The embodiments of the present disclosure provide a molecular diagnostic device, including:
a rack;
a detection card conveying seat, arranged in the rack and slidably connected to the rack for sliding in a sliding direction; where the detection card conveying seat is extendable to an extended state in which the detection card can be arranged, and the detection card conveying seat is configured to centrifuge the detection card; and
a first drive device, arranged on the rack, for driving the detection card conveying seat to slide in the sliding direction when the detection card conveying seat is contracted to a contracted state.

The embodiments of the present disclosure provide a molecular diagnostic device, including:
a rack, in the form of a frame structure;
a pressure plate, slidably connected to the rack, for sliding between a first position and a second position;
a sliding frame, slidably connected to the rack, for sliding in a sliding direction together with the pressure plate;
a card tray, slidably connected to the sliding frame, for sliding between a third position and a fourth position, the card tray being configured to carry a detection card;
a first drive device, arranged on the rack, for driving the pressure plate to slide, such that the pressure plate can slide together with the sliding frame; and
a second drive device, arranged on the sliding frame, for driving the card tray to slide; where the first drive device is configured to drive the sliding frame to slide when the sliding frame is in the first position and the card tray is in the fourth position.

The embodiments of the present disclosure provide a support seat for a molecular diagnostic device for supporting a detection card, the support seat including:
a support seat body, defining a fastening hole extending through the support seat body; where the detection card is arranged with a sample addition chamber and a detection chamber, the support seat body being configured to mount the detection chamber;
a sample addition chamber mount, passing through the fastening hole and slidable in an extension direction of the fastening hole, and configured to mount the sample addition chamber on a side of the support seat body on which the detection chamber is arranged; and
an elastic member, abutting against the sample addition chamber mount; where the sample addition chamber mount abuts against the support seat body in the extension direction of the fastening hole in response to the elastic member exerting a force on the sample addition chamber mount; the sample addition chamber mount slides in the extension direction of the fastening hole in response to the detection card exerting a force on the support seat body to overcome the force of the elastic member.

In some embodiments, an end of the elastic member abuts against the support seat body and the other end of the elastic member abuts against the sample addition chamber mount to exert a force on the sample addition chamber mount in the extension direction of the fastening hole.

In some embodiments, the support seat further includes:
a holding plate, arranged on the support seat body and disposed on a side of the sample addition chamber mount away from a side the sample addition chamber mount where the sample addition chamber is arranged; where an end of the elastic member abuts against the holding plate and the other end of the elastic member abuts against the sample addition chamber mount to exert a force on the sample addition chamber mount in the extension direction of the fastening hole.

In some embodiments, the sample addition chamber mount includes multiple sample addition chamber mounts, and the elastic member includes multiple elastic members; the multiple sample addition chamber mounts face the multiple elastic members in a one-to-one correspondence; the multiple elastic members abut against the holding plate, and the holding plate is arranged on a side of the support seat body away from a side of the support seat body on which the detection card is arranged.

In some embodiments, the elastic member is a spring, and the support plate is arranged with a sleeve pillar, and the elastic member is fitted on the sleeve pillar.

In some embodiments, the sample addition chamber mount includes:
a mount body; where a sample addition chamber receiving groove is defined on a side of the support seat body on which the detection card is arranged to accommodate the detection chamber.

In some embodiments, the mount body defines a sleeve groove on a side of the support seat body away from a side of the support seat body on which the detection card is arranged, and an end of the elastic member is placed in the sleeve groove and abuts against the mount body.

In some embodiments, the mount body is arranged with a snap-in edge on an edge of the side of the support seat body away from the side of the support seat body on which the detection card is arranged, and the snap-in edge abuts against the support seat body in an extension direction of the fastening hole in response to the elastic member exerting a force on the sample addition chamber mount.

In some embodiments, a heating device is arranged inside the mount body to heat the sample addition chamber.

In some embodiments, the detection card is arranged with a flow channel to connect the sample addition chamber and the detection chamber, and the mounting body is arranged with an abutting portion on a side edge, the abutting portion being configured to abut against and heat a part of the detection card where the flow channel is arranged.

In some embodiments, the support body defines a placement groove on a side where the detection card is arranged, to accommodate the card tray for carrying the detection card, and the fastening hole is disposed in the placement groove.

In some embodiments, the support seat body is arranged with a positioning member in the placement groove to position the position of the card tray.

In some embodiments, the positioning member is a positioning groove or positioning block to be inserted and positioned with the card tray; or, the positioning member is a magnet or electromagnet to be magnetically connected and positioned with the card tray.

In some embodiments, the support seat body defines a positioning hole to position the position of the detection card by overlapping with the positioning hole of the card tray.

In some embodiments, the support seat body defines multiple extension slots arranged on the side on which the detection card is arranged, the multiple extension slots being arranged around the placement groove and being connected to the placement groove, and a mounting table is formed between two adjacent extension slots of the multiple extension slots for mounting the detection chamber.

In some embodiments, the mounting table defines a receiving hole, and the mounting table is arranged with a light detection member in the receiving hole.

In some embodiments, the support seat body is arranged with a mounting table on the side where the detection chamber is arranged for mounting the detection chamber, the mounting table defines a receiving hole, and the mounting table is arranged with a light detection member in the receiving hole.

In some embodiments, the light detection member includes:
a detecting seat, arranged in the receiving hole for mounting the detection chamber;
an excitation fiber, an end of which is placed on the detecting seat, for emitting excitation light to the detection chamber;
a receiving fiber, an end of which is arranged on the detecting seat, for receiving the excitation light emitted by the excitation fiber and fluorescence formed by the excitation light irradiating the detection chamber, so as to complete the detection of the detection chamber; and
a clamping piece, arranged on a side of the detecting seat away from the detection chamber, and arranged on the support seat body to fix the detecting seat.

In some embodiments, the support seat body is arranged with a recess on a side away from the mounting table; where the recess is in communication with the receiving hole to form an mounting table on both sides of the recess; the detecting seat is disposed in the recess, and the clamping piece is arranged on the mounting table.

In some embodiments, the detecting seat includes:
a detecting seat body, disposed in the recess and arranged with an extension disposed in the receiving hole; where the extension defines a detection slot to accommodate the detection chamber.

In some embodiments, the detection card is arranged with an isolation chamber connecting the sample addition chamber and the detection chamber, and the extension defines an isolation groove near the detection slot for accommodating the isolation chamber.

In some embodiments, the detecting seat body is arranged with an excitation fiber channel, the excitation fiber channel is in communication with the detection slot, and the excitation fiber is arranged in the excitation fiber channel.

In some embodiments, the clamping piece includes a clamping body, the clamping body defines a clamping hole, and the excitation fiber is placed in the clamping hole to clamp the excitation fiber in the excitation fiber channel.

In some embodiments, the detecting seat body is arranged with a receiving fiber channel, the receiving fiber channel is in communication with the detection slot, and the receiving fiber is arranged in the receiving fiber channel.

In some embodiments, a heating device is arranged in the detecting seat to heat the detection chamber.

The embodiments of the present disclosure provide a molecular diagnostic device, including:
a support seat, for placing a detection card, including:
a support seat body, defining a fastening hole extending through the support seat body; where the detection card is arranged with a sample addition chamber and a detection chamber, the support seat body being configured to mount the detection chamber; and
a sample addition chamber mount, passing through the fastening hole, for sliding in an extension direction of the fastening hole; where the sample addition chamber mount is configured to mount the sample addition chamber on a side of the support seat body on which the detection chamber is arranged, for heating the detection card; and
a pressure plate, for heating the detection card, the pressure plate including:
   a pressure plate body, arranged on a side of the support seat body on which the detection card is placed, for clamping the detection card with the support seat body; and
   a heating member, arranged on the pressure plate body for abutting against and heating the sample addition chamber or the detection chamber.

The embodiments of the present disclosure provide a molecular diagnostic device, including:
a rack;
a support seat, for holding the detection card, arranged on the rack; where the support seat includes:
   a support seat body, arranged on the rack, defining a fastening hole extending through the support seat body; where the detection card is arranged with a sample addition chamber and a detection chamber, the support seat body being configured to mount the detection chamber;
   a sample addition chamber mount, passing through the fastening hole and slidable in an extension direction of the fastening hole; where the sample addition chamber mount is configured to mount the sample addition chamber on a side of the support seat body on which the detection chamber is arranged, so as to heat the sample addition chamber; and
   an elastic member, one end of which abuts against the support seat body and the other end of which abuts against the rack, where the sample addition chamber mount abuts against the support seat body in the extension direction of the fastening hole in response to the elastic member exerting a force on the sample addition chamber mount, and the sample addition chamber mount slides in the extension direction of the fastening hole in response to the detection card exerting a force on the support seat body to overcome the force of the elastic member; and
   a transporting assembly, arranged on a side of the support seat on which the detection card is arranged, and slidably connected to the rack to slide to the support seat; where the transporting assembly is arranged with a card tray, the card tray being configured to convey the detection card; the detection card defines a receiving hole to accommodate the sample addition chamber, and the sample addition chamber mount is configured to be arranged in the receiving hole when the card tray abuts against the support seat body.

The embodiments of the present disclosure provide a support seat for a molecular diagnostic device, the support seat including:
a support seat body, for supporting a detection card; where the detection card is arranged with a sample addition chamber and a detection chamber;
a detecting seat, arranged on the support seat body for mounting the detection chamber and for heating the detection chamber;
an excitation fiber, an end of which is arranged on the detecting seat, for emitting excitation light to the detection chamber; and
a receiving fiber, an end of which is arranged on the detecting seat, for receiving fluorescence formed by the excitation light irradiating the detection chamber, so as to complete the detection of the detection chamber.

In some embodiments, the supporting seat body is arranged with a mounting table on a side supporting the detection card; the mounting table is configured to mount the detection chamber, and the detecting seat is arranged on the mounting table.

In some embodiments, the mounting table defines a receiving hole, and the detecting seat is arranged in the receiving hole.

In some embodiments, the support seat body is arranged with a recess on a side away from the mounting table, the recess being in communication with the receiving hole, and the detecting seat is disposed in the recess.

In some embodiments, the detecting seat includes:
a detecting seat body, arranged in the recess and arranged with an extension in the receiving hole; where the extension defines a detection slot to accommodate the detection chamber.

In some embodiments, a surface on a side of the extension where the support seat body is arranged is flush with a surface of the mounting table.

In some embodiments, the detection card is arranged with an isolation chamber connecting the sample addition chamber and the detection chamber, and the extension defines an isolation groove near the detection slot for accommodating the isolation chamber.

In some embodiments, the detecting seat body is arranged with an excitation fiber channel, the excitation fiber channel is in communication with the detection slot, and the excitation fiber is arranged in the excitation fiber channel.

In some embodiments, an extension direction of the excitation fiber channel forms an angle with an extension direction of the detection slot, and the angle may be 0-75°.

In some embodiments, the detecting seat body is arranged with a receiving fiber channel, the receiving fiber channel is in communication with the detection slot, and the receiving fiber is arranged in the receiving fiber channel.

In some embodiments, an extension direction of the receiving fiber channel forms an angle with an extension direction of the detection slot, and the angle may be 0-75°.

In some embodiments, the extension direction of the excitation fiber channel forms an angle with the extension direction of the detection slot, and t the angle may be 45°, and the extension direction of the receiving fiber channel forms an angle with the extension direction of the detection slot, and the angle may be 75°.

In some embodiments, the support seat body is arranged with a mounting table on both sides of the recess, and the support seat further includes:
a clamping piece, arranged on a side of the detecting seat away from the detection chamber, and arranged on the mounting table to fix the detecting seat.

In some embodiments, the clamping piece includes a clamping body; the clamping body defines a clamping hole, and the excitation fiber is arranged in the clamping hole to fix the excitation fiber in the excitation fiber channel.

In some embodiments, the excitation fiber includes:
an excitation fiber body, arranged in the clamping hole; and
an excitation fiber connector, connected to the excitation fiber body and arranged in the excitation fiber channel; where the clamping body is configured to clamp the excitation fiber connector in the excitation fiber channel.

In some embodiments, a heating device is arranged in the detecting seat to heat the detection chamber.

In some embodiments, the detecting seat includes multiple detecting seats, and the mounting table includes multiple mounting tables; the multiple detecting seats faces the multiple mounting tables in a one-to-one correspondence, and the multiple detecting seats are arranged peripherally.

In some embodiments, the support seat further includes:
a sample addition chamber component, arranged on the support seat body, for mounting the sample addition chamber; where the multiple detecting seats are arranged around the sample addition chamber component.

In some embodiments, the support seat body defines a fastening hole, and the sample addition chamber component includes:
a sample addition chamber mount, arranged in the fastening hole; where the sample addition chamber mount is configured to mount the sample addition chamber on a side of the support seat body on which the detection chamber is arranged.

In some embodiments, the support seat body defines a placement groove on the side on which the detection card is arranged, to accommodate a card tray for conveying the detection card, and the fastening hole is arranged in the placement groove.

In some embodiments, the support seat body is arranged with a positioning member in the placement groove to position the position of the card tray.

In some embodiments, the positioning member is a positioning slot or positioning block, which is inserted and positioned with the card tray; or, the positioning member is a magnet or electromagnet, which is magnetically connected and positioned with the card tray.

In some embodiments, the support seat body defines a positioning hole to position the position of the detection card by overlapping with the positioning hole of the card tray.

In some embodiments, the sample addition chamber mount includes multiple sample addition chamber mounts, and the multiple sample addition chamber mounts face the multiple detecting seats in a one-to-one correspondence to mount the detection card.

In some embodiments, the sample addition chamber mount includes:
a mount body; where a sample addition chamber receiving groove is defined on a side of the support seat body on which the detection card is arranged to accommodate the detection chamber.

In some embodiments, a heating device is arranged inside the mount body to heat the sample addition chamber.

In some embodiments, the detection card is arranged with a flow channel to connect the sample addition chamber and the detection chamber, and the mounting body is arranged with an abutting portion on a side edge, the abutting portion being configured to abut against and heat a part of the detection card where the flow channel is arranged.

The embodiments of the present disclosure provide a molecular diagnostic device, including:
a support seat, for supporting a detection card; where the detection card is arranged with a sample addition chamber and a detection chamber, the support seat including:
a support seat body, for placing the detection card;
a detecting seat, arranged on the support seat body for mounting the detection chamber and for heating the detection chamber;
an excitation fiber, an end of which is arranged on the detecting seat for emitting excitation light to the detection chamber; and
a reception fiber, and end of which is arranged on the detecting seat for receiving fluorescence formed by the excitation light irradiating the detection chamber, so as to complete the detection of the detection chamber; and
a pressure plate, for heating the detection card; where the pressure plate includes:
   a pressure plate body, arranged on a side of the supporting seat body on which the detection card is placed, for clamping the detection card with the supporting seat body; and
   a heating member, arranged on the pressure plate body for abutting against and heating the sample addition chamber or the detection chamber.

The embodiments of the present disclosure provide a molecular diagnostic device, including:
a rack;
a support seat, for placing a detection card; where the detection card being is arranged with a sample addition chamber and a detection chamber, the support seat being arranged on the rack; the support seat includes:
   a support seat body, for placing the detection card;
   a detecting seat, arranged on the support seat body for mounting the detection chamber and heating the detection chamber;
   an excitation fiber, an end of which is arranged on the detecting seat, for emitting excitation light to the detection chamber; and
   a receiving fiber, an end of which is arranged on the detecting seat, for receiving fluorescence formed by the excitation light irradiating the detection chamber, so as to complete the detection of the detection chamber; and
   a transporting assembly, arranged on a side of the support seat on which the detection card is arranged, and slidably connected to the rack to slide to the support seat; where the transporting assembly is arranged with a card tray, the card tray being configured to convey the detection card, and the detecting seat is configured to mount the detection chamber when the card tray abuts against the support seat body.

The embodiments of the present disclosure provide a pressure plate for a molecular diagnostic device, including:
a pressure plate body, arranged with a slide rail component; where the pressure plate body is configured to slide towards a detection card in a sliding direction of the slide rail component, the detection card being arranged with a sample addition chamber and a detection chamber;
a first heating member, arranged in the pressure plate body and configured to extend from the pressure plate body to abut against the detection chamber for heating; and
an elastic member, arranged in the pressure plate body, for exerting a force on the first heating member to cause the first heating member to protrude from the pressure plate body; where the first heating member contracts towards the pressure plate body in response to an abutting force between the first heating member and the detection chamber overcoming the force.

In some embodiments, the pressure plate body includes:
a first housing, defining a snap-fit hole; where the first heating member is arranged in the snap-fit hole for sliding in an extension direction of the snap-fit hole; and
a second housing, disposed on a side of the first housing in the sliding direction, being connected and fixed to the first housing; where the elastic member abuts against the first heating member at one end and against the second housing at the other end.

In some embodiments, a fixing pillar is arranged on the second housing, and the elastic member is arranged on the fixing pillar.

In some embodiments, a protruding edge is arranged on the first housing on an edge of the snap-fit hole away from the second housing, to snap-fit against the first heating member.

In some embodiments, the first heating member includes:
a heating body, arranged with an internal heating member to heat the detection chamber; where the heating body is snap-fitted against the protruding edge.

In some embodiments, a groove is defined on a side of the heating body facing the second housing, and an end of the elastic member is placed in the groove.

In some embodiments, a tab is arranged on an edge of the heating body facing the second housing, to snap-fit against the protruding edge.

In some embodiments, the snap-fit hole includes multiple snap-fit holes, and the first heating member includes multiple first heating members; the multiple snap-fit holes face the multiple first heating members in a one-to-one correspondence, and the multiple snap-fit holes are arranged peripherally.

In some embodiments, the pressure plate further includes:
a second heating member, arranged on a side of the first housing away from the second housing, for abutting against and heating the sample addition chamber; where the multiple first heating members are arranged peripherally around the second heating member.

In some embodiments, the pressure plate further includes:
a pressing member, detachably arranged on a side of the first housing away from the second housing; where the multiple first heating members are arranged around the pressing member; the pressing member is configured to abut against the detection card by detaching from the first housing, in order to centrifuge the detection card in cooperation with the card tray.

In some embodiments, the pressing member includes:
a pressing member body, arranged with a clearance portion to position the sample addition chamber within the displacement portion; where the second heating member is configured to heat the sample addition chamber within the clearance portion by moving on the pressure plate body towards the pressing member.

In some embodiments, an electromagnetic member is arranged on a side of the first housing away from the second housing, the electromagnetic member being configured to generate a magnetic force when energized, and the electromagnetic member being magnetically coupled to the pressing member.

In some embodiments, a locking member is arranged on the pressure plate, the locking member being configured to lock or unlock the pressing member.

In some embodiments, the first housing defines a receiving groove on a side facing the second housing, and the pressure plate further includes:
a circuit board, arranged in the receiving groove and electrically connected to the first heating member.

In some embodiments, the first housing defines a connecting opening between the snap-fit hole and the receiving groove, and the connecting opening connects the snap-fit hole and the receiving groove to arrange wiring.

In some embodiments, the second housing defines a notch at a part opposite the receiving groove.

In some embodiments, the first housing and the second housing are arranged with notches, the notch of the first housing being opposite the notch of the second housing for sliding and conveying the detection card within the notch of the first housing and the notch of the second housing in cooperation with the transporting assembly.

In some embodiments, the pressure plate further includes:
a first pressing member and a second pressing member that are arranged symmetrically, detachably arranged on a side of the first housing away from the second housing; where the multiple first heating members are arranged around the first pressing member and second pressing member; a gap is defined between the first pressing member and second pressing member; the first pressing member and second pressing member are configured to be disposed on both sides of the notch of the first housing when arranged on the first housing, such that the card tray of the transporting assembly slides in the gap; the first pressing member and second pressing member are configured to abut against the detection card by detaching from the first housing to cooperate with the card tray to centrifuge the detection card.

In some embodiments, each of the first pressing member and second pressing member is arranged with a clearance portion, such that the sample addition chamber is disposed in the clearance portion; the second heating member is configured to move towards the first pressing member and second pressing member on the pressure plate body, for abutting against and heating the sample addition chamber disposed in the clearance portion.

In some embodiments, the second housing is arranged with a hanging lug on a side away from the first housing, for connection with the transporting assembly conveying the detection card.

In some embodiments, the first housing is arranged with a screw connection for screw connection with a lead screw of a drive device, such that the pressure plate body can slide in the sliding direction of the slide rail component.

In some embodiments, the slide rail component is arranged on the first housing and includes multiple slide rails, which surround the first housing.

In some embodiments, the pressure plate body defines a positioning hole to overlap with the positioning hole on the card tray to position a rotating position of the card tray around the rotating shaft.

In some embodiments, the pressure plate body is arranged with a limit plate, and the limit plate is configured to trigger a limiting switch to position a sliding position of the pressure plate body in the sliding direction.

The embodiments of the present disclosure provide a molecular diagnostic device, including:
a support seat, for supporting a detection card, the detection card being arranged with a sample addition chamber and a detection chamber, the support seat including:
a support seat body, for supporting the detection card and used for mounting the detection chamber; and
a sample addition chamber component, arranged on the support seat body, for mounting and heating the sample addition chamber; and
a pressure plate, for heating the detection chamber, the pressure plate including:
   a pressure plate body, configured to slide towards the support seat body to abut against the detection card on the support seat body;
   a first heating member, arranged in the pressure plate body and configured to protrude from the pressure plate body to abut against the detection chamber for heating; and
   an elastic member, arranged in the pressure plate body and configured to exert a force on the first heating member to cause the first heating member to protrude from the pressure plate body; where the first heating member is configured to contract towards the pressure plate body in response to an abutting force between the first heating member and the detection chamber overcoming the force.

The embodiments of the present disclosure provide a molecular diagnostic device, including:
a rack;
a support seat, arranged on the rack, for carrying the detection card and detecting the detection card; where the detection card is arranged with a sample addition chamber and a detection chamber; and
a pressure plate, arranged on the rack, the pressure plate including:
   a pressure plate body, slidably connected to the rack to slide towards the support seat; where the pressure plate body is configured to abut against the detection card on the support seat;
   a first heating member, arranged in the pressure plate body and configured to protrude from the pressure plate body to abut against the detection chamber for heating; and
   an elastic member, arranged in the pressure plate body and configured to exert a force on the first heating member to cause the first heating member to protrude from the pressure plate body; where the first heating member is configured to contract towards the pressure plate body in response to an abutting force between the first heating member and the detection chamber overcoming the force.

The embodiments of the present disclosure provide a molecular diagnostic device, including:
a detection card detecting seat, for placing a detection card; where the detection card is arranged with a sample addition chamber and a detection chamber, the detection card detecting seat being configured to detect the detection chamber;
a pressure plate, for clamping the detection card with the detection card detecting seat;
a first heating member, arranged on the detection card detecting seat or the pressure plate, for heating the detection chamber;
a second heating member, arranged on the detection card detecting seat or the pressure plate, for heating the sample addition chamber; and
a control circuit board, electrically connected to the first heating member and the second heating member; where the first heating member and the second heating member are configured to be controlled separately by the control circuit board for heating.

In some embodiments, the first heating member is arranged on the detection card detecting seat, and the molecular diagnostic device further includes:
a third heating member, disposed on the pressure plate in a position opposite to the first heating member, for heating the detection chamber.

In some embodiments, the detection card detecting seat includes:
a support seat body, for supporting the detection card;
a detecting seat, arranged on the support seat body for mounting the detection chamber, where the first heating member is arranged on the detecting seat;
an excitation fiber, an end of which is arranged on the detecting seat, for emitting excitation light to the detection chamber; and
a receiving fiber, an end of which is arranged on the detecting seat, for receiving fluorescence formed by the excitation light irradiating the detection chamber, so as to complete the detection of the detection chamber.

In some embodiments, the support seat body is arranged with a mounting table on a side supporting the detection card, the mounting table is configured to mount the detection chamber, and the detecting seat is arranged on the mounting table.

In some embodiments, the mounting table defines a receiving hole, the support seat body is arranged with a recess on a side away from the mounting table, the recess being in communication with the receiving hole, and the detecting seat is disposed in the recess.

In some embodiments, the detecting seat includes:
a detecting seat body, arranged in the recess and arranged with an extension in the receiving hole; where the extension defines a detection slot to accommodate the detection chamber.

In some embodiments, the detecting seat includes multiple detecting seats, and the mounting table includes multiple mounting tables; the multiple detecting seats faces the multiple mounting tables in a one-to-one correspondence, and the multiple detecting seats are arranged peripherally.

In some embodiments, the second heating member is disposed on the detection card detecting seat, and the molecular diagnostic device further includes:
a first circuit board, electrically connected to the first heating member and the second heating member, and the control circuit board; where the first circuit board is configured to drive the first heating member to heat the detection chamber and/or drive the second heating member to heat the sample addition chamber in response to control by the control circuit board.

In some embodiments, the first circuit board is disposed on s side of the support seat body away from the detection card.

In some embodiments, the detection card detecting seat further includes:
a support frame, for supporting the support seat body.

In some embodiments, the pressure plate includes:
a pressure plate body; where a third heating member is arranged in the pressure plate body, the third heating member is configured to protrude from the pressure plate body to abut against the detection chamber for heating; and
an elastic member, arranged in the pressure plate body and configured to exert a force on the third heating member to cause the third heating member to protrude from the pressure plate body; where the third heating member is configured to contract towards the pressure plate body in response to an abutting force between the third heating member and the detection chamber overcoming the force.

In some embodiments, the pressure plate body includes:
a first housing, defining a snap-fit hole; where the third heating member is arranged in the snap-fit hole to slide in an extension direction of the snap-fit hole; and
a second housing, connected and fixed to the first housing; where an end of the elastic member abuts against the first heating member, and the other end of the elastic member abuts against the second housing.

In some embodiments, a protruding edge is arranged on the first housing on an edge of the snap-fit hole away from the second housing, to snap-fit against the third heating member.

In some embodiments, the snap-fit hole includes multiple snap-fit holes, and the third heating member includes multiple third heating members; the multiple snap-fit holes face the multiple third heating members in a one-to-one correspondence, and the multiple snap-fit holes are arranged peripherally.

In some embodiments, the second heating member is arranged on a side of the first housing away from the second housing; the molecular diagnostic device further includes a second circuit board arranged on a side of the first housing facing the second housing, the second circuit board being electrically connected to the second heating member, the third heating member, and the control circuit board; the second circuit board drives the third heating member to heat the detection chamber and/or drives the second heating member to heat the sample addition chamber, in response to control of the control circuit board.

In some embodiments, the second heating member is arranged on the detection card detecting seat, and the molecular diagnostic device further includes:
a fourth heating member, arranged on the pressure plate in a position opposite to the second heating member for heating the sample addition chamber.

In some embodiments, the detection card detecting seat includes:
a support seat body, defining a fastening hole extending through the support seat body; where the support seat body is configured to mount the detection chamber;
a sample addition chamber mount, passing through the fastening hole and slidable in an extension direction of the fastening hole; where the sample addition chamber mount is configured to mount the sample addition chamber on a side of the support seat body on which the detection chamber is arranged, the second heating member being disposed in the sample addition chamber mount; and
an elastic member, abutting against the sample addition chamber mount; where the sample addition chamber mount abuts against the support seat body in the extension direction of the fastening hole in response to the elastic member exerting a force on the sample addition chamber mount; the sample addition chamber mount slides in the extension direction of the fastening hole in response to the detection card exerting a force on the support seat body to overcome the force of the elastic member.

In some embodiments, the detection card detecting seat further includes:
a holding plate, arranged on the support seat body and disposed on a side of the sample addition chamber mount away from a side of the sample addition chamber mount where the sample addition chamber is arranged; where an end of the elastic member abuts against the holding plate, and the other end of the elastic member abuts against the sample addition chamber mount to exert a force on the sample addition chamber mount in the extension direction of the fastening hole.

In some embodiments, the sample addition chamber mount includes multiple sample addition chamber mounts, and the elastic member includes multiple elastic members; the multiple sample addition chamber mounts face the multiple elastic members in a one-to-one correspondence; the multiple elastic members abut against the holding plate, and the holding plate is arranged on a side of the support seat body away from a side of the support seat body on which the detection card is arranged.

In some embodiments, the sample addition chamber mount includes:
a mount body; where a sample addition chamber receiving groove is defined on a side of the support seat body on which the detection card is arranged to accommodate the detection chamber.

In some embodiments, the detection card is arranged with a flow channel to connect the sample addition chamber and the detection chamber, and the mount body is arranged with an abutting portion on a side edge, the abutting portion being configured to abut against and heat a part of the detection card where the flow channel is arranged.

In some embodiments, the pressure plate includes:
a pressure plate body; where the fourth heating member is arranged on the pressure plate body to abut against the sample addition chamber for heating;
an electromagnetic member, arranged on a side of the pressure plate body on which the fourth heating member is arranged, for generating a magnetic force when energized;
a pressing member, disposed on the side of the pressure plate body on which the fourth heating member is arranged; where the electromagnetic member is magnetically coupled to the pressing member; the pressing member is configured to abut against the detection card by detaching from the electromagnetic member, in order to centrifuge the detection card in cooperation with the card tray.

In some embodiments, the pressing member is arranged with a clearance portion, such that the sample addition chamber is disposed in the clearance portion, and the fourth heating member is configured to abut against the sample addition chamber disposed in the clearance portion for heating.

In some embodiments, the first heating member is arranged on the pressure plate body; the molecular diagnostic device further includes a second circuit board arranged on the pressure plate body, he second circuit board being electrically connected to the first heating member, the fourth heating member, the electromagnetic member, and the control circuit board; the second circuit board drives the first heating member to heat the detection chamber and/or drives the fourth heating member to heat the sample addition chamber, in response to control of the control circuit board, and the second circuit board energizes the electromagnetic member in response to control of the control circuit board.

The embodiments of the present disclosure provide a molecular diagnostic device, including:
a pressure plate, arranged with a first heating member and a second heating member for heating a detection card, the detection card being arranged with a sample addition chamber and a detection chamber;
a detection card detecting seat, arranged with a third heating member and a fourth heating member for heating the detection card, and configured to detect the detection chamber;
a first circuit board, arranged in the pressure plate, electrically connected to the first heating member and second heating member for heating the detection card;
a second circuit board, arranged in the detection card detecting seat, electrically connected to the third heating member and fourth heating member for heating the detection card; and
a control circuit board, electrically connected to the first circuit board and the second circuit board; where the first circuit board and the second circuit board drives the first heating member and the third heating member to heat the detection chamber and/or drives the second heating member and the fourth heating member to heat the sample addition chamber, in response to control by the control circuit board.

The embodiments of the present disclosure provide a molecular diagnostic device, including:
a detection card detecting seat, for placing a detection card; where the detection card is arranged with a sample addition chamber and a detection chamber, the detection card detecting seat being configured to detect the detection chamber;
a pressure plate, for clamping the detection card with the detection card detecting seat, including:
   a pressure plate body, for clamping the detection card with the detection card detecting seat; where the pressure plate body is arranged with an electromagnetic member on a side for clamping the detection card, the electromagnetic member being configured to generate a magnetic force when energized; and
   a pressing member, disposed on a side of the pressure plate body that clamps the detection card and configured to be magnetically coupled with the electromagnetic member; where the pressing member is further configured to centrifuge the detection card;
   a first heating member, disposed on the detection card detecting seat or the pressure plate body, for heating the detection chamber;
   a second heating member, arranged on the detection card detecting seat or the pressure plate body, for heating the sample addition chamber; and
   a control circuit board, electrically connected to the first heating member and the second heating member, and the electromagnetic member, respectively, the first heating member and the second heating member being configured to be heated separately by the control circuit board, and the control circuit board being configured to control the electromagnetic member to be energized.

The embodiments of the present disclosure provide a balancing card for a molecular diagnostic device, including:
a body, arranged with a detection chamber for mounting on a detecting seat of the molecular diagnostic device; and
a reference film, arranged in the detection chamber; where the composition of the reference film includes a fluorescent indicator to excite fluorescence under irradiation by a light generator of the molecular diagnostic device.

In some embodiments, the body is arranged with a mounting portion for mounting on a sample addition chamber mount of the molecular diagnostic device, the mounting portion being disposed on the same side of the body as the detection chamber.

In some embodiments, the body is arranged with a snap-in part for fastening with a card tray of the molecular diagnostic device, the snap-in part being on the same side of the body as the mounting portion, and the snap-in part being disposed between the mounting portion and the detection chamber.

In some embodiments, the body is arranged with a limiting part on each of both edges of a line between the mounting portion and the detection chamber and on a side close to the detection chamber, the limiting part being on the same side of the body as the detection chamber.

In some embodiments, the body is arranged with a waste liquid chamber on a side away from the mounting portion and arranged at a position opposite to one of the limiting parts.

In some embodiments, the balancing card further includes an isolation layer, the isolation layer being arranged on a side of the body away from the mounting portion, the isolation layer being arranged covering an opening of the waste liquid chamber and an opening of the detection chamber.

In some embodiments, the body is arranged with a plug-in part, the plug-in part being disposed on the same side of the body as the mounting section, and the plug-in part being disposed between the mounting portion and the detection chamber.

In some embodiments, the body is arranged with an abutting groove for cooperating with the sample addition chamber mount, the abutting groove being disposed on the same side of the body as the mounting portion, and the abutting groove being disposed between the mounting portion and the detection chamber.

In some embodiments, the alignment card further includes a cover body, and the body is arranged with a sample addition chamber disposed at a position facing away from the mounting portion; the cover body covers an opening of the sample addition chamber, and the cover body is disposed on a side of the body away from the mounting portion.

The embodiments of the present disclosure provide a balancing card for a molecular diagnostic device, including:
a body, being arranged with a detection chamber, the detection chamber being configured to be arranged on a detecting seat of the molecular diagnostic device; and
a fluorescent indicator, arranged in the detection chamber and configured to emit fluorescence when irradiated by a light generator of the molecular diagnostic device.

A molecular diagnostic device is described in the following, utilizing molecular diagnostic technology, which refers to diagnostic technology where nucleic acids or proteins are taken as biomarkers for clinical testing, for providing information and a basis for decision-making for the prediction, diagnosis, prevention, treatment, and prognosis of diseases. In particular, in the face of various sudden infectious diseases, the most cost-effective measure is rapid and accurate molecular diagnosis.

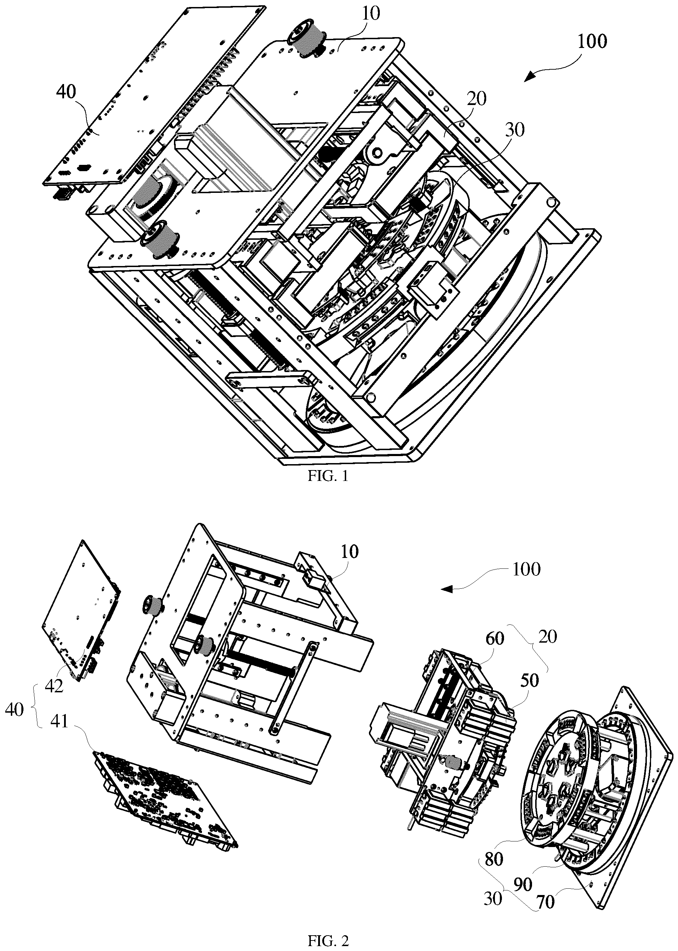

Referring to FIGS. 1 and 2, FIG. 1 is a perspective structural schematic view of a molecular diagnostic device 100 according to some embodiments of the present disclosure, and FIG. 2 is an exploded view of the molecular diagnostic device 100 in FIG. 1. The molecular diagnostic device 100 may include a rack 10, a detection card conveying seat 20 arranged on the rack 10, a detection card detecting seat 30 arranged on the rack 10, and a control circuit board 40 arranged on the rack 10. The detection card conveying seat 20 may be configured to place a detection card. The detection card conveying seat 20 is slidable relative to the rack 10 on the rack 10, such that the detection card conveying seat 20 can transport the detection card to the detection card detecting seat 30. The detection card detecting seat 30 is configured to generate an excitation light to detect the detection card and form a detection signal. The control circuit board 40 may be configured to control the sliding of the detection card conveying seat 20 on the rack 10 and control the detection card detecting seat 30 to detect the detection card, as well as receive the detection signal and process the detection signal to form diagnostic data.

In some embodiments, the molecular diagnostic device 100 may further include a housing. The housing may accommodate the rack 10, the detection card conveying seat 20, the detection card detecting seat 30, and the control circuit board 40, etc., so as to protect the molecular diagnostic device 100 and further reduce interference from external factors on the detection process of the detection card. In some embodiments, the housing may be arranged with an isolation door. When the isolation door is opened, the detection card conveying seat 20 can slide out of the isolation door, thereby facilitating the placement of the detection card on the detection card conveying seat 20 and the removal of the detection card from the detection card conveying seat 20. When the isolation door is closed, the housing may achieve its protective effect and reduce the interference of external factors.

In some embodiments, the isolation door may be automatically opened or closed under the control of the control circuit board 40. For example, the isolation door is pushed by a drive structure such as a motor via a structure such as a hinge, hydraulic cylinder, hydraulic cylinder, screw, gear, etc.

In addition, in some embodiments, the molecular diagnostic device 100 may further include an output device such as a display and a printer that can be electrically connected to the control circuit board 40, to output the diagnostic data of the molecular diagnostic device 100 via the output device. Of course, a memory for storing the diagnostic data may further be arranged in the molecular diagnostic device 100.

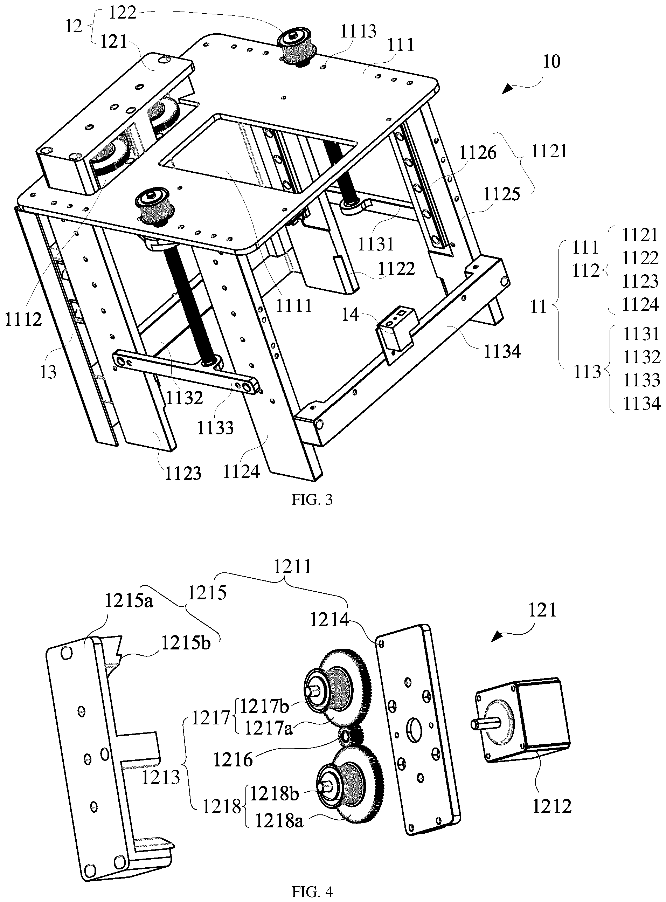

Furthermore, in some embodiments, the molecular diagnostic device 100 may further include an input device such as a display, a keyboard, and a code scanning device 14 (shown in FIG. 3), that is electrically connected to the control circuit board 40, such that control commands can be input to the molecular diagnostic device 100, for example, the control circuit board 40, via the input device, thereby enabling the molecular diagnostic device 100 to control the detection card conveying seat 20 and/or the detection card detecting seat 30 via the control circuit board 40.

Referring to FIG. 3, FIG. 3 is a perspective structural schematic view of the rack 10 in FIG. 1. The rack 10 may include a rack body 11 and a first drive device 12 arranged on the rack body 11. The rack body 11 is configured to mount structures for example, the detection card conveying seat 20, the detection card detecting seat 30, and the control circuit board 40. The first drive device 12 is electrically connected to the control circuit board 40 to receive control from the control circuit board 40. The first drive device 12 is connected to the detection card conveying seat 20 to drive the detection card conveying seat 20 to slide relative to the rack body 11 under the control of the control circuit board 40, so as to transport the detection card.

It should be noted that the terms "first", "second", etc. in this specification are for descriptive purposes only and are not to be construed as indicating or implying relative importance or as implying a specified number of technical features. Accordingly, features defined with "first" or "second" may expressly or implicitly include one or more features described.

The rack body 11 may have an overall frame structure. The interior of the rack body 11 may be configured to mount the detection card conveying seat 20 and the detection card detecting seat 30, and the detection card conveying seat 20 is disposed above the detection card detecting seat 30. Of course, in some embodiments, the mounting positions of the detection card conveying seat 20 and the detection card detecting seat 30 in the rack body 11 may be in other forms, which will not be repeated herein.

The rack body 11 may include a top plate 111, a leg 112 arranged on the top plate 111 and connected to a bottom of the top plate 111, and a reinforcing plate 113 disposed in the middle and/or at the bottom of the leg 112. The leg 112 is configured to support the top plate 111. The reinforcing plate 113 is configured to enhance the stability of a lower part of the leg 112. In some embodiments, when the molecular diagnostic device 100 has a housing, the housing may be fixed to an outer surface of the rack body 11 to enhance the appearance of the molecular diagnostic device 100. In some embodiments, the rack body 11 may be part of the housing.

In this specification, the terms "up", "down", "front", "rear", "left", "right", "top", "bottom", "upper", and "lower" may be used for orientation. It should be understood that the terms "center", "longitudinal", "transverse", "length", "width", "thickness", "up", "down", "front", "rear", "left", "right", "vertical", "horizontal", "top", "bottom", "inside", "outside", "clockwise", "counterclockwise", "axial", "radial" "peripheral", and other indications of direction or positional relationships are based on the direction or positional relationships shown in the accompanying drawings, and are provided for convenience in describing the present disclosure and simplifying the description. They are not intended to indicate or imply that the referred device or element must have a specific direction or be constructed and operated in a specific direction, and therefore should not be understood as limitations to the present disclosure.

The top plate 111 may be made of a rigid material such as plastic or metal. The top plate 111 may be in the form of a plate, but may alternatively be in other shapes, which will not be described in detail. A strip-shaped opening 1111 may be defined on the middle of the top plate 111 to leave a space for the detection card conveying seat 20.

The strip-shaped opening 1111 can cooperate with the detection card conveying seat 20 such that the detection card conveying seat 20 protrudes into the strip-shaped opening 1111, or such that the detection card conveying seat 20 slides in the strip-shaped opening 1111. In some embodiments, the extension direction of the strip-shaped opening 1111 is in line with the sliding direction of the detection card conveying seat 20 relative to the rack 10, e.g., the rack body 11. In some embodiments, the strip-shaped opening 1111 may be omitted when it is not required on the top plate 111 to leave a space for the detection card conveying seat 20. Of course, in some embodiments, the top plate 111 may define the strip-shaped opening 1111 or holes or recesses of a shape similar to the strip-shaped opening 1111 in order to achieve certain functions such as material savings, weight reduction, etc.

The top plate 111 may define a mounting hole 1112 for mounting the first drive device 12. In some embodiments, the mounting hole 1112 may be disposed in the extension direction of the strip-shaped opening 1111, so as to rationally plan the installation space on the rack 10, e.g., the rack body 11, to reduce the volume of the molecular diagnostic device 100, such that the molecular diagnostic device 100 has an overall compact structure. In some embodiments, the mounting hole 1112 may be in communication with the strip-shaped opening 1111. In some embodiments, the mounting hole 1112 may be omitted.

The top plate 111 may be arranged with a connection portion 1113, such that the top plate 111 is connected and fixed to the leg 112 via the connection portion 1113, and the top plate 111 is mounted with the first drive device 12 via the connection portion 1113. In some embodiments, the connection portion 1113 may be a through hole penetrating the top plate 111, and the connection of the top plate 111 with the leg 112 and/or the first drive device 12 can be achieved by a connection structure such as a screw connection structure, a plug-in connection structure, a snap-fit connection structure, etc. that fits with the connection portion 1113, for example, the through hole. In some embodiments, the connection portions 1113, e.g. the through holes, may be arranged on opposite sides of the strip-shaped opening 1111 and the mounting hole 1112, such that the top plate 111 can be mounted with the first drive device 12 via the connection portions 1113. In some embodiments, the connection portion 1113 may be of other structures, such as a plug-in structure, a bearing, a screw-on structure, etc. In some embodiments, the connection portion 1113 may be omitted.

The leg 112 may be made of a rigid material such as plastic or metal. The leg 112 may be in the form of a strip, but may alternatively be of other shapes, without further description. The leg 112 may be arranged on a side of the top plate 111, for example, at the bottom of the top plate 111, to support the top plate 111. The leg 112 may be configured to mount the detection card conveying seat 20, such that the detection card conveying seat 20 slides relative to the leg 112, to achieve the purpose of the detection card conveying seat 20 transporting the detection card to the detection card detecting seat 30.

The number of the legs 112 may be one or more. In some embodiments, the number of the legs 112 may be one of 2, 3, 4, 5, 6...

In some embodiments, the number of the legs 112 may be 4. That is, the legs 12 include a first leg 1121, a second leg 1122, a third leg 1123, and a fourth leg 1124.

Understandably, the designations "first leg", "second leg", "third leg", "fourth leg" and "leg", etc. may be interchanged in some embodiments. For example, in some embodiments, the "first leg" in other embodiments is referred to as a "second leg", and correspondingly, the "second leg" in other embodiments is referred to as a "first leg".

In some embodiments, the first leg 1121, the second leg 1122, the third leg 1123, and the fourth leg 1124 are respectively connected to parts of the top plate 111, and the parts can be connected in sequence to form a quadrangle, for example a rectangle. In some embodiments, the first leg 1121 and the second leg 1122 are disposed on the same side of the strip-shaped opening 1111. The third leg 1123 and the fourth leg 1124 are disposed on the same side of the strip-shaped opening 1111. In some embodiments, the first leg 1121 and the fourth leg 1124 are respectively connected to the parts of the top plate 111 on two sides perpendicular to the extension direction of the strip-shaped opening 1111. The second leg 1122 and the third leg 1123 are respectively connected to the parts of the top plate 111 on two sides perpendicular to the extension direction of the strip-shaped opening 1111. In some embodiments, the second leg 1122 and the third leg 1123 are arranged on a side of the mounting hole 1112 away from the strip-shaped opening 1111.

Each leg 112, for example, the first leg 1121, may include a leg body 1125 and a first guide rail 1126 arranged on the leg body 1125. The top of the leg body 1125 may cooperate with the connection portion 1113, for example, the through hole, by a connection structure such as a bolted structure, screwed structure, plug-in structure, snap-fit structure, etc., to realize the fixed connection between the top plate 111 and the leg 112. Of course, in other embodiments, the top of the leg body 1125 may be connected and fixed to the top plate 111 by welding, gluing, etc.

The first guide rail 1126 may be configured to mount the detection card conveying seat 20, such that the detection card conveying seat 20 can slide on the first guide rail 1126 in the extension direction of the first guide rail 1126.

In some embodiments, the extension direction of the first guide rail 1126 is perpendicular to the extension direction of the strip-shaped opening 1111. In some embodiments, the extension direction of the first guide rail 1126 may be vertical. It is understood that, when a special structure is arranged, the extension direction of the first guide rail 1126 may be set at an angle to the vertical direction where the angle may be acute.

In some embodiments, the first guide rail 1126 of the first leg 1121 may be arranged on a side of the leg body 1125 of the first leg 1121 facing the fourth leg 1124. The first guide rail 1126 of the second leg 1122 is arranged on a side of the leg body 1125 of the second leg 1122 facing the third leg 1123. The first guide rail 1126 of the third leg 1123 is arranged on a side of the leg body 1125 of the third leg 1123 facing the second leg 1122. The first guide rail 1126 of the fourth leg 1124 is arranged on a side of the leg body 1125 of the fourth leg 1124 facing the first leg 1121.

Understandably, in some embodiments, in each leg 112, the leg body 1125 and the first guide rail 1126 may be a one-piece structure. In some embodiments, the first guide rail 1126 may not be arranged in at least one of the legs 112. In some embodiments, the first guide rail 1126 may be arranged in other positions of the rack body 11, for example on the top plate 111.

The reinforcing plate 113 may be made of a rigid material such as plastic or metal. An end of the reinforcing plate 113 may be connected to the lower part of one leg 112, and the other end of the reinforcing plate 113 may be connected to the lower part of another leg 112, so as to achieve relative stability between the two legs 112 and thereby enhance the stability of the legs 112. The connection between the reinforcing plate 113 and the leg 112 may be a screw connection, a plug-in structure, a snap fastener, a weld, an adhesive bond, etc., which will not be described in detail. It is understood that, in order to achieve the stability of the leg 112, the reinforcing plate 113 is not limited to be connected to the lower part of the leg 112. That is, an end of the reinforcing plate 113 may be connected and fixed to other parts of the leg 112, for example, the top or middle of the leg 112.

The number of the reinforcing plates 113 may be one or more. In some embodiments, the number of the reinforcing plates 113 may be one of 2, 3, 4, 5, 6... In some embodiments, the reinforcing plate 113 may be omitted.

In some embodiments, the number of the reinforcing plates 113 may be 4. That is, the reinforcing plates 113 include a first reinforcing plate 1131, a second reinforcing plate 1132, a third reinforcing plate 1133, and a fourth reinforcing plate 1134.

Understandably, the designations "first reinforcing plate", "second reinforcing plate", "third reinforcing plate", "fourth reinforcing plate", and "reinforcing plate", etc. may be interchanged in some embodiments. For example, in some embodiments, the "first reinforcing plate" in other embodiments is referred to as a "second reinforcing plate", and correspondingly, the "second reinforcing plate" in other embodiments is referred to as a "first reinforcing plate".

In particular, an end of the first reinforcing plate 1131 is connected and fixed to the lower part of the first leg 1121, for example, the leg body 1125, and the other end is connected and fixed to the lower part of the second leg 1122, for example, the leg body 1125. An end of the second reinforcing plate 1132 is connected and fixed to the lower part of the second leg 1122, for example, the leg body 1125, and the other end is connected and fixed to the lower part of the third leg 1123, for example, the leg body 1125. An end of the third reinforcing plate 1133 is connected and fixed to the lower part of the third leg 1123, for example, the leg body 1125, and the other end is connected and fixed to the lower part of the fourth leg 1124, for example, the leg body 1125. An end of the fourth reinforcing plate 1134 is connected and fixed to the lower part of the first leg 1121, for example, the leg body 1125, and the other end is connected and fixed to the lower part of the fourth leg 1124, for example, the leg body 1125.

In some embodiments, the reinforcing plate 113, e.g. the first reinforcing plate 1131, the third reinforcing plate 1133, can cooperate with the first drive device 12.

In some embodiments, the reinforcing plate 113, e.g. the second reinforcing plate 1132, can cooperate with the control circuit board 40.

In some embodiments, the connected reinforcing plate 113 and its corresponding leg 112 may be a one-piece structure.

Referring again to FIG. 3, the first drive device 12 may include a drive assembly 121 arranged on the rack body 11, for example, at the mounting hole 1112, and a screw rod assembly 122 arranged on the rack body 11 and connected to the drive assembly 121.

The drive assembly 121 may be indirectly connected to the screw rod assembly 122 via a conveyor belt or may be directly connected to the screw rod assembly 122 for transmission via the screw rod assembly 122. The screw rod assembly 122 is connected to the detection card conveying seat 20. Driven by the drive assembly 121, the screw rod assembly 122 can push the detection card conveying seat 20 to slide on the rack body 11, for example, the first guide rail 1126, so as to achieve the effect of transporting the detection card by the detection card conveying seat 20.

Further referring to FIGS. 3 and 4, FIG. 4 is an exploded view of the drive assembly 121 in FIG. 3. The drive assembly 121 may include a mounting frame 1211 arranged on the rack body 11, for example, at the mounting hole 1112, a first drive member 1212 arranged on the mounting frame 1211, and a synchronisation component 1213 arranged on the mounting frame 1211. The first drive member 1212 is electrically connected to the control circuit board 40 to move under the control of the control circuit board 40.

The synchronisation component 1213 is connected to the first drive member 1212 and is configured to achieve transmission driven by the first drive member 1212. The synchronisation component 1213 may be indirectly connected to the screw rod assembly 122 via a conveyor belt or may be directly connected to the screw rod assembly 122 for transmission by driving the screw rod assembly 122.

The mounting frame 1211 may include a mounting plate 1214 arranged on a side for mounting the first drive member 1212, and a crimping plate 1215 arranged on the other side and engaging with the mounting plate 1214. The mounting plate 1214 and the crimping plate 1215 are configured to mount the synchronisation component 1213 therebetween.

The mounting plate 1214 may be made of a rigid material such as plastic or metal. The mounting plate 1214 may be in the form of a plate, but may alternatively be of other shapes, which will not be described herein. The mounting plate 1214 may be disposed within the mounting hole 1112. In some embodiments, the mounting plate 1214 may be disposed outside the mounting hole 1112. In some embodiments, the mounting plate 1214 may be integrally formed with the top plate 111. In some embodiments, the mounting plate 1214 may be omitted, and the top plate 111 may be omitted with the mounting hole 1112 to replace (serve as) the mounting plate 1214.

The crimping plate 1215 may include a crimping plate body 1215a disposed opposite the mounting plate 1214 and a spacer 1215b disposed between the crimping plate body 1215a and the mounting plate 1214. The crimping plate body 1215a may be disposed on a side of the mounting plate 1214 away from the first drive member 1212. The spacer 1215b is configured to control a gap between the crimping plate body 1215a and the mounting plate 1214.

The crimping plate body 1215a may be made of a rigid material such as plastic or metal. The crimping plate body 1215a may be in the form of a plate, but may alternatively be of other shapes, which will not be described herein. The crimping plate body 1215a may be disposed outside the mounting hole 1112 and above the top plate 111.

In some embodiments, the mounting plate 1214 is disposed outside the mounting hole 1112, for example, above or below the top plate 111. The crimping plate body 1215a may be disposed inside the mounting hole 1112. In some embodiments, the mounting plate 1214 may be integrally structured with the top plate 111. In some embodiments, the crimping plate body 1215a may be omitted, and the top plate 111 may be omitted with the mounting hole 1112 to replace (serve as) the crimping plate body 1215a.

The spacer 1215b is respectively connected and fixed to the crimping plate body 1215a and the mounting plate 1214 to define a space in which the synchronization assembly 1213 can be mounted in the gap between the crimping plate body 1215a and the mounting plate 1214.

In some embodiments, the spacer 1215b may be a spacer plate. The spacer 1215b, for example, the spacer plate, may be connected to the mounting plate 1214 and the crimping plate body 1215a, respectively, by a connection method such as a screw connection, a snap fit, a plug-in connection, welding, gluing, etc.

In some embodiments, the spacer 1215b may be structured as a bolt, screw, etc.

In some embodiments, the spacer 1215b may be integrally structured with the crimping plate body 1215a. In some embodiments, the spacer 1215b may be integrally structured with the mounting plate 1214. In some embodiments, the spacer 1215b is integrally structured with the mounting plate 1214 and the crimping plate body 1215a.

When the mounting frame 1211 is arranged on the top plate 111, the crimping plate body 1215a is disposed on a side of the top plate 111 away from the leg 112. The spacer 1215b is connected and fixed to the top plate 111 at a position of the mounting hole 1112 by a screw connection, a snap fit, a plug-in connection, welding, gluing, etc. Meanwhile, when the mounting plate 1214 is disposed in the mounting hole 1112, the spacer 1215b extends into the mounting hole 1112 and is connected and fixed to the mounting plate 1214 by a screw connection, a snap fit, a plug-in connection, welding, gluing, etc., such that the first drive member 1212 is disposed at the bottom of the top plate 111, thereby achieving a reasonable spatial arrangement of the molecular diagnostic device 100. When the mounting plate 1214 and the crimping plate 1215 are disposed at the top of the top plate 111, the spacer 1215b is connected and fixed to the mounting plate 1214 by a screw connection, a snap fit, a plug-in connection, welding, gluing, etc. The mounting plate 1214 is connected and fixed to the top plate 111 by a screw connection, a snap fit, a plug-in connection, welding, gluing, etc. When the mounting plate 1214 is disposed at the bottom of the top plate 111 and the crimping plate 1215 is disposed at the top of the top plate 111, the spacer 1215b may be connected and fixed to the mounting plate 1214 through a screw connection, a snap fit, a plug-in connection, welding, gluing, etc. etc., passing through the mounting hole 1112.

The first drive member 1212 is arranged on a side of the mounting plate 1214 away from the crimping plate body 1215a. The first drive member 1212 and the mounting plate 1214 may be connected and fixed by a screw connection, a snap fit, a plug-in connection, welding, gluing, etc., etc. In some embodiments, the first drive member 1212 may be arranged on a side of the mounting plate 1214 close to the crimping plate body 1215a.

The first drive member 1212 may be a motor. The output shaft of the motor may extend through the mounting plate 1214 and into the space between the mounting plate 1214 and the crimping plate body 1215a. In some embodiments, the output shaft of the motor may extend through the crimping plate body 1215a, or may of course be rotatably connected to the crimping plate body 1215a without extending through the crimping plate body 1215a. In some embodiments, the first drive member 1212 may be other power sources that can drive the movement of the synchronous component 1213, without further elaboration.

The synchronous component 1213 may include a first gear 1216 arranged on the output shaft of the first drive member 1212 and a first transmission gear set 1217 and a second transmission gear set 1218 respectively engaged with the first gear 1216.

The first gear 1216 rotates when the first drive member 1212 is turned on. The first transmission gear set 1217 and the second transmission gear set 1218 can be respectively rotatably connected to the mounting frame 1211. The first transmission gear set 1217 and the second transmission gear set 1218 can rotate synchronously when the first gear 1216 rotates, with one rotating clockwise and the other counterclockwise.

The rotating shaft of the first transmission gear set 1217 is arranged parallel to the output shaft of the first drive member 1212, for example, a motor. The rotating shaft of the first transmission gear set 1217 is respectively rotatably connected to the mounting plate 1214 and the crimping plate body 1215a.

The first transmission gear set 1217 may include a second gear 1217a and a first runner 1217b arranged coaxially. The second gear 1217a may be engaged with the first gear 1216. The first runner 1217b may be connected to the screw rod assembly 122 via a conveyor belt or may be directly connected to the screw rod assembly 122 for transmission via the screw rod assembly 122.

The rotating shaft of the second transmission gear set 1218 is arranged parallel to the output shaft of the first drive member 1212, for example, a motor. The rotating shaft of the second transmission gear set 1218 is respectively rotatably connected to the mounting plate 1214 and the crimping plate body 1215a.

The second transmission gear set 1218 may include a third gear 1218a and a second runner 1218b arranged coaxially. The third gear 1218a may be engaged with the first gear 1216. The second runner 1218b may be connected to the screw rod assembly 122 via a conveyor belt or may be directly connected to the screw rod assembly 122 for transmission via the screw rod assembly 122.

Understandably, the designations "first gear", "second gear", "third gear", and "gear", etc. may be interchanged in some embodiments. For example, in some embodiments, the "first gear" of other embodiments is referred to as a "second gear", and correspondingly, the "second gear" of other embodiments is referred to as a "first gear".

It can be understood that the synchronisation component 1213 is not limited to the above-mentioned embodiments, and it may be other types of synchronisation components. In addition, when the synchronisation component 1213 includes gears and transmission gear sets, it may further include other structures, and the number of gears and the structure and number of the transmission gear sets may be set according to actual situations.

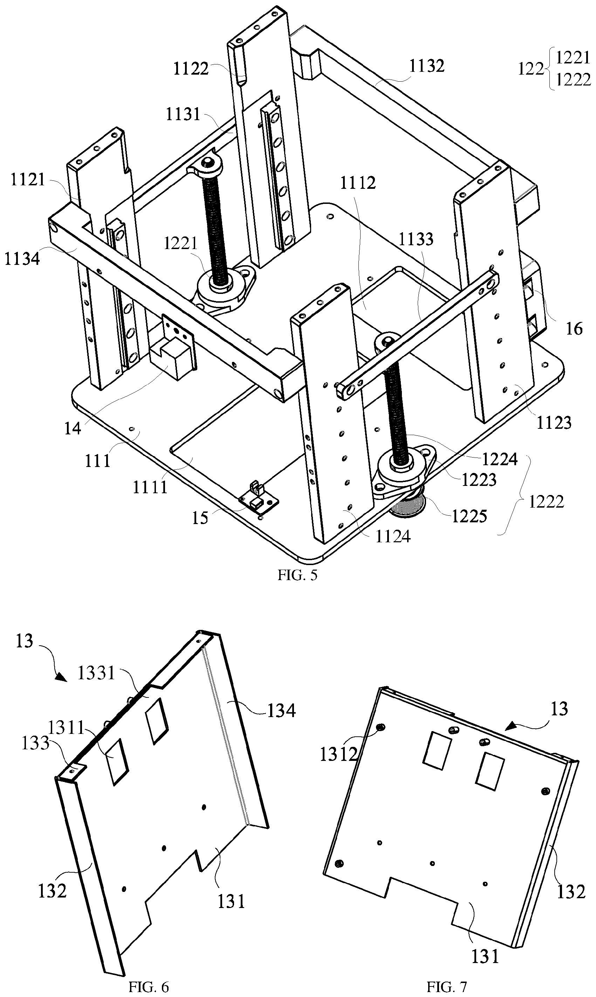

Referring to FIG. 5, FIG. 5 is a schematic view illustrating a connection relationship between the rack body 11 and the screw rod assembly 122 in FIG. 3. The screw rod assembly 122 may include two lead screws, such as a first lead screw 1221 and a second lead screw 1222. In some embodiments, the number of lead screws of the screw rod assembly 122 may be one of 1, 3, 4, 5, 6, etc.

In some embodiments, the number of the lead screws may be at least 2 in order to achieve stable movement of the detection card conveying seat 20.

The two lead screws, for example, the first lead screw 1221 and the second lead screw 1222, are arranged on opposite sides in a direction perpendicular to the extension direction of the strip-shaped opening 1111. The first lead screw 1221 may be connected to the first transmission gear set 1217, for example, the first runner 1217b, by means of a conveyor belt or directly, and the rotation of the first lead screw 1221 is achieved by the rotation of the first transmission gear set 1217, for example, the first runner 1217b. The second lead screw 1222 may be connected to the second transmission gear set 1218, for example, the second runner 1218b, by means of a conveyor belt or directly, and the rotation of the second lead screw 1222 is achieved by the rotation of the second transmission gear set 1218, for example, the second runner 1218b.

Each lead screw, for example, the second lead screw 1222, may include a bearing member 1223 arranged on the rack body 11, for example, the connection portion 1113; a screw body 1224 rotatably connected to the bearing member 1223 and rotatably connected to the rack body 11, for example, the reinforcing plate 113; and a third runner 1225 arranged on an end of the screw body 1224.

The bearing member 1223 is sleeved outside the screw body 1224 and is rotatably connected to the screw body 1224. The screw body 1224 may be a rod-shaped structure with an external thread arranged on a surface thereof. The extension direction of the screw body 1224 may be the same as the extension direction of the first guide rail 1126, but in some embodiments, the extension direction of the screw body 1224 may be different from the extension direction of the first guide rail 1126. The screw body 1224 can be screwed to the detection card conveying seat 20. The third runner 1225 and the second runner 1218b are disposed on the same side of the rack body 11, for example, the top plate 111. For example, the third runner 1225 and the second runner 1218b are disposed at the top of the top plate 111.

In some embodiments, the rotating shaft of the third runner 1225 is parallel to the rotating shaft of the second runner 1218b. In some embodiments, the bearing member 1223 may be omitted, and the screw body 1224 may be arranged in the connection portion 1113, for example, a through hole, and directly connected to the top plate 111.

Understandably, the designations "first runner", "second runner", "third runner", and "runner", etc. may be interchanged in some embodiments. For example, in some embodiments, the "first runner" of other embodiments is referred to as a "second runner", and correspondingly, the "second runner" of other embodiments is referred to as a "first runner".

In some embodiments, in the first lead screw 1221, the screw body 1224 is rotatably connected to the reinforcing plate 113, e.g., the first reinforcing plate 1131. In the second lead screw 1222, the screw body 1224 is rotatably connected to the reinforcing plate 113, e.g., the third reinforcing plate 1133. The third runner 1225 of the first lead screw 1221 may be connected to the first runner 1217b of the first gear set 1217 via a conveyor belt. The third runner 1225 of the second lead screw 1222 may be connected to the second runner 1218b of the second gear set 1218 via a conveyor belt.

Understandably, the screw rod assembly 122 and the first guide rail 1126 are arranged so as to enable the detection card conveying seat 20 to slide on the rack 10 and thus enable the transportation of the detection card. Therefore, the first guide rail 1126 may not be arranged on the molecular diagnostics device 100, provided that the number of screws in the screw rod assembly 122 is sufficient to enable the detection card conveying seat 20 to slide stably and normally on the rack 10.

Referring again to FIG. 3, the rack 10 may be arranged with a circuit mounting plate 13 arranged on an outer side of the rack body 11, for mounting the control circuit board 40. The circuit mounting plate 13 is arranged on the same side as the leg 112 on the top plate 111. The circuit mounting plate 13 is arranged on the same side of the second leg 1122 and the third leg 1123.

Further referring to FIGS. 3, 6 and 7, FIGS. 6 and 7 are perspective structural schematic views of the circuit mounting plate 13 in FIG. 3 at different viewing angles. The circuit mounting plate 13 may be made of a rigid material, such as plastic or metal. The circuit mounting plate 13 may include a mounting plate body 131. The mounting plate body 131 has an overall plate-like structure and may be disposed on the same side of the second leg 1122 and the third leg 1123. In some embodiments, the mounting plate body 131 may be directly fixed to the second leg 1122 and the third leg 1123. A side of the mounting plate body 131 away from the leg 112 is configured to mount the control circuit board 40. A perforation 1311 may be defined on the mounting plate body 131 to allow the wiring to pass through the perforation 1311 from within the rack body 11 and electrically connect to the control circuit board 40. In some embodiments, the mounting plate body 131 may be connected and fixed to the reinforcing plate 113, for example, the second reinforcing plate 1132. A connecting post 1312 is arranged on a side of the mounting plate body 131 away from the support leg 112 for mounting the control circuit board 40, so as to avoid direct contact between the control circuit board 40 and the mounting plate body 131. The connecting post 1312 may be screwed, plugged, welded, etc., to achieve the mounting of the control circuit board 40. The mounting plate body 131 can isolate the control circuit board 40 from the rack body 11, thereby preventing factors for example, the temperature inside the rack body 11 from interfering with the control circuit board 40. Of course, in some embodiments, when isolation of the control circuit board 40 is not required, the mounting plate body 131 may be omitted, and the connecting post 1312 may be directly arranged on the rack 10, for example, the rack body 11. In some embodiments, the mounting plate body 131 may be integrally structured with the rack body 11.

The mounting plate body 131 may be arranged with a first enclosure 132 arranged on an edge near the leg 112, for example, the third leg 1123. The first enclosure 132 may be bent from an edge of the mounting plate body 131 towards the third leg 1123 to cover a gap between the mounting plate body 131 and the third leg 1123, thereby serving as a barrier at the third leg 1123. In some embodiments, the first enclosure 132 may be fixed to the third leg 1123 by means of a screw connection, a snap fit, a plug-in connection, welding, gluing, etc. In some embodiments, the first enclosure 132 may be omitted.

The mounting plate body 131 may be arranged with a second enclosure 133 arranged near an edge of the top plate 111, and the second enclosure 133 may be bent from an edge of the mounting plate body 131 towards the third leg 1123. The second enclosure 133 may be fixedly connected to the top plate 111. In some embodiments, the second enclosure 133 may be fixed to the top plate 111 by means of a screw connection, a snap fit, a plug-in connection, welding, gluing, etc. In some embodiments, an opening 1331 may be defined on the second enclosure 133 to leave a space for components arranged on the top plate 111. In some embodiments, the second enclosure 133 may be omitted.

The mounting plate body 131 may be arranged with a third enclosure 134 arranged near an edge of the leg 112, for example, the second leg 1122. The third enclosure 134 may be bent from an edge of the mounting plate body 131 towards the second leg 1122 to cover a gap between the mounting plate body 131 and the second leg 1122, thereby serving as a barrier at the second leg 1122. In some embodiments, the third enclosure panel 134 may be fixed to the second leg 1122 by means of a connection method such as a screw connection, a snap fit, a plug-in connection, welding, gluing, etc. In some embodiments, the third enclosure panel 134 may be omitted.

Understandably, the designations "first enclosure", "second enclosure", "third enclosure", and "enclosure", etc. may be interchanged in some embodiments. For example, in some embodiments, the "first enclosure" of other embodiments is referred to as a "second enclosure", and correspondingly, the "second enclosure" of other embodiments is referred to as a "first enclosure".

Referring again to FIG. 3, the rack 10, for example, the rack body 11, is arranged with a code scanning device 14 that is electrically connected to the control circuit board 40. The code scanning device 14 may be configured to image scan an information mark on the detection card, such as a two-dimensional code or a bar code, and transmit the image to the control circuit board 40. The control circuit board 40 identifies the image and obtains relevant information about the detection card. The code scanning device 14 may be arranged on a path along which the detection card conveying seat 20 slides relative to the rack 10, such that the information mark on the detection card is scanned by the code scanning device 14 when the detection card is placed on the detection card conveying seat 20.

In some embodiments, the code scanning device 14 may be arranged on a path along which the detection card conveying seat 20 slides in the strip-shaped openings 1111. For example, the code scanning device 14 may be arranged on the reinforcing plate 113, for example, the fourth reinforcing plate 1134. The strip-shaped opening 1111 extends away from the mounting hole 1112, i.e., the strip-shaped opening 1111 extends away from the fourth reinforcing plate 1134. In some embodiments, the strip-shaped opening 1111 extending away from the mounting hole 1112 may extend over the fourth reinforcing plate 1134.

In some embodiments, the code scanning device 14 is arranged on the reinforcing plate 113, for example, the fourth reinforcing plate 1134. The detection card conveying seat 20 slides in the extension direction of the strip-shaped opening 1111 and slides to the top of the code scanning device 14. In this case, when the detection card is placed on the detection card conveying seat 20, the code scanning device 14 will immediately image scan the information mark on the detection card.

Understandably, the code scanning device 14 may be arranged at other positions on the rack 10, for example, inside the rack 10. In addition, in some embodiments, when the molecular diagnostic device 100 is arranged with a housing, the isolation door in the above embodiments is arranged at the fourth reinforcing plate 1134 of the housing and is arranged opposite the code scanning device 14, such that when the detection card conveying seat 20 slides relative to the rack 10 to the isolation door, and the detection card is placed on the detection card conveying seat 20, the code scanning device 14 automatically scans the information mark on the detection card. In some embodiments, the code scanning device 14 may be arranged on the housing.

Referring again to FIG. 5, the rack 10 is arranged with a first limiting switch 15 electrically connected to the control circuit board 40, for example, on the top plate 111. The first limiting switch 15 is disposed below the top plate 111. The first limiting switch 15 is disposed on a path of the detection card conveying seat 20 relative to the rack 10, such that the first limiting switch 15 is triggered when the detection card conveying seat 20 slides, which causes the first limiting switch 15 to generate a control signal and transmit it to the control circuit board 40. In this way, the control circuit board 40 controls the operation of the detection card conveying seat 20 according to the control signal and stops the operation of the detection card conveying seat 20, such that the detection card conveying seat 20 remains in a predetermined position, thereby positionally limiting the detection card conveying seat 20.

In some embodiments, the first limiting switch 15 is configured to limit the position of the detection card conveying seat 20 when sliding along the extension direction of the strip-shaped opening 1111.

In some embodiments, the first limiting switch 15 is disposed at a position of the top plate 111 near the strip-shaped opening 1111. The first limiting switch 15 may be disposed, in particular, on an end of the strip-shaped opening 1111 away from the mounting hole 1112. Of course, the first limiting switch 15 may alternatively be arranged at another position of the rack 10 or, in the case of the molecular diagnostic device 100 with a housing, on the housing.

In some embodiments, the first limiting switch 15 may be an optocoupler limiting switch, and the optocoupler limiting switch may be a slot-type optocoupler in particular. The slot-type optocoupler defines a groove between a limit light-emitting part and a limit light-receiving part of the slot-type optocoupler. When a part of the detection card conveying seat 20 is in the groove, the detection card conveying seat 20 blocks the light transmission between the limit light-emitting part and the limit light-receiving part, and the slot-shaped optocoupler generates a control signal and transmits it to the control circuit board 40, such that the detection card conveying seat 20 stops running under the control of the control circuit board 40. Therefore, the detection card conveying seat 20 is kept in a predetermined position.

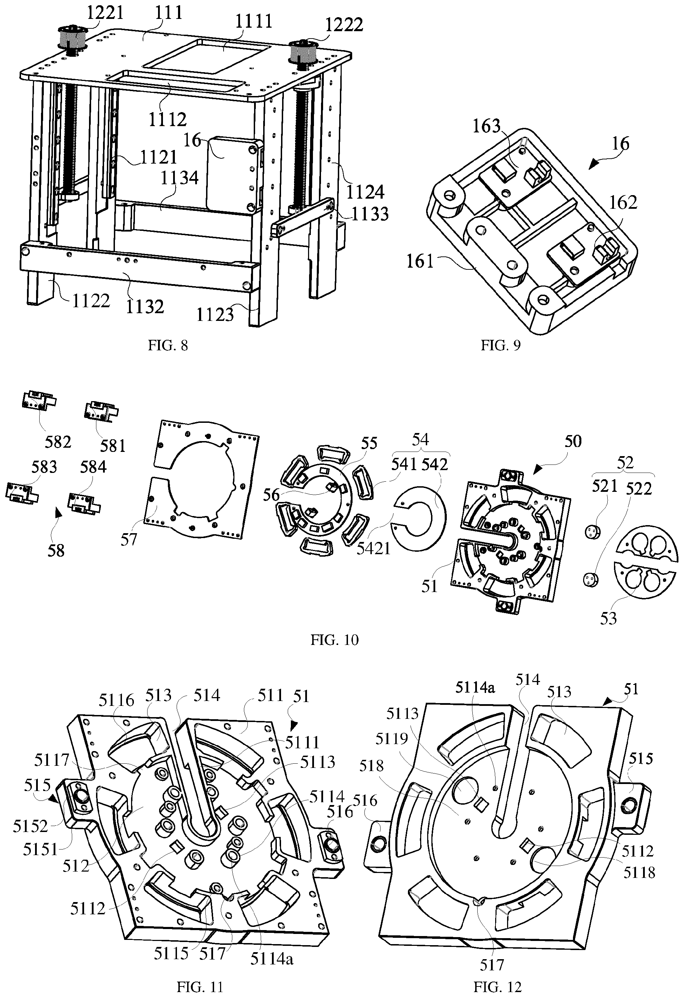

Referring to FIG. 8, FIG. 8 is a partial structural schematic view of the rack 10 in FIG. 3. The rack 10, for example, the rack body 11, may be arranged with a second limiting switch 16 which is electrically connected to the control circuit board 40 to positionally limit the detection card conveying seat 20. The second limiting switch 16 may be disposed on a path of the detection card conveying seat 20 sliding on the first guide rail 1126 to limit the position of the detection card conveying seat 20 when sliding on the first guide rail 1126.

When the detection card conveying seat 20 slides on the first guide rail 1126, the second limiting switch 16 is triggered and generates a control signal, and then transmits it to the control circuit board 40 such that the control circuit board 40 can control the operation of the detection card conveying seat 20 according to the control signal and stop the operation of the detection card conveying seat 20. In this way, the detection card conveying seat 20 is kept in a predetermined position, which realizes the positional limiting of the detection card conveying seat 20.

Further referring to FIGS. 8 and 9, FIG. 9 is a structural schematic view of the second limiting switch 16 in FIG. 8. The second limiting switch 16 may include a mounting housing 161 arranged on the leg 112, for example, the third leg 1123, and a first sub-limiting switch 162 and a second sub-limiting switch 163 that are arranged on the mounting housing 161. The first sub-limiting switch 162 and the second sub-limiting switch 163 are disposed on the path of the detection card conveying seat 20 sliding on the first guide rail 1126, such that the detection card conveying seat 20 slides on the travel between the first sub-limiting switch 162 and the second sub-limiting switch 163. The first sub-limiting switch 162 and the second sub-limiting switch 163 are both electrically connected to the control circuit board 40.

Understandably, the designations "first limiting switch", "second limiting switch", "sub-limiting switch", "first sub-limiting switch", "second sub-limiting switch", and "limiting switch", etc. may be interchanged in some embodiments. For example, in some embodiments, the "first limiting switch" of other embodiments is referred to as a "second limiting switch", and correspondingly, the "second limiting switch" of other embodiments is referred to as a "first limiting switch".

The mounting housing 161 is made of a rigid material such as plastic or metal. The mounting housing 161 has an overall housing shape. The mounting housing 161 may be arranged on the rack body 11, for example, the third leg 1123. The mounting housing 161 may be fixed to the rack body 11, for example, the third leg 1123, by means of a screw connection, a snap fit, a plug-in connection, welding, gluing, etc.

The mounting housing 161 may be disposed on a side of the third leg 1123 near the circuit mounting plate 13. Of course, the mounting housing may alternatively be arranged in other positions on the rack 10, without further elaboration.

The first sub-limiting switch 162 and the second sub-limiting switch 163 may be arranged on the same side of the mounting housing 161. The first sub-limiting switch 162 and the second sub-limiting switch 163 may be arranged, in particular, on a side of the mounting housing 161 away from the circuit mounting plate 13.

The first sub-limiting switch 162 can generate a signal when detecting the detection card conveying seat 20 sliding towards the card detecting seat 30, and transmit the signal to the control circuit board 40, such that the control circuit board 40 can control the operation of the detection card conveying seat 20 according to the control signal, and stop the operation of the detection card conveying seat 20, such that the detection card conveying seat 20 stays in a predetermined position, thus achieving the position limit when the detection card conveying seat 20 slides towards the card detecting seat 30.

The second sub-limiting switch 163 can be triggered and generate a signal when the detection card conveying seat 20 slides away from the detection card detecting seat 30 (i.e., slides towards the top plate 111) and transmit it to the control circuit board 40, such that the control circuit board 40 can control the operation of the detection card conveying seat 20, and causes the detection card conveying seat 20 to stop running. In this way, the detection card conveying seat 20 stays in a predetermined position, achieving a positional limiting of the detection card conveying seat 20 when sliding towards the top plate 111, which may reduce mutual damage caused by contact between the detection card conveying seat 20 and the top plate 111.

In some embodiments, the first sub-limiting switch 162 and the second sub-limiting switch 163 may both be optocoupler limiting switches. When the detection card conveying seat 20 is partially disposed in the groove, the detection card conveying seat 20 blocks the light transmission between the limit light-emitting part and the limit light-receiving part. In response thereto, the slot-shaped optocoupler generates a control signal and transmits it to the control circuit board 40, such that the first drive device 12, for example, the drive assembly 121, stops running under the control of the control circuit board 40, thereby causing the detection card conveying seat 20 to remain in the predetermined position.

It is understood that the first sub-limiting switch 162 and the second sub-limiting switch 163 may alternatively be limiting switches such as travel switches, proximity switches, etc. The first sub-limiting switch 162 and the second sub-limiting switch 163 may be sensors with a positional limiting function.

In some embodiments, the mounting housing 161 may be omitted, and the first sub-limiting switch 162 and the second sub-limiting switch 163 may be directly arranged in other positions on the rack 10. Of course, when the molecular diagnostic device 100 is arrange with a housing, the mounting housing 161 may be arranged on the housing. The mounting housing 161 may be omitted, and the first sub-limiting switch 162 and the second sub-limiting switch 163 may be directly arranged on the housing.

Referring to FIG. 2, the detection card conveying seat 20 may include a pressure plate 50 and a transporting assembly 60 that are arranged on the rack 10, for example, the first guide rail 1126. The transporting assembly 60 is configured to hold the detection card. The pressure plate 50 is connected to the first drive device 12, such that the pressure plate 50 can slide on the first guide rail 1126 under the action of the first drive device 12, thereby driving the transporting assembly 60 to slide on the first guide rail 1126. In this way, the transporting assembly 60 can transport the detection card to the detection card detecting seat 30.

Referring to FIG. 10, FIG. 10 is an exploded schematic view of the pressure plate 50 in FIG. 2. The pressure plate 50 may include a first housing 51 arranged on the rack 10, for example, the screw body 1224, an electromagnetic member 52 arranged on a side of the first housing 51 facing the detection card detecting seat 30, a pressing member 53 for fixing the detection card on the transporting assembly 60, a heating component 54 arranged on the first housing 51, a first circuit board 55 arranged on the first housing 51 and respectively electrically connected to the electromagnetic member 52 and the heating component 54, a locking member 56 arranged on the first housing 51 and configured to fix the pressing member 53, a second housing 57 covering a side of the first housing 51 away from the electromagnetic member 52, and a first slide rail component 58 arranged on the first housing 51 and on the rack 10, for example, the first guide rail 1126. The first housing 51 and the second housing 57 are snapped together to form a pressure plate body. The first circuit board 55 can be electrically connected to the control circuit board 40. The electromagnetic member 52 can generate a magnetic force under the control of the control circuit board 40 to attract the pressing member 53 to the first housing 51. The electromagnetic member 52 can eliminate the magnetic force under the control of the control circuit board 40 to avoid attracting the pressing member 53. The heating component 54 can heat the detection card under the control of the control circuit board 40. The first slide rail component 58 can slide on the rack 10, for example, the first guide rail 1126. The first housing 51 is connected to the rack 10, for example, the screw body 1224, such that the first housing 51 can slide in the extension direction of the first guide rail 1126 under the rotation of the screw body 1224.

Referring to FIGS. 11 and 12, FIGS. 11 and 12 are structural schematic views of the first housing 51 in FIG. 10 at different viewing angles. The first housing 51 may be made of a rigid material such as plastic or metal. The first housing 51 may be structured as a plate, but may alternatively have other shapes, which will not be described herein. The first housing 51 may include a housing body 511. A receiving groove 512 is defined in the middle of the housing body 511 on a side facing the second housing 57, for accommodating the first circuit board 55 and the locking member 56. The receiving groove 512 may have a circular cross-section or may have other shapes.

The housing body 511 may define a snap-fit hole 513 arranged around a perimeter of the receiving groove 512, for mounting the heating component 54. The snap-fit hole 513 may be arranged peripherally around the perimeter of the receiving groove 512. The snap-fit holes 513 may be one or more in number. In some embodiments, the number of the snap-fit holes 513 may be one of 2, 3, 4, 5, 6, etc. In some embodiments, the number of the snap-in holes 513 may be specifically 6. In some embodiments, each snap-in hole 513 is shaped as a section of a ring structure.

The housing body 511 defines a notch 514 to leave a space for the transporting assembly 60. The notch 514 extends towards the interior from a side edge of the housing body 511 close to the fourth reinforcing plate 1134. The notch 514 may be arranged opposite the strip-shaped opening 1111, and the extension direction of the notch 514 may be aligned with the extension direction of the strip-shaped opening 1111, such that the transporting assembly 60 can slide in both the strip-shaped opening 1111 and the notch 514. In some embodiments, the notch 514 is disposed between two corresponding adjacent snap-in holes 513.

The housing body 511 is arranged with a side wall 5111 in the receiving groove 512, and the side wall 5111 is formed by bending an edge of the notch 514 towards the second housing 57, to separate the notch 514 from the receiving groove 512. In some embodiments, the surface of the side wall 5111 adjacent to the second housing 57 is flush with the surface of the housing body 511 adjacent to the second housing 57. In some embodiments, the side wall 5111 may be configured to support the second housing 57.

The housing body 511 defines plug-in holes, such as a first plug-in hole 5112 and a second plug-in hole 5113, that are arranged in the receiving groove 512 and passing through the housing body 511, for mounting the locking member 56 at the plug-in holes. In some embodiments, the plug-in holes, for example, the first plug-in hole 5112 and the second plug-in hole 5113, may be omitted.

The housing body 511 is arranged with a limit post 5114 arranged in the receiving groove 512 to limit the mounting position of the first circuit board 55. For example, multiple limit posts 5114 are arranged around the notch 514 to cooperate with the housing body 511 to define a space for mounting the first circuit board 55, thereby limiting the mounting position of the first circuit board 55. In some embodiments, a through hole 5114a is defined on the limit post 5114, such that the wiring can pass through the through hole 5114a from a side of the housing body 511 close to the electromagnetic member 52, and extend into the receiving groove 512 to be electrically connected to the first circuit board 55.

In some embodiments, the limit post 5114 may further be configured to abut against the second housing 57 to support the second housing 57. In some embodiments, the limit post 5114 may be omitted. In some embodiments, the through hole 5114a may be directly defined at another position of the housing body 511 instead of on the limit post 5114.

The housing body 511 is arranged with a connecting post 5115 in the receiving groove 512 for mounting the first circuit board 55, so as to avoid direct contact between the first circuit board 55 and the housing body 511. In some embodiments, the connecting post 5115 may be fixed and connected to the first circuit board 55 by means of a connection method such as a screw connection, a snap fit, a plug-in connection, welding, gluing, etc. In some embodiments, the connecting post 5115 may be omitted, and the first circuit board 55 may be directly fixed in the receiving groove 512.

An edge of the housing body 511 on a side of the snap-fit hole 513 away from the second housing 57 is bent inwardly towards the snap-fit hole 513 to form a protruding edge 5116, so as to snap-fitly mount the heating component 54 and prevent the heating component 54 from slipping off a side of the housing body 511 close to the electromagnetic member 52. A connecting opening 5117 is defined between the snap-fit hole 513 and the receiving groove 512, such that the wiring connected to the heating component 54 can be electrically connected to the first circuit board 55 via the connecting opening 5117.

The housing body 511 is arranged with a first screw connection 515 in a region proximate to the screw rod assembly 122, for example, the first lead screw 1221. The housing body 511 is further arranged with a second screw connection 516 in a region proximate to the screw rod assembly 122, for example, the second lead screw 1222. Each screw connection, e.g. the first screw connection 515 and second screw connection portion 516, may include a connecting lug 5151 extending from the housing body 511 and a screw fitting 5152 arranged on the connecting lug 5151. The screw fitting 5152 may be sleeved on the screw rod assembly 122, for example, the screw body 1224. The screw fitting 5152 is internally arranged with an internal thread that cooperates with the external thread of the screw body 1224, such that the housing body 511 moves in the extension direction of the screw rod assembly 122, for example, the screw body 1224, under the rotation of the screw rod assembly 122, for example, the screw body 1224.

The housing body 511 defines a positioning hole 517 for positioning the detection card.

A clearance groove 518 is defined in the middle of a side surface of the housing body 511 away from the second housing 57 for accommodating the electromagnetic member 52, the pressing member 53, and the heating component 54. In some embodiments, the cross-section of the clearance groove 518 is circular, but it may of course be of another shape, without further description. The clearance groove 518 is arranged back-to-back with the receiving groove 512 relative to the housing body 511, such that the clearance groove 518 is in communication with the notch 514. The plug-in holes, e.g. the first plug-in hole 5112 and the second plug-in hole 5113, are disposed in the clearance groove 518. The through hole 5114a on the limit post 5114 is disposed in the clearance groove 518, and the snap-fit holes 513 are disposed around the clearance groove 518. In some embodiments, the clearance groove 518 may be omitted.

In some embodiments, the housing body 511 defines multiple accommodating grooves arranged peripherally in the clearance groove 518 for mounting the electromagnetic member 52. The number of the accommodating grooves may be any number, such as 2, 3, 4, 5, 6, etc. In some embodiments, the number of the accommodating grooves may be 2, such as a first accommodating groove 5118 and a second accommodating groove 5119.

Referring again to FIG. 10, the electromagnetic member 52 can be energized to generate a magnetic force, which in turn attracts and fixes the pressing member 53. The electromagnetic member 52 may include a first electromagnet 521 and a second electromagnet 522, which are respectively electrically connected to the first circuit board 55. The first electromagnet 521 may be arranged in the first accommodating groove 5118. The second electromagnet 522 may be arranged in the second accommodating groove 5119. Specifically, the first electromagnet 521 and the second electromagnet 522 may be fixedly connected to the housing body 511 by means of a screw connection, a snap fit, a plug-in connection, welding, gluing, etc. In some embodiments, the wiring electrically connected to the first electromagnet 521 and the second electromagnet 522 passes through the through hole 5114a and is electrically connected to the first circuit board 55. In some embodiments, the electromagnetic member 52 may be omitted.

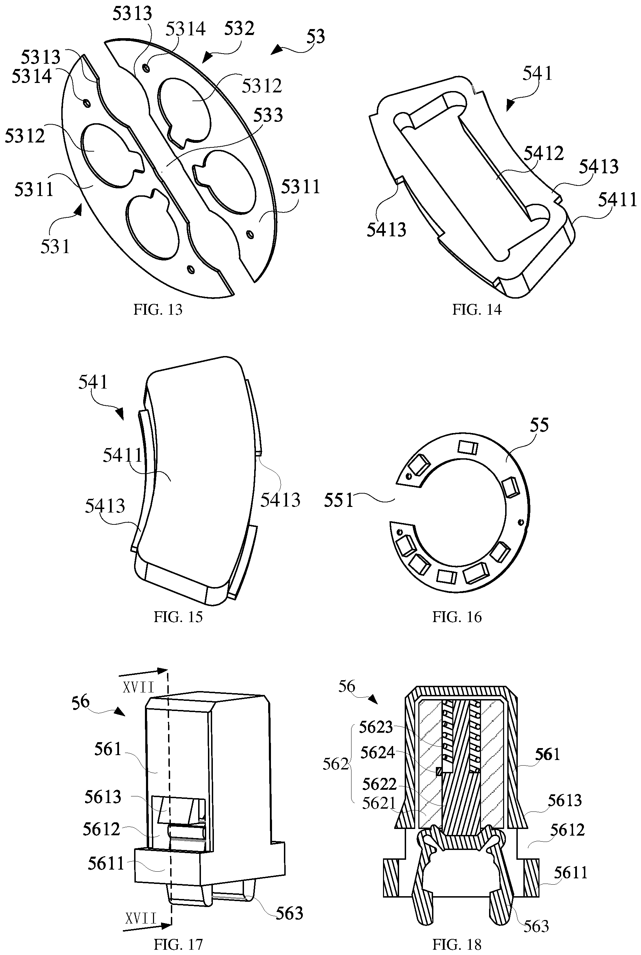

Referring to FIG. 13, FIG. 13 is a structural schematic view of the pressing member 53 in FIG. 10. The number of the pressing members 53 may be one or more. In some embodiments, the number of the pressing members 53 may be 2. That is, the pressing members 53 include a first pressing member 531 and a second pressing member 532. A gap 533 is defined between the two pressing members 53. The gap 533 is arranged opposite the strip-shaped opening 1111 to leave a space for the transporting assembly 60, such that the transporting assembly 60 can move in the gap 533 and the strip-shaped opening 1111 at the same time.

Each pressing member 53 may be made of a rigid material such as metal, and may be made of a metal such as iron that can be attracted by a magnet under the action of a magnetic force. Of course, in some embodiments, each pressing member 53 may be made of a rigid material such as plastic or metal, so as to be engaged with the locking member 56.

Each pressing member 53 may have an overall plate-like structure, specifically, a substantially circular portion or a ring-shaped portion, and may of course have other shapes, which will not be described in detail. The first pressing member 531, for example, may include a pressing member body 5311. The pressing member body 5311 may be arranged with a clearance portion 5312 to leave a space for the detection card, so as to increase the contact area between the pressing member body 5311 and the detection card, thereby positionally limiting the detection card. In some embodiments, the clearance portion 5312 may be perforated or notched.

An edge, facing the second pressing member 532, of the pressing member body 5311 of the first pressing member 531 is arranged with a sub-clearance portion 5313. An edge, facing the first pressing member 531, of the pressing member body 5311 of the second pressing member 532 is arranged with another sub-clearance portion 5313. The sub-clearance portion 5313 of the first pressing member 531 and the sub-clearance portion 5313 of the second pressing member 532 are arranged opposite to each other and can form a clearance portion to leave a space for the detection card, thereby increasing the contact area between the pressing member body 5311 and the detection card, and thus positionally limiting the detection card. In some embodiments, the sub-clearance portion 5313 may be a notch.

In some embodiments, multiple the clearance portions may be peripherally evenly distributed, so as to reasonably fix and limit the detection card. It can be understood that the number of the clearance portions may be the same as the number of snap-in holes 513 or the number of detection cards.

The pressing member body 5311 is arranged with a first snap-in part 5314 for a detachable connection with the transporting assembly 60.

In some embodiments, the first pressing member 531 and the second pressing member 532 may be integrally formed, with the gap 533 defined only at a position opposite the strip-shaped opening 1111. The gap 533 extends inwardly from an edge of the pressing member 53. In some embodiments, the gap 533 may be omitted, and the pressing member 53 may be part of the transporting assembly 60.

When the electromagnetic member 52 attracts the pressing member 53, one of the electromagnets in the electromagnetic member 52, for example, the first electromagnet 521, can attract the surface of the first pressing member 531, for example, the pressing member body 5311, and the other electromagnet, for example, the second electromagnet 522, attracts the surface of the second pressing member 532, for example, the pressing member body 5311.

In some embodiments, the pressing member 53 may be fixedly locked with the locking member 56. For example, a portion of the pressing member body 5311, that is arranged between adjacent two clearance portions, may be clamped and fixed by the locking member 56. Of course, a corresponding connection structure such as connecting post, lug, etc., may be arranged on the pressing member body 5311 to be clamped and fixed by the locking member 56.

Referring again to FIG. 10, the heating component 54 may include a first heating member 541 that is arranged on the first housing 51, for example, the housing body 511, on a side facing the second housing 57, and a second heating member 542 that is arranged on the first housing 51, for example, the housing body 511, on a side away from the second housing 57. The first heating member 541 and the second heating member 542 cooperate to heat the detection card when they abut against the detection card or in an appropriate scenario or position.

Understandably, the designations "first heating member", "second heating member" and "heating member", etc. may be interchanged in some embodiments. For example, in some embodiments, the "first heating member" in other embodiments is referred to as a "second heating member", and correspondingly, the "second heating member" in other embodiments is referred to as a "first heating member".

Referring to FIGS. 14 and 15, FIGS. 14 and 15 are structural schematic views of a first heating member 541 in FIG. 10 at different viewing angles. The first heating member 541 may include a heating body 5411. The heating body 5411 may be made of a rigid material that is thermally conductive, such as metal, to facilitate heating the detection card. A heating device such as a heating resistor may be arranged inside the heating body 5411.

The heating body 5411 may be arranged in the first housing 51, for example, the snap-in hole 513, and snapped onto the first housing 51, for example, the housing body 511, to facilitate the mounting of the heating body 5411 on the first housing 51.

A recess 5412 is defined on a surface of the heating body 5411 facing the second housing 57 for cooperating with the second housing 57. A tab 5413 is arranged on an edge of the heating body 5411 facing the second housing 57, such that the heating body 5411 is placed in the snap-in hole 513 from a side of the first housing 51 close to the second housing 57 and is exposed on a side of the first housing body 51 away from the second housing 57. Further, the tab 5413 is snapped together with the protruding edge 5116 to prevent the heating body 5411 from slipping off a side of the first housing 51 close to the electromagnetic member 52.

In some embodiments, when the heating body 5411 is disposed in the snap-fit hole 513, the wiring electrically connected to the heating device in the heating body 5411 can be electrically connected to the first circuit board 55 through the connecting opening 5117 to control the heating device of the heating body 5411.

It can be understood that in some embodiments, the heating body 5411 may be integrally formed with the first housing 51, for example, the housing body 511.

Referring to FIG. 10, the second heating member 542 may be integrally formed as a ring-shaped structure. The second heating member 542 may be made of a rigid material that is thermally conductive, such as metal. A heating device such as a heating resistor may be arranged inside the second heating member 542. The second heating member 542 is arranged in the clearance groove 518 of the housing body 511. The second heating member 542 may be fixed to the clearance groove 518 by means of a screw connection, a snap fit, a plug-in connection, or other connection means. The second heating member 542 defines a notch 5421 to leave a space for the notch 514 and the transporting assembly 60.

In some embodiments, when the second heating member 542 is disposed in the clearance groove 518, the wiring electrically connected to the heating device in the second heating member 542 can be electrically connected to the first circuit board 55 through the through hole 5114a to control the heating device in the second heating member 542.

Referring to FIG. 16, FIG. 16 is a structural schematic view of the first circuit board 55 in FIG. 10. The first circuit board 55 as a whole may be of a ring-shaped structure. Electronic components such as resistor, capacitor, and inductor are arranged on the first circuit board 55. The first circuit board 55 is arranged in the receiving groove 512 of the housing body 511. The first circuit board 55 may be positionally limited by the limit post 5114 from shaking. The first circuit board 55 may be fixed to the connecting post 5115 by means of a screw connection, a snap-fit, a plug-in connection, or other connection methods. The first circuit board 55 defines a notch 551 to leave a space for the side wall 5111, the notch 514, and the transporting assembly 60. The first circuit board 55 may be respectively electrically connected to the heating device in the heating component 54 and the electromagnetic member 52, so as to control the heating device in the heating component 54 and the electromagnetic member 52 separately. In some embodiments, the first circuit board 55 may be omitted without sharing the working pressure with the control circuit board 40, and the heating device in the heating component 54 and the electromagnetic member 52 may be directly electrically connected to the control circuit board 40.

Referring to FIGS. 17 and 18, FIG. 17 is a structural schematic view of the locking member 56 in FIG. 10, and FIG. 18 is a cross-sectional schematic view along line XVII-XVII in FIG. 17. The locking member 56 may include a locking housing 561 fixedly arranged on the housing body 511, a linkage assembly 562 arranged inside the locking housing 561, and a locking claw 563 arranged outside the locking housing 561 and connected to the linkage assembly 562.

Specifically, the locking housing 561 is hollow inside, and retaining walls 5611 are arranged on opposite sides of an opening of the locking housing 561, with the retaining walls 5611 extending outwardly from the locking housing 561. The locking housing 561 defines an avoidance hole 5612 on a part adjacent to the retaining walls 5611. The locking housing 561 is arranged with a retaining block 5613 in the avoidance hole 5612. The retaining block 5613 is elastically deformable. The retaining block 5613 protrudes radially outwardly from the locking housing 561. When the locking member 56 is arranged on the housing body 511, an end of the locking housing 561 away from the retaining walls 5611 extends into the first plug-in hole 5112 or the second plug-in hole 5113 from a side of the first housing 51, for example, the housing body 511, away from the second housing 57. The retaining block 5613 is elastically deformed by being pressed against the first housing 51, for example, the housing body 511, such that the retaining block 5613 passes through the plug-in hole, which in turn causes the housing body 511 to catch in the avoidance hole 5612, with the retaining walls 5611 disposed on a side of the housing body 511 away from the second housing 57 and abutting against a bottom surface of the clearance groove 518. Further, the retaining block 5613 is disposed on a side of the housing body 511 close to the second housing 57 and abuts against a bottom surface of the receiving groove 512, such that the locking housing 561 and the first housing 51, for example, the housing body 511, are locked and mounted under the action of the retaining walls 5611 and the retaining block 5613. Understandably, the locking housing 561 may be fixed to the housing body 511 by means of a screw connection, a snap fit, a plug-in connection, welding, gluing, etc., which will not be described in detail.

The linkage assembly 562 may include a linkage body 5621 arranged inside the locking housing 561, a connecting member 5622 slidably connected to the linkage body 5621, an elastic member 5623 arranged on the linkage body 5621 and the connecting member 5622 and configured to force the connecting member 5622 to slide towards the locking housing 561 relative to the linkage body 5621, and a linkage member 5624 arranged on the linkage body 5621 and configured to lock or unlock the connecting member 5622.

The linkage body 5621 is hollow and cylindrical in shape, and is arranged in the locking housing 561. The linkage body 5621 extends from a bottom surface of the locking housing 561 to the retaining block 5613. In some embodiments, the linkage body 5621 may be integrally formed with the locking housing 561. In some embodiments, the linkage body 5621 may be omitted.

The connecting member 5622 is arranged in the linkage body 5621 and may be arranged in the form of a cylinder. A part of the connecting member 5622 has an outer diameter that is greater than the outer diameter of another part of the connecting member 5622. An end of the connecting member 5622 with the greater outer diameter is connected and fixed to the locking claw 563. In some embodiments, the outer diameters of the connecting members 5622 are the same.

The elastic member 5623 is arranged on the part of the connecting member 5622 with the less outer diameter. In some embodiments, the elastic member 5623 may be a spring sleeved around the connecting member 5622, abutting against the linkage body 5621 or the locking housing 561 at one end and the connecting member 5622 at the other end. Understandably, the elastic member 5623 may be made of other elastic materials, which will not be repeated herein.

The linkage member 5624 is fixed inside the linkage body 5621 to lock or unlock the linkage member 5624. The linkage member 5624 may be a magnet, for example, an electromagnet, and is electrically connected to the control circuit board 40, such that the connecting member 5622 in a certain position can be attracted and fixed under the control of the control circuit board 40. In this way, the connecting member 5622 cannot move, so as to realize the locking of the connecting member 5622. When unlocking the connecting member 5622, the linkage member 5624 unlocks the connecting member 5622 under the control of the control circuit board 40. In some embodiments, the linkage member 5624 may be of another structure, such as an electromagnet. Of course, the linkage member 5624 may be a mechanical structure such as a wheel, ratchet, etc., which can lock or unlock the connecting member 5622.

In some embodiments, the linkage member 5624 may be configured such that:
When the linkage member 5624 locks the connecting member 5622, the connecting member 5622 moves again towards inside the locking housing 561 to slide relative to the coupling body 5621, which can trigger the linkage member 5624 and break the state in which the linkage member 5624 locks the connecting member 5622.

When the linkage member 5624 does not lock the connecting member 5622, the connecting member 5622 moves again towards inside the locking housing 561 to slide relative to the coupling body 5621, which can trigger the linkage member 5624, such that the linkage member 5624 locks to the connecting member 5622.

During that the locking member 56 is in use, when the locking claw 563 is in the position facing the pressing member 53, the locking claw 563 can move towards the pressing member 53 under the drive of the first housing 51, such that the locking claw 563 abuts against the pressing member 53. The locking claw 563 is subjected to an abutting force that moves it towards inside the locking housing 561 and then moves towards inside the locking housing 561, while at the same time being subjected to a pressing force of the locking housing 561, causing the locking claw 563 to close to clamp the pressing member 53, for example, a position between the two adjacent clearance portions or a structure such as a connecting post or connecting lug, to achieve clamping and locking of the pressing member 53. In addition, the abutting force that moves the locking claw 563 towards inside the locking housing 561 triggers the linkage assembly 562, which keeps the locking claw 563 locked. While the locking claw 563 remains locked, it is again subjected to an abutting force that moves the locking claw 563 towards inside the locking housing 561. The movement of the locking claw 563 towards inside the locking housing 561 will again trigger the linkage assembly 562, which breaks the locking state and achieve unlocking. Then, under the action of the linkage assembly 562, the locking claw 563 moves away from the locking housing 561, such that the locking claw 563 opens and cannot clamp and lock the pressing member 53, and the pressing member 53 is released.

In some embodiments, the locking member 56 may be a door lock switch. In some embodiments, the locking member 56 may be omitted in the presence of the electromagnetic member 52.

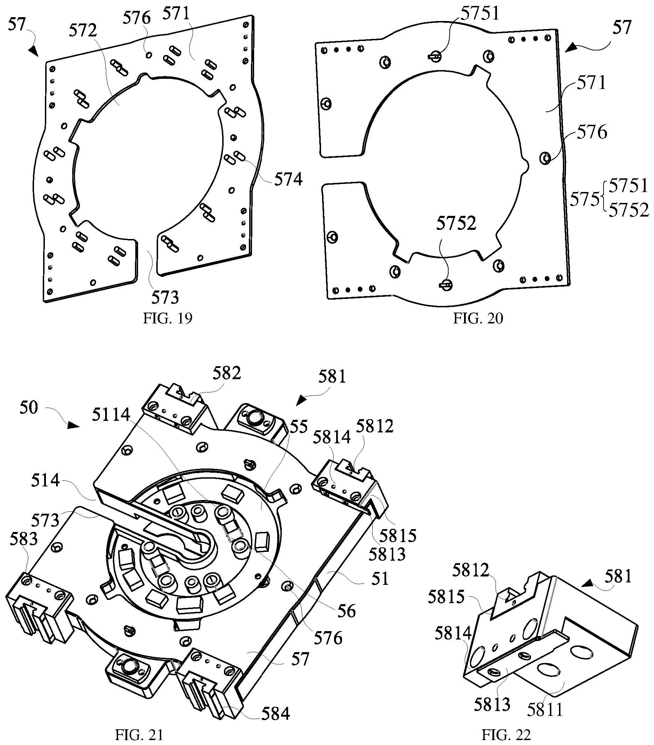

Referring to FIGS. 19 and 20, FIGS. 19 and 20 are structural schematic views of the second housing 57 in FIG. 10 at different viewing angles. The second housing 57 may include a cover body 571 that can be snapped together with the first housing 51, for example, the housing body 511. In particular, the cover body 571 may be connected and fixed to the first housing 51, for example, the housing body 511, by means of a screw connection, a snap fit, a plug-in connection, welding, gluing, etc., which will not be described in detail.

The cover body 571 may be made of a rigid material such as plastic or metal. The cover body 571 defines a through hole 572. The through hole 572 may be arranged opposite the receiving groove 512 to leave a space for the first circuit board 55, such that the first circuit board 55 is exposed. In some embodiments, the through hole 572 may be omitted, and the cover body 571 completely covers the first housing 51, for example, the housing body 511. In some embodiments, the size of the through hole 572 may be adjusted, such that the through hole 572 corresponds to a part of the notch 514 in the housing body 511, to leave a space for the transporting assembly 60, and the cover body 571 will cover the first circuit board 55.

The cover body 571 defines a notch 573. The notch 573 extends inwardly from an edge of the cover body 571 to communicate with the through hole 572. The notch 573 is arranged at a position of the cover body 571 opposite the notch 514, such that when the cover body 571 is snapped together with the housing body 511, the notch 573 is in communication with the notch 514 to leave a space for the transporting assembly 60, which enables the transporting assembly 60 to slide within the notch 573.

A fixing pillar 574 is arranged on a side of the cover body 571 facing the first housing 51. The fixing pillar 574 is arranged protruding from a surface of the cover body 571. The fixing pillar 574 is disposed at a position of the cover body 571 opposite the recess 5412 of the heating component 54, such that a spring can be sleeved on the fixing pillar 574. In this way, an end of the spring abuts against the cover body 571 and the other end abuts against the heating component 54 at the recess 5412. Understandably, under the action of the spring, when the heating component 54 is subjected to a force on a side of the first housing 51 away from the second housing 57, it can move together with the first housing 51 towards the second housing 57, compressing the spring. In some embodiments, the fixing pillar 574 may be omitted. In some embodiments, the spring may be replaced by other elastic members, which will not be repeated herein.

The cover body 571 is arranged with a hanging lug 575 on a side away from the first housing 51 for connecting with the transporting assembly 60. The hanging lug 575 is connected and fixed to the cover body 571 by a connection method such as a screw connection, a snap fit, a plug-in connection, welding, gluing, etc. In some embodiments, the number of the hanging lugs 575 may be two, such as a first hanging lug 5751 and a second hanging lug 5752. The first hanging lug 5751 and the second hanging lug 5752 are arranged symmetrically. It can be understood that when the hanging lug 575 serves to connect the transporting assembly 60, the number and the arrangement position of the hanging lugs 575 may be set according to actual needs.

The cover body 571 further defines a positioning hole 576, which is disposed on the cover body 571 in a position opposite to the positioning hole 517, such that when the cover body 571 is snapped together with the housing body 511, the positioning hole 576 is in communication with the positioning hole 517 to position the detection card.

Referring to FIGS. 10 and 21, FIG. 21 is a perspective structural schematic view of the pressure plate 50 in FIG. 10. The first slide rail component 58 is arranged on the first housing 51 to achieve a sliding connection between the first housing 51 and the rack 10, for example, the first guide rail 1126. The first slide rail component 58 may include multiple slide rails. The number of the slide rails may be the same as the number of the first guide rails 1126, and in some embodiments, the number of the slide rails may be less than the number of the first guide rails 1126.

In some embodiments, the number of the slide rails may be 4. That is, the slide rails include a first slide rail 581, a second slide rail 582, a third slide rail 583, and a fourth slide rail 584.

Referring to FIGS. 21 and 22, FIG. 22 is a structural schematic view of the first slide rail 581 in FIG. 21. Each slide rail, for example, the first slide rail 581, may include a first slide rail mounting member 5811 arranged on the first housing 51, for example, the housing body 511, and a first slide rail member 5812 arranged on the first slide rail mounting member 5811. The first slide rail member 5812 may be arranged on the first guide rail 1126 to enable relative sliding between the first slide rail member 5812 and the first guide rail 1126.

The first slide rail mounting member 5811 may be made of a rigid material such as plastic or metal. The first slide rail mounting member 5811 may be fixed to a side of the first housing 51, for example, the housing body 511, by a connection method such as a screw connection, a snap fit, a plug-in connection, welding, gluing, etc. A side of the first slide rail mounting 5811 away from the detection card detecting seat 30 is bent towards the cover body 571 to form a bending portion 5814. The bending portion 5814 may abut against the second housing 57 on the side away from the first housing 51. In some embodiments, a fixed connection between the bending portion 5814, the second housing 57, and the first housing 51 may be realized by a bolting structure such as a bolt or screw passing through the above three in sequence. Of course, the fixed connection may be realized by other methods such as a snap fit, a plug-in connection, welding, gluing, etc.

In some embodiments, a limit plate 5813 may be arranged on one slide rail, for example, the first slide rail 581, to cooperate with the second limiting switch 16. For example, when the pressure plate 50 slides against the rack 10, for example, the first guide rail 1126, the limit plate 5813 may slide along a path of the pressure plate 50. When the limit plate 5813 slides to a predetermined position, the limit plate 5813 may be disposed in a groove of the second limiting switch 16, for example, a slot-shaped optocoupler, blocking the transmission of light between the limit light-emitting part and the limit light-receiving part, thereby causing the slot-shaped optocoupler to be triggered to generate a control signal and transmit it to the control circuit board 40. Under the control of the control circuit board 40, the operation of the first drive device 12, for example, the drive assembly 121, is stopped to stop the movement of the pressure plate 50. Understandably, the limit plate 5813 may be arranged on other slide rails in the first slide rail component 58, or on other parts of the pressure plate 50.

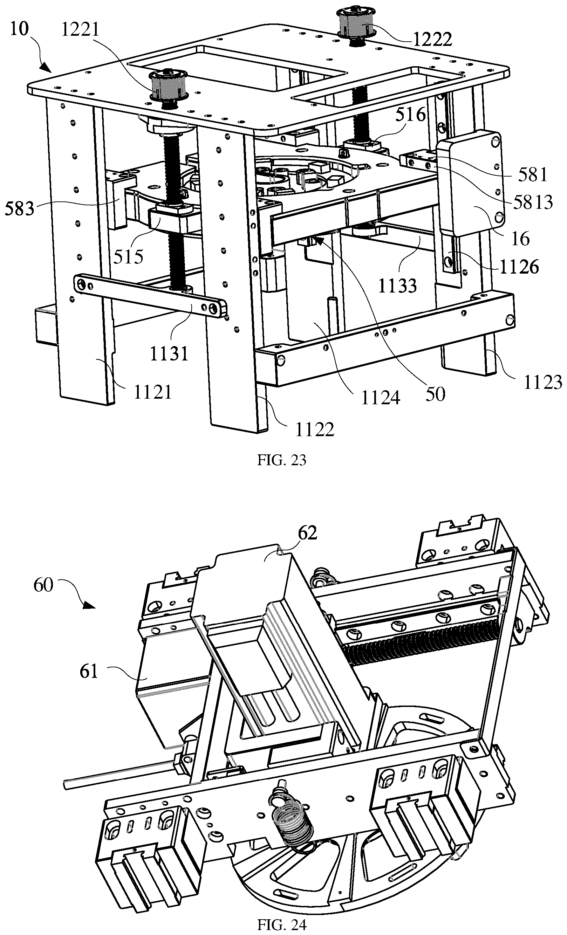

Referring to FIG. 23, FIG. 23 is a structural schematic view of a connection between the rack 10 and the pressure plate 50. The pressure plate 50 is arranged on the rack 10. The first slide rail member 5812 of the first slide rail 581 is arranged on the first guide rail 1126 of the third leg 1123. Accordingly, the first slide rail member 5812 of the second slide rail 582 is arranged on the first guide rail 1126 of the fourth leg 1124. The first slide rail member 5812 of the third slide rail 583 is arranged on the first guide rail 1126 of the first leg 1121. The first slide rail member 5812 of the second slide rail 582 is arranged on the first guide rail 1126 of the second leg 1122. The first screw connection 515 is screwed to the first lead screw 1221, for example, the screw body 1224. The second screw connection 516 is screwed to the second lead screw 1222, for example, the screw body 1224. When the drive assembly 121 moves, the first lead screw 1221 and the second lead screw 1222 can be driven to move synchronously, such that the first lead screw 1221 and the second lead screw 1222 both rotate relative to the pressure plate 50. In this way, the first slide rail component 58 of the pressure plate 50, for example, the first slide rail member 5812, can slide on the first guide rail 1126, thereby achieving a position movement of the pressure plate 50, and specifically achieving a position movement of the pressure plate 50 in the vertical direction.

Referring to FIG. 24, FIG. 24 is a structural schematic view of the transporting assembly 60 in FIG. 2. The transporting assembly 60 may include a sliding frame 61 arranged above the pressure plate 50 and arranged on the rack 10, for example, the first guide rail 1126, and a transporting member 62 arranged on the sliding frame 61. The sliding frame 61 can slide on the rack 10, for example, the first guide rail 1126. The sliding frame 61 is connected to the pressure plate 50, such that it slides on the rack 10 together with the pressure plate 50 in some cases. The transporting member 62 can be configured to hold the detection card. The transporting member 62 can slide relative to the sliding frame 61. The sliding direction of the transporting member 62 relative to the sliding frame 61 is different from the sliding direction of the sliding frame 61 relative to the rack 10.

Understandably, when the transporting assembly 60 is in an extending state, the transporting member 62 slides on the sliding frame 61 to slide to a first position outside the rack 10, completing the extension, and the detection card is placed when the transporting assembly 60 is in an extended state. When the transporting assembly 60 is in a contracting state, the transporting member 62 slides on the sliding frame 61 to slide to a second position inside the rack 10 to complete the contraction, and the transporting assembly 60 can slide between a third position and a fourth position on the first guide rail 1126 when in a contracted state. In some embodiments, the transporting assembly 60 can be extended when in the third position. In some embodiments, the transporting assembly 60 can be extended in a position between the third position and the fourth position.

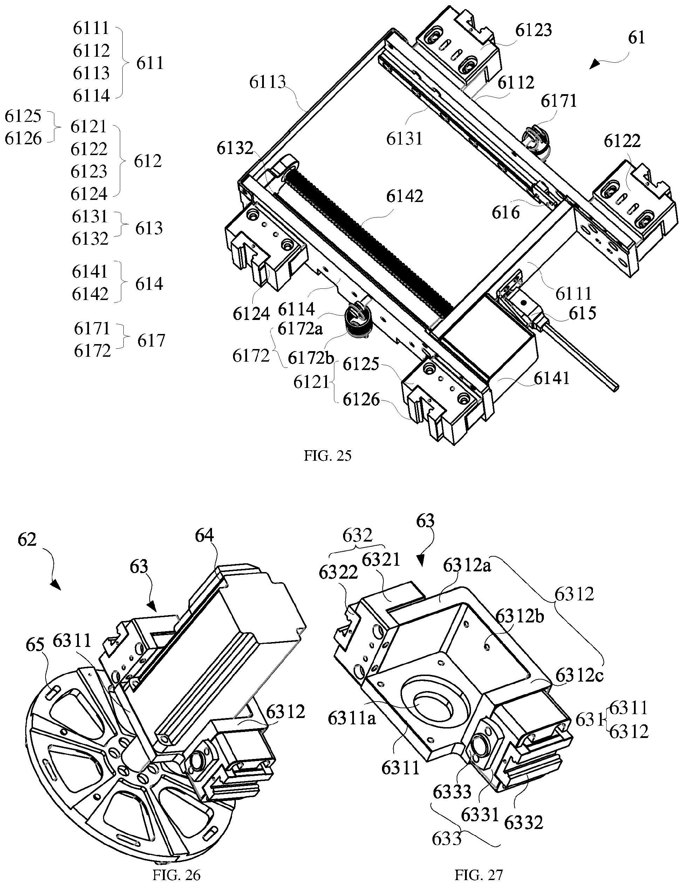

Referring to FIG. 25, FIG. 25 is a structural schematic view of the sliding frame 61 in FIG. 24. The sliding frame 61 may include a fixing frame 611, a second slide rail component 612 arranged on the fixing frame 611 and slidably connected to the rack 10, for example, the first guide rail 1126, a second guide rail 613 arranged on the fixing frame 611 and for mounting the transporting member 62, and a second drive device 614 for driving the transporting member 62 to slide on the second guide rail 613.

Understandably, the designations "first drive device", "second drive device", and "drive device", etc. may be interchanged in some embodiments. For example, in some embodiments, the "first drive device" in other embodiments is referred to as a "second drive device", and correspondingly, the "second drive" in other embodiments is referred to as a "first drive device".

The fixing frame 611 may be made of a rigid material such as plastic or metal. The fixing frame 611 may have an overall frame structure, or it may have any other shape, without further description. The fixing frame 611 may include a first connecting plate 6111, a second connecting plate 6112 connected to the first connecting plate 6111, a third connecting plate 6113 connected to the second connecting plate 6112 and arranged opposite to the first connecting plate 6111, and a fourth connecting plate 6114 connecting the third connecting plate 6113 and the first connecting plate 6111 and arranged opposite to the second connecting plate 6112.

In some embodiments, the first connecting plate 6111, the second connecting plate 6112, the third connecting plate 6113, and the fourth connecting plate 6114 may enclose to form a rectangle. The extension directions of the second connecting plate 6112 and the fourth connecting plate 6114 may be the same as the extension direction of the strip-shaped opening 1111, or may of course be different.

The second slide rail component 612 is arranged on the fixing frame 611 and is configured to achieve a sliding connection between the fixing frame 611 and the rack 10 when the second slide rail component 612 is slidably connected to the rack 10, for example, the first guide rail 1126. The second slide rail component 612 may include multiple slide rails, and the number of the slide rails may be the same as the number of the first guide rails 1126, or in some embodiments, the number of the slide rails may be less than the number of the first guide rails 1126.

In some embodiments, the number of the slide rails may be 4. That is, the slide rails include a first slide rail 6121, a second slide rail 6122, a third slide rail 6123, and a fourth slide rail 6124.

Each slide rail, for example, the first slide rail 6121, may include a second slide rail mounting member 6125 arranged on the fixing frame 611 and a second slide rail member 6126 arranged on the second slide rail mounting member 6125. The second slide rail member 6126 may be arranged on the first guide rail 1126 to achieve relative sliding between the second slide rail member 6126 and the rack 10, for example, the first guide rail 1126.

The second slide rail mounting member 6125 may be made of a rigid material such as plastic or metal. The second slide rail mounting member 6125 may be fixed to the fixing frame 611 by a screw connection, a snap fit, a plug-in connection, welding, gluing, etc. In some embodiments, the second slide rail mounting member 6125 may be omitted, and the second slide member 6126 may be directly arranged on the fixing frame 611.

When the second slide rail component 612 is slidably connected to the rack 10, for example, the first guide rail 1126, the second slide rail member 6126 of the slide rail, for example, the first slide rail 6121, is slidably connected to the first guide rail 1126 of the second leg 1122. The second slide rail member 6126 of the slide rail, for example, the second slide rail 6122, is slidably connected to the first guide rail 1126 of the third leg 1123. The second slide rail member 6126 of the slide rail, for example, the third slide rail 6123, is slidably connected to the first guide rail 1126 of the fourth leg 1124. The second slide rail member 6126 of the slide rail, for example, the fourth slide rail 6124, is slidably connected to the first guide rail 1126 of the first leg 1121.

In some embodiments, the first slide rail 6121 and the fourth slide rail 6124 are arranged on a side of the fourth connecting plate 6114 away from the second connecting plate 6112. The second slide rail 6122 and the third slide rail 6123 are arranged on a side of the second connecting plate 6112 away from the fourth connecting plate 6114. Of course, the mounting positions of the first slide rail 6121, the second slide rail 6122, the third slide rail 6123, and the fourth slide rail 6124 on the fixing frame 611 may be adjusted according to the actual situation.

The second guide rail 613 is arranged on the fixing frame 611 for mounting the transporting member 62, such that the transporting member 62 slides on the second guide rail 613. The extension direction of the second guide rail 613 may be consistent with the extension direction of the strip-shaped opening 1111, such that the transporting member 62 slides on the second guide rail 613 while also sliding in the strip-shaped opening 1111. The second guide rail 613 may include a first sub-guide rail 6131 arranged on the fixing frame 611, for example, the second connecting plate 6112, and a second sub-guide rail 6132 arranged on the fixing frame 611, for example, the fourth connecting plate 6114. The first sub-guide rail 6131 may extend in the same direction as the second sub-guide rail 6132. The first sub-guide rail 6131 and the second sub-guide rail 6132 may be respectively fixed to the fixing frame 611 by a screw connection, a snap fit, a plug-in connection, welding, gluing, etc. In some embodiments, the extension direction of the first sub-guide rail 6131 is the horizontal direction. In some embodiments, the extension direction of the first sub-guide rail 6131 may be different from the extension direction of the second sub-guide rail 6132, when the sliding of the transporting member 62 on the first sub-guide rail 6131 does not affect the sliding of the transporting member 62 in the strip-shaped opening 1111.

Understandably, the designations "first guide rail", "second guide rail" and "guide rail", etc. may be interchanged in some embodiments. For example, in some embodiments, the "first guide rail" in other embodiments is referred to as a "second guide rail", and correspondingly, the "second guide rail" in other embodiments is referred to as a "first guide rail".

The second drive device 614 may include a second drive member 6141 arranged on the fixing frame 611 and a lead screw 6142 connected to the second drive member 6141. The second drive member 6141 may be arranged on the fixing frame 611, for example, the first connecting plate 6111, and is configured to drive the lead screw 6142 to rotate. The second drive member 6141 may be electrically connected to the control circuit board 40 to move under the control of the control circuit board 40. The lead screw 6142 is rotatably connected to the fixing frame 611, for example, the first connecting plate 6111 and the fourth connecting plate 6114. The extension direction of the lead screw 6142 may be the same as the extension direction of the second guide rail 613. An external thread is arranged on an outer surface of the lead screw 6142. The external thread of the lead screw 6142 is screwed to the transporting member 62, such that when the lead screw 6142 rotates, the lead screw 6142 and the transporting member 62 rotate together relatively, and the lead screw 6142 cooperates with the second guide rail 613 to cause the transporting member 62 to slide on the second guide rail 613.

The second drive member 6141 is arranged on a side of the first connecting plate 6111 away from the third connecting plate 6113, and can be connected and fixed by means of a screw, bolt, snap fit, plug-in connection, welding, gluing, or other connection methods. In some embodiments, the second drive member 6141 may be a motor. An output shaft of the motor may pass through the first connecting plate 6111 and be connected to the lead screw 6142. Of course, the second drive member 6141 may be a different type of power source.

Understandably, the second guide rail 613 may be omitted when the number of the lead screws 6142 is sufficient to maintain and support the stability of the transporting member 62.

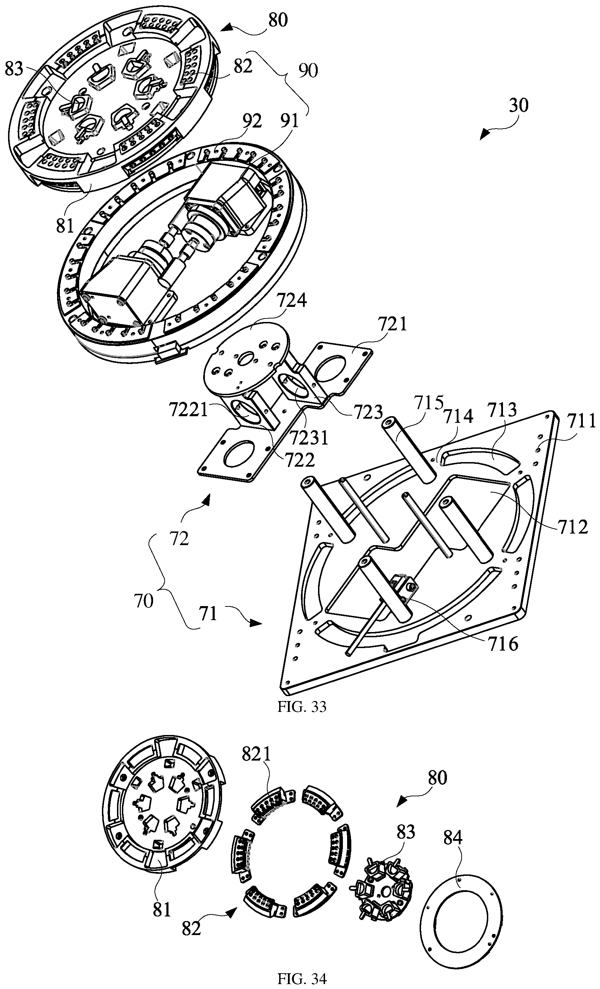

In some embodiments, in order to position the detection card in the transporting member 62, the fixing frame 611, for example, the first connecting plate 6111, is arranged with a positioning light generator 615. The positioning light generator 615 is disposed on a side of the first connecting plate 6111 away from the third connecting plate 6113. The positioning light generator 615 is arranged opposite the positioning hole, for example, the positioning holes 576 and 517, on the pressure plate 50, such that the light emitted by the positioning light generator 615 passes through the positioning hole, for example, the positioning holes 576 and 517, on the pressure plate 50 and then cooperates with a positioning light receiver 716 (shown in FIG. 33) to position the detection card on the transporting member 62.

In some embodiments, in order to limit the movement of the transporting member 62, an light sensor 616 may be arranged on a side of the fixing frame 611, for example, the second connecting plate 6112, which is adjacent to the fourth connecting plate 6114. The light sensor 616 is electrically connected to the control circuit board 40 to operate under the control of the control circuit board 40. The light sensor 616 may include a light-emitting unit for emitting light and a light-receiving unit for receiving light. When the transporting member 62 slides along the second guide rail 613 towards the first connecting plate 6111 and reaches a predetermined position, it can receive the light emitted by the light-emitting unit and reflect the light to the light-receiving unit. The light sensor 616 is triggered to generate a control signal and transmit it to the control circuit board 40. The control circuit board 40 controls the transporting member 62 such that it remains in the predetermined position. In some embodiments, the light sensor 616 is disposed on a side of the second connecting plate 6112 close to the first connecting plate 6111. In some embodiments, the light sensor 616 may be positionally limited by the first limiting switch 15, the travel switch, the proximity switch, etc. in the above-mentioned embodiments.

In some embodiments, in order to achieve sliding of the pressure plate 50 together with the sliding frame 61, a traction member 617 may be arranged on the fixing frame 611. In order to achieve stable sliding of the pressure plate 50 and the sliding frame 61, the traction member 617 may be arranged in multiple numbers. For example, the number of the traction members 617 may be 2. That is, the traction members include a first traction member 6171 and a second traction member 6172. The two traction members 617 may be arranged symmetrically on both sides of the fixing frame 611.

In some embodiments, the first traction member 6171 is arranged on a side of the second connecting plate 6112 away from the fourth connecting plate 6114. The second traction member 6172 is arranged on a side of the fourth connecting plate 6114 away from the second connecting plate 6112.

Each traction member 617, for example, the second traction member 6172, may include a hanging member 6172a arranged on the connecting plate, for example, the fourth connecting plate 6114, and an elastic member 6172b connected at one end to the hanging member 6172a and at the other end to the pressure plate 50, for example, the hanging lug 575. The elastic member 6172b is configured to strengthen the tight fit between the fixing frame 611 and the pressure plate 50.

In some embodiments, the hanging member 6172a may be a columnar structure. The hanging member 6172a of the first traction member 6171 is arranged on the side of the second connecting plate 6112 away from the fourth connecting plate 6114. The hanging member 6172a of the first traction member 6171 may be disposed between the second slide rail 6122 and the third slide rail 6123. The hanging member 6172a of the second traction member 6172 is arranged on the side of the fourth connecting plate 6114 away from the second connecting plate 6112. The hanging member 6172a of the second traction member 6172 may be disposed between the first slide rail 6121 and the fourth slide rail 6124.

In some embodiments, the elastic member 6172b disposed be a tension spring. An end of the elastic member 6172b, for example the tension spring, of the first traction member 6171 may be connected and fixed to the hanging member 6172a of the first traction member 6171. The other end of the elastic member 6172b, for example the tension spring, of the first traction member 6171 may be connected and fixed to the pressure plate 50, for example, the first hanging lug 5751. An end of the elastic member 6172b, for example the tension spring, of the second traction member 6172 may be connected and fixed to the hanging member 6172a of the second traction member 6172. The other end of the elastic member 6172b, for example the tension spring, of the second traction member 6172 may be connected and fixed to the pressure plate 50, for example, the second hanging lug 5752.

Understandably, in some embodiments, the hanging member 6172a of each traction member 617 may be omitted, and the corresponding mating elastic member 6172b may be directly connected and fixed to the corresponding connection plate of the fixing frame 611. In some embodiments, the traction member 617 may be omitted when the transporting assembly 60 can be made to move together with the arrival pressure plate 50 by means of its own gravity. In some embodiments, the traction member 617 may be omitted and the transporting assembly 60 may be screwed to the screw rod assembly 122, for example, the first lead screw rod 1221 and the second lead screw rod 1222.

Referring to FIG. 26, FIG. 26 is a structural schematic view of the transporting member 62 in FIG. 24. The transporting member 62 may include a sliding seat 63 arranged on the second guide rail 613 and screwed to the second drive device 614, for example, the lead screw 6142, a third drive member 64 arranged on the sliding seat 63, and a card tray 65 arranged on the third drive member 64 and configured to be driven by the third drive member 64 to perform a rotational movement. The sliding seat 63 is slidable on the second guide rail 613 to drive the third drive member 64 and the card tray 65 to move together, and can be moved to a position outside the rack 10 to place the detection card on the card tray 65. The sliding seat 63 can further drive the third drive member 64 and the card tray 65 to move to a position inside the rack 10. The third drive member 64 can drive the detection card on the card tray 65 to perform a centrifugal motion to complete the centrifugal processing of the detection card.

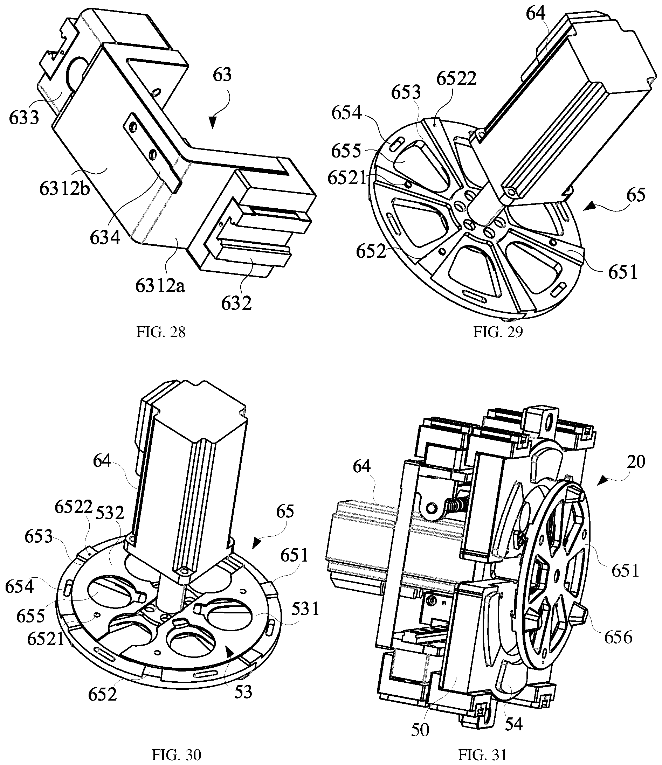

Referring to FIGS. 27 and 28, FIGS. 27 and 28 are structural schematic views of the sliding seat 63 in FIG. 26 at different viewing angles. The sliding seat 63 may include a sliding seat body 631 for mounting the third drive member 64, a third slide rail component 632 arranged on the sliding seat body 631 and slidably connected to the second guide rail 613, for example, the first sub-guide rail 6131, and a fourth slide rail component 633 arranged on the sliding seat body 631 and slidably connected to the second guide rail 613, for example, the second sub-guide rail 6132. The fourth slide rail component 633 may be screwed to the second drive device 614, for example, the lead screw 6142. The sliding seat body 631 is driven to slide on the second guide rail 613 under the drive of the second drive device 614.

The sliding seat body 631 may be made of a rigid material such as plastic or metal. The sliding seat body 631 may include a base plate 6311 and side plates 6312 surrounding the base plate 6311. A clearance hole 6311a may be defined on the middle of the base plate 6311 to leave a space for the third drive member 64. The side plates 6312 may extend from the edge of the base plate 6311 to the side away from the pressure plate 50. The side plates 6312 may include a first side plate 6312a for arranging the third slide rail component 632, a second side plate 6312b connected to the first side plate 6312a and disposed on a side of the base plate 6311 close to the first connecting plate 6111, and a third side plate 6312c connected to the second side plate 6312b and symmetrically arranged with respect to the first side plate 6312a.

The third slide rail component 632 is fixed to a side of the first side plate 6312a close to the second connecting plate 6112, and may be fixed by a screw connection, a snap fit, a plug-in connection, welding, gluing, etc., etc. The third slide rail component 632 is slidably connected to the second guide rail 613, for example, the first sub-guide rail 6131, to achieve a sliding connection between the sliding seat body 631 and the sliding frame 61. The third slide rail component 632 may include a third slide rail mounting member 6321 arranged on the sliding seat body 631, for example, the first side plate 6312a, and a third slide rail member 6322 arranged on the third slide rail mounting member 6321. The third slide member 6322 may be arranged on the second guide rail 613, for example, the first sub-guide rail 6131, to achieve relative sliding between the third slide member 6322 and the second guide rail 613, for example, the first sub-guide rail 6131.

The third slide rail mounting member 6321 may be made of a rigid material, such as plastic or metal. The third slide rail mounting member 6321 may be fixed to the side plate 6312, for example, the first side plate 6312a, by a screw connection, a snap fit, a plug-in connection, welding, gluing, etc., etc. In some embodiments, the third slide rail mounting member 6321 may be omitted, and the third slide member 6322 may be directly arranged on the side plate 6312, for example, the first side plate 6312a.

The fourth slide rail component 633 is fixed to a side of the third side plate 6312c near the fourth connecting plate 6114, and may be fixed by a screw connection, a snap fit, a plug-in connection, welding, gluing, etc., etc. The fourth slide rail component 633 is slidably connected to the second guide rail 613, for example, the second sub-guide rail 6132, to achieve the sliding connection between the sliding seat body 631 and the sliding frame 61. The fourth slide rail component 633 may include a fourth slide rail mounting member 6331 arranged on the sliding seat body 631, for example, the third side plate 6312c, a fourth slide rail member 6332 arranged on the fourth slide rail mounting member 6331, and a screw fitting 6333 arranged on the fourth slide rail mounting member 633 1. The fourth slide rail member 6332 may be arranged on the second guide rail 613, for example, the second sub-guide rail 6132, to achieve relative sliding between the fourth slide rail member 6332 and the second guide rail 613, for example, the second sub-guide rail 6132. The screw fitting 6333 may be sleeved on the lead screw 6142, and the screw fitting 6333 is internally arranged with an internal thread that can cooperate with the external thread of the lead screw 6142, such that the sliding seat 63 moves in the extension direction of the lead screw 6142 under the drive of the second drive member 6141.

Understandably, the designations "first slide rail", "second slide rail", "third slide rail", "fourth slide rail" and "slide rail", etc. may be interchanged in some embodiments. For example, in some embodiments, the "first slide rail" of other embodiments is referred to as a "second slide rail", and correspondingly, the "second slide rail" of other embodiments is referred to as a "first slide rail".

The designations "first slide rail component", "second slide rail component", "third slide rail component", "fourth slide rail component", and "slide rail component" etc. may be interchanged in some embodiments. For example, in some embodiments, the "first slide rail component" in other embodiments is referred to as a "second slide rail component", and correspondingly, the "second slide rail component" in other embodiments is referred to as a "first slide rail component".

The designations "first slide rail mounting member", "second slide rail mounting member", "third slide rail mounting member", "fourth slide rail mounting member", and "slide rail mounting member", etc. may be interchanged in some embodiments. For example, in some embodiments, the "first slide rail mounting member" of other embodiments is referred to as a "second slide rail mounting member", and accordingly, the "second slide rail mounting member" of other embodiments is referred to as a "first slide rail mounting member".

The designations "first slide member", "second slide member", "third slide member", "fourth slide member", and "slide member", etc. may be interchanged in some embodiments. For example, in some embodiments, the "first slide member" in other embodiments is referred to as a "second slide member", and accordingly, the "second slide member" in other embodiments is referred to as a "first slide member".

The fourth slide rail mounting member 6331 may be made of a rigid material such as plastic or metal. The fourth slide rail mounting member 6331 may be fixed to the side plate 6312, for example, the third side plate 6312c, by a screw connection, a snap fit, a plug-in connection, welding, gluing, etc., etc. In some embodiments, the fourth slide rail mounting member 6331 may be omitted, and the fourth slide rail member 6332 may be directly arranged on the side plate 6312, for example, the third side plate 6312c.

The screw fitting 6333 may be arranged between the side plate 6312, for example, the third side plate 6312c, and the fourth slide rail mounting member 6331.

In some embodiments, in order to positionally limit the sliding seat 63, the sliding seat 63 is arranged with a first limit member 634. The first limit member 634 may be arranged on the second side plate 6312b at a part corresponding to the light sensor 616, such that when the sliding seat 63 slides along the second guide rail 613 towards the first connecting plate 6111, the sliding seat 63 can receive light emitted by the light-emitting unit when reaching the predetermined position. The first limit member 634 reflects the light to the light-receiving unit, and the light sensor 616 generates a control signal and transmits it to the control circuit board 40, which controls the second drive member 6141, causing the sliding seat 63 to be disposed in the predetermined position. It can be understood that the first limit member 634 may be arranged at other positions that can cooperate with the light sensor 616, for example, on the third drive member 64.

In addition, in order to positionally limit the sliding seat 63, the sliding seat 63 is arranged with a second limit member (not shown) that cooperates with the first limiting switch 15. When the sliding seat 63 moves away from the first connecting plate 6111 and reaches a predetermined position, the second limit member can be disposed in the groove of the first limiting switch 15, for example, a slot-shaped photocoupler, to block the light transmission, thereby triggering the first limiting switch 15, for example, the slot-type optocoupler, to generate a control signal and transmit it to the control circuit board 40. Under the control of the control circuit board 40, the operation of the second drive member 6141 is stopped, which stops the sliding seat 63 from moving. It is understood that the second limit member may be arranged in other positions that can cooperate with the first limiting switch 15, for example, on the third drive member 64.

Understandably, the designations "first limit member", "second limit member", and "limit member", etc. may be interchanged in some embodiments. For example, in some embodiments, the "first limit member" of other embodiments is referred to as a "second limit member", and correspondingly, the "second limit member" of other embodiments is referred to as a "first limit member".

Referring again to FIGS. 26 and 27, the third drive member 64 is arranged on the sliding seat 63, for example, the base plate 6311. The side plates 6312 surround the third drive member 64. The third drive member 64 may be connected and fixed to the sliding seat 63, for example, by a screw connection, a snap fit, a plug-in connection, welding, gluing, etc. A portion of the third drive member 64, such as an output shaft, may pass through the clearance hole 6311a and be connected and fixed to the card tray 65. In some embodiments, the third drive member 64 may be a motor. An output shaft of the motor may pass through the clearance hole 6311a and be connected to the card tray 65.

Understandably, the designations "first drive member", "second drive member", "third drive member", and "drive member", etc. may be interchanged in some embodiments. For example, in some embodiments, the "first drive member" of other embodiments is referred to as a "second drive member", and correspondingly, the "second drive member" of other embodiments is referred to as a "first drive member".

The card tray 65 is disposed below the sliding seat 63 and is fixedly connected to the third drive member 64.

Referring to FIGS. 29 and 30, FIG. 29 is a structural schematic view of a connection between the third drive member 64 and the card tray 65 in FIG. 26, and FIG. 30 is a structural schematic view of a connection between the third drive member 64 and the card tray 65 and the pressing member 53 in FIG. 2. The card tray 65 may include a card tray body 651. The card tray body 651 may be made of a rigid material such as plastic or metal. The card tray body 651 is a rotary body, and an axis of the rotary body is coaxially arranged with the output shaft of the third drive member 64. In some embodiments, the card tray body 651 is a circular disc-shaped structure.

The card tray body 651 is arranged with ribs 652 on a side adjacent to the third drive member 64. The rib 652 is arranged such that it diverges radially from a point where the card tray body 651 is connected to the third drive member 64 as a center. The ribs 652 are arranged peripherally around the point where the card tray body 651 is connected to the third drive member 64.

Two adjacent ribs 652 and the card tray body 651 enclose to form a recess 653 for holding the detection card. The number of recesses 653 may be the same as the number of the heating components 54. Of course, the number of the recesses 653 may be less than the number of the heating components 54. In some embodiments, the number of the recesses 653 may be 6, and of course the specific number of the recesses 653 may be adjusted according to the actual situation.

The card tray body 651 is arranged with a second snap-in part 654 arranged in the recess 653 for fastening the detection card. The second snap-in part 654 is disposed near an edge of the card tray body 651. In some embodiments, the second snap-in part 654 is a groove or a protruding post. The card tray body 651 defines a receiving hole 655 arranged in the recess 653 to leave a space for the detection card. In some embodiments, the recess 653 is a groove, and the depth of the groove may be the same as the thickness of the detection card, such that when the detection card is placed in the recess 653, the surface of the detection card is flush with a surface of the card tray body 651 away from the rib 652.

In some embodiments, in order to achieve the connection between the card tray body 651 and the pressing member 53, a third snap-in part 6521 may be arranged on the rib 652, such that the third snap-in part 6521 is engaged with the pressing member 53. In some embodiments, the third snap-in part 6521 is a protruding post, such that the protruding post is engaged with the pressing member 53 in the first snap-in part 5314, for example, a connecting hole, of the pressing member 53. In some embodiments, the first snap-in part 5314 may be arranged on the rib 652, and the third snap-in part 6521 may be arranged on the pressing member 53. In some embodiments, an interlocking fit between the third snap-in part 6521 and the pressing member 53 may be replaced by other structures such as grooves and protruding posts, plug-in structures, snap-fit structures, etc. In some embodiments, in order to further enhance the fit between the card tray body 651 and the pressing member 53, a magnetic coupling member such as a permanent magnet or electromagnet may be arranged inside the card tray body 651 and/or the rib 652, such that the pressing member 53 can be attracted under the action of the magnetic force, thereby enhancing the fit between the third snap-in part 6521 and the pressing member 53. In this way, the pressing member 53 can abut against the surface of the detection card, thereby avoiding unstable installation of the detection card.

In some embodiments, in order to position the detection card, a positioning hole 6522 may be defined on the rib 652. When the card tray body 651 is rotated to a predetermined position, the positioning hole 6522 is opposite the positioning holes 517 and 576, such that the light emitted by the positioning light generator 615 passes through the positioning holes 517, 576, and 6522, and it can be confirmed that the detection card on the card tray body 651 is in the predetermined position. When the card tray body 651 has not been rotated to the predetermined position, the light emitted by the positioning light generator 615 passes through the positioning holes 517 and 576 but not the positioning hole 6522, and it can be confirmed that the detection card on the card tray body 651 is not in the predetermined position.

In some embodiments, a first positioning member 656 is arranged on a side of the card tray body 651 away from the third drive member 64 (as shown in FIG. 31), so as to position the detection card when transporting the detection card to the detection card detecting seat 30, such that the detection card is placed in a predetermined position for detecting the detection card. In some embodiments, the first positioning member 656 is a positioning block, which extends away from the card tray body 651 and has a cross-sectional area perpendicular to the extension direction that gradually changes and decreases. In some embodiments, the positioning block may be conical in shape.

It is understood that the transporting member 62 may be in the fourth position when the card tray body 651 transports the detection card to the detection card detecting seat 30.

Understandably, the designations "first position", "second position", "third position", "fourth position", and "position", etc. may be interchanged in some embodiments. For example, in some embodiments, the "first position" in other embodiments is referred to as a "second position", and correspondingly, the "second position" in other embodiments is referred to as a "first position".

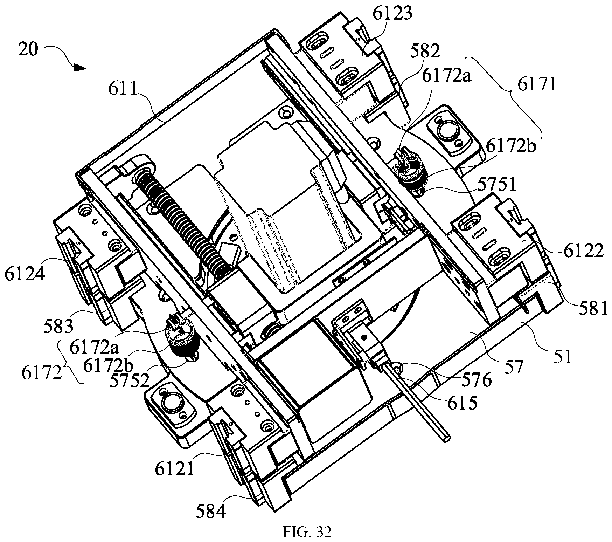

Referring to FIGS. 31 and 32, FIGS. 31 and 32 are structural schematic views of a connection between the pressure plate 50 and the transporting assembly 60 in FIG. 2 at different viewing angles. During a connecting process of the pressure plate 50 with the transporting assembly 60, elements of the transporting assembly 60, except for the card tray 65, are assembled together first, and then the sliding frame 61 of the transporting assembly 60 is placed above the pressure plate 50. The first slide rail 6121 of the sliding frame 61 is arranged opposite the fourth slide rail 584 of the pressure plate 50 such that they can be mounted together on the first guide rail 1126 of the second leg 1122 of the rack 10. The second slide rail 6122 of the sliding frame 61 is arranged opposite the first slide rail 581 of the pressure plate 50 such that they can be mounted together on the first guide rail 1126 of the third leg 1123 of the rack 10. The third slide rail 6123 of the sliding frame 61 is arranged opposite the second slide rail 582 of the pressure plate 50 such that they can be mounted together on the first guide rail 1126 of the fourth leg 1124 of the rack 10. The fourth slide rail 6124 of the sliding frame 61 is arranged opposite the third slide rail 583 of the pressure plate 50 such that they can be mounted together on the first guide rail 1126 of the first leg 1121 of the rack 10.

Understandably, the pressure plate 50 and the transporting assembly 60 may be each mounted on different first guide rails 1126. Of course, it is also possible to mount only the pressure plate 50 or the transporting assembly 60 on one of the first guide rails 1126.

Next, the card tray 65 of the transporting member 62 in the transporting assembly 60 is placed on a side of the pressure plate 50 away from the sliding frame 61 such that the pressing member 53 is disposed between the first housing 51 and the card tray 65. The output shaft of the third drive member 64 of the transporting member 62 in the transporting assembly 60 is connected and fixed to the card tray 65 through a notch on the pressure plate 50.

The first hanging lug 5751 of the pressure plate 50 is arranged opposite the first traction member 6171 of the transporting assembly 60 and is connected to each other. The second hanging lug 5752 of the pressure plate 50 is arranged opposite the second traction member 6172 of the transporting assembly 60 and is connected to each other. Specifically, an end of the elastic member 6172b of the first traction member 6171 is connected to the hanging member 6172a of the first traction member 6171, and the other end of the elastic member 6172b of the first traction member 6171 is connected to the first hanging lug 5751 of the pressure plate 50. An end of the elastic member 6172b of the second traction member 6172 is connected to the hanging member 6172a of the second traction member 6172, and the other end of the elastic member 6172b of the second traction member 6172 is connected to the first hanging lug 5751 of the pressure plate 50.

Referring to FIG. 33, FIG. 33 is an exploded view of the detection card detecting seat 30 in FIG. 2. The detection card detecting seat 30 may include a support frame 70 that is fixedly connected to the rack 10, a support seat 80 arranged on the support frame 70, and a detection component 90 arranged on the support frame 70 and the support seat 80. The support seat 80 is arranged below the pressure plate 50, so as to support the detection card transported by the detection card conveying seat 20, for example, the transporting assembly 60. The detection component 90 is electrically connected to the control circuit board 40. When the detection card is placed on the support seat 80, the detection assembly 90 carries out a series of detection processes on the detection card by means of excitation light to generate a detection signal, and transmits the detection signal to the control circuit board 40.

Referring to FIG. 33, the support frame 70 has an overall frame structure and may be disposed at the bottom of the rack 10. The support frame 70 may include a base 71 arranged at the bottom of the rack 10 and fixedly connected to the rack 10, and a fixing seat 72 arranged on top of the base 71.

The base 71 may include a base body 711. The base body 711 may be made of a rigid material such as plastic or metal. The base body 711 may have an overall plate-like structure, but may otherwise have other structures, which is not described in detail. The base 71 may be connected to the rack 10, for example, the legs 112, by means of a screw connection, a snap fit, a plug-in connection, welding, gluing, etc. In some embodiments, the base 71 may be fixed to an end of each leg 112.

A fixing groove 712 may be defined on the middle of a top of the base body 711 to accommodate and fix the fixing seat 72. In some embodiments, the fixing groove 712 may be omitted and the fixing seat 72 may be directly fixed to the base 71.

The base body 711 defines multiple isolation grooves 713 peripherally around the fixing groove 712 to cooperate with the detection component 90. A fixing portion 714 is formed between each adjacent two isolation grooves 713 to cooperate with the detection component 90. The multiple isolation grooves 713 are arranged to reduce the contact area between the detection component 90 and the base body 711. In some embodiments, the isolation grooves 713 may be omitted.

A support portion 715 for supporting the support seat 80 is arranged on the top of the base body 711. The support portion 715 may be connected and fixed to the base body 711 by means of a screw connection, a snap fit, a plug-in connection, welding, gluing, etc. In some embodiments, the support portion 715 may be a rod-shaped structure, and of course, the support member 715 may be of other structures. In some embodiments, the support portion 715 may be omitted when there is another structure to support the support seat 80.

A positioning light receiver 716 is arranged on top of the base body 711 opposite the positioning light generator 615 to receive the light emitted by the positioning light generator 615, thereby positioning the detection card. The positioning light receiver 716 may be electrically connected to the control circuit board 40 such that after the positioning light receiver 716 receives light, it generates a signal and transmits it to the control circuit board 40, which enables the molecular diagnostic device 100 to confirm that the detection card has reached the predetermined position. In some embodiments, the mounting position of the positioning light generator 615 and the positioning light receiver 716 may be interchanged.

The fixing seat 72 may include a mounting seat 721 disposed in the fixing groove 712. The mounting seat 721 may be made of a rigid material such as plastic, metal, etc. The mounting seat 721 may be fixed to the base body 711 by means of a screw connection, a snap fit, a plug-in connection, welding, gluing, etc. The mounting base 721 may be configured to mount the detection component 90.

A top of the mounting base 721 may be arranged with a first fastening plate 722 and a second fastening plate 723 that are arranged in an upright position. The first fastening plate 722 and the second fastening plate 723 may both be made of a rigid material such as plastic or metal. The first fastening plate 722 and the second fastening plate 723 are misaligned and arranged in parallel to cooperate with the detection component 90. The first fastening plate 722 defines a fixing hole 7221 to cooperate with the detection component 90. The second fastening plate 723 defines a fixing hole 7231 to cooperate with the detection component 90. The extension directions of the fixing hole 7221 and the fixing hole 7231 are parallel without overlapping, so as to achieve a compact mounting of the detection component 90. Understandably, in some embodiments, the mounting base 721 may be omitted, and the first fastening plate 722 and the second fastening plate 723 may be directly arranged on the base body 711.

A support plate 724 is arranged on the first fastening plate 722 and the second fastening plate 723 for supporting the support seat 80. The support plate 724 is arranged opposite the mounting seat 721.

In some embodiments, at least part of the structure of the support frame 70, e.g. the base 71, may be part of the rack 10. That is, the support frame 70 may be part of the rack 10.

Referring to FIG. 34, FIG. 34 is an exploded view of the support seat 80 in FIG. 33. The support seat 80 may include a support seat body 81 arranged on the base 71, for example, the support portion 715 and the support plate 724, a detection chamber component 82 arranged on the support seat body 81, a sample addition chamber component 83 arranged on the support seat body 81 and cooperating with the detection chamber component 82 to support the detection card, and a second circuit board 84 arranged on the support seat body 81. The detection chamber component 82 may be arranged on the support seat 80 in a position opposite the heating component 54, for example, the first heating member 541, to cooperate with the heating component 54, for example, the first heating member 541. The sample addition chamber component 83 may be arranged on the support seat 80 in a position opposite the heating component 54, for example, the second heating member 542, to cooperate with the heating component 54, for example, the second heating member 542. The detection chamber component 82, together with the sample addition chamber component 83, cooperates with the detection card to support and heat it. The detection chamber component 82 may further be configured to detect the excitation light of the detection card. The detection chamber component 82 and the sample addition chamber component 83 are electrically connected to the second circuit board 84 together to control the heating of the detection chamber component 82 and the sample addition chamber component 83.

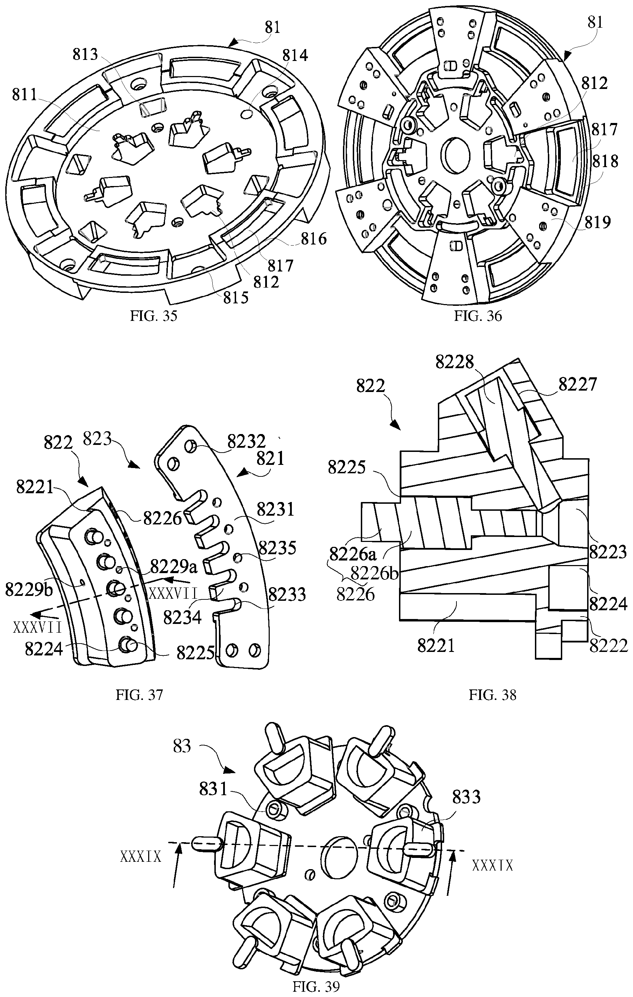

Referring to FIGS. 35 and 36, FIGS. 35 and 36 are structural schematic views of the support seat body 81 in FIG. 34 at different viewing angles. The support seat body 81 may be made of a rigid material such as plastic or metal. The support seat body 81 may have an overall plate-like structure. A placement groove 811 may be defined on a top of the support seat body 81 to leave a space for the card tray 65. The support seat body 81 defines a fastening hole 812 in the placement groove 811 for cooperating with the sample addition chamber component 83. The support seat body 81 is further arranged with a second positioning member 813 in the placement groove 811 for cooperating with the first positioning member 656 to position the detection card. In some embodiments, the second positioning member 813 may be a positioning groove defined on the support seat body 81 in the placement groove 811. In this way, the detection card can be positioned by the first positioning member 656, for example, a positioning block being placed in the second positioning member 813, for example, a positioning groove. In some embodiments, the shape of the second positioning member 813, for example, the positioning block, may be matched to the shape of the first positioning member 656, for example, the positioning groove. It can be understood that the positioning and fitting relationship between the support seat body 81 and the card tray 65 is not limited to the fitting relationship between the second positioning member 813 and the first positioning member 656. It may be a magnetic force between magnets, a magnetic force between electromagnets, etc. Of course, it may be other fitting relationships, which will not be repeated herein.

Understandably, the designations "first positioning member", "second positioning member", and "positioning member", etc. may be interchanged in some embodiments. For example, in some embodiments, the "first positioning member" in other embodiments is referred to as a "second positioning member", and correspondingly, the "second positioning member" in other embodiments is referred to as a "first positioning member".

The support seat body 81 defines a positioning hole 814 arranged in the placement groove 811. The positioning hole 814 may be arranged opposite the positioning holes 517, 576, and 6522, such that the light emitted by the positioning light generator 615 passes through the positioning holes 814, 517, 576, and 6522, and is received by the positioning light receiver 716, so as to achieve positioning of the detection card.

The support seat body 81 defines multiple extension slots 815 arranged around the periphery of the placement groove 811. The extension slots 815 are in communication with the placement groove 811 such that the support seat body 81 forms a mounting table 816 between each adjacent two extension slots 815, and the detection card can be placed on the mounting table 816. The extension slots 815 leave a space for the detection card such that the mounting table 816 supports and fixes the detection card.

The support seat body 81 defines a receiving hole 817 on the mounting table 816, such that the detection chamber component 82 can be mounted in the receiving hole 817.

The support seat body 81 has a recess 818 on a side close to the support frame 70 and opposite the mounting table 816 for mounting the detection chamber component 82. The receiving hole 817 is disposed in the recess 818. A mounting table 819 is arranged between each adjacent two recesses 818 for fixing the detection chamber component 82.

Referring to FIG. 34, the detection chamber component 82 is arranged in the support seat body 81, for example, in the receiving hole 817 and the recess 818. The detection chamber component 82 may include at least one light detection member 821, and the specific number of light detection members 821 may be one, two, three, four, five, six..., so as to mount the detection chamber component 82 in the recesses 818.

Referring to FIG. 37, FIG. 37 is a structural schematic view of the light detection member 821 in FIG. 34. The light detection member 821 may be arranged opposite a corresponding first heating member 541 such that the two cooperate to heat the detection card. The light detection member 821 may include a detecting seat 822 disposed in the support seat body 81, for example, the accommodating bore 817 and the recess 818, and a first clamping piece 823 for fastening the detecting seat 822 to the support seat body 81.

Referring to FIGS. 37 and 38, FIG. 38 is a cross-sectional schematic view along XXXVII-XXXVII in FIG. 37. The detecting seat 822 may include a detecting seat body 8221 disposed in the recess 818 of the support seat body 81. The detecting seat body 8221 may be made of a rigid material such as plastic or metal. The detecting seat body 8221 extends towards the receiving hole 817 to form an extension 8222 such that the extension 8222 extends into the receiving hole 817. The extension 8222 is arranged on a side of the support seat body 81 on which the mounting table 816 is arranged, and is flush with the surface of the mounting table 816, so as to enhance the appearance of the support seat 80.

The extension 8222 defines a detection slot 8223, such that a portion of the structure of the detection card can be placed in the detection slot 8223 on the side of the support seat body 81 on which the mounting table 816 is arranged.

In some embodiments, the extension 8222 defines a separation groove 8224 on a side of the detection slot 8223 close to the sample addition chamber component 83, such that a portion of the structure of the detection card is disposed in the separation groove 8224 on the side of the support seat body 81 on which the mounting table 816 is arranged.

The detection slot 8223 extends from the extension 8222 towards the detecting seat body 8221.

The detecting seat body 8221 is arranged with an excitation fiber channel 8225 in the extension direction of the detection slot 8223 for mounting an excitation fiber 8226. The excitation fiber channel 8225 is in communication with the detection slot 8223, such that the excitation fiber 8226 emits light, for example, an excitation light, into the detection slot 8223. In some embodiments, the extension direction of the excitation fiber channel 8225 may be consistent with the extension direction of the detection slot 8223. In some embodiments, the extension direction of the excitation fiber channel 8225 may be at an angle with the extension direction of the detection slot 8223, and the angle may be 0-75°. In some embodiments, the excitation fiber channel 8225 is inclined towards the sample addition chamber component 83 from the detection slot 8223.

In some embodiments, the excitation fiber channel 8225 is inclined from the detection slot 8223 towards the sample addition chamber component 83, and the extension direction of the excitation fiber channel 8225 may form an angle with the extension direction of the detection slot 8223, where the angle may be one of 0°, 15°, 30°, 45°, 60°, and 75°.

The excitation fiber 8226 may include an excitation fiber body 8226a and an excitation fiber connector 8226b disposed on an end of the excitation fiber body 8226a. The excitation fiber connector 8226b is disposed in the excitation fiber channel 8225. A connection between the excitation fiber body 8226a and the excitation fiber connector 8226b forms a fixing position for cooperating with the first clamping piece 823.

In some embodiments, the excitation fiber 8226, for example, the excitation fiber body 8226a, has a diameter of about 2.5 mm. Specifically, the diameter may be 2.5 mm.

The detecting seat body 8221 is arranged with a receiving fiber channel 8227 communicating with the detection slot 8223 in a position at an angle to the extension direction of the detection slot 8223. A receiving fiber 8228 is configured to receive the excitation light emitted by the excitation fiber 8226 and the fluorescence formed by the excitation light irradiating the detection card.

In some embodiments, the extension direction of the receiving fiber channel 8227 may form an angle with the extension direction of the detection slot 8223, and the angle may be 0-75°. In some embodiments, the excitation fiber channel 8225 is inclined away from the sampling chamber assembly 83 from the detection slot 8223.

In some embodiments, the receiving fiber channel 8227 is inclined from the detection slot 8223 away from the sample addition chamber component 83, and the extension direction of the receiving fiber channel 8227 may form an angle with the extension direction of the detection slot 8223, where the angle may be one of 0°, 15°, 30°, 45°, 60°, and 75°.

In some embodiments, the excitation fiber channel 8225 is inclined from the detection slot 8223 towards the sample addition chamber component 83, and the extension direction of the excitation fiber channel 8225 may form an angle with the extension direction of the detection slot 8223, where the angle may be 45°. The receiving fiber channel 8227 is inclined from the detection slot 8223 away from the sample addition chamber component 83, and the extension direction of the receiving fiber channel 8227 may form an angle with the extension direction of the detection slot 8223, where the angle may be 75°. That is, the extension direction of the receiving fiber channel 8227 may form an angle with the extension direction of the excitation fiber channel 8225, and the angle may be 120°. The signal-to-noise ratio of the light detection member 821 may be greater than 80dB.

In some embodiments, the extension direction of the excitation fiber channel 8225 may be consistent with the extension direction of the detection slot 8223. The receiving fiber channel 8227 is inclined away from the sampling chamber assembly 83 from the detection slot 8223, and the extension direction of the receiving fiber channel 8227 may form an angle with the extension direction of the detection slot 8223, where the angle may be 60°. That is, the extension direction of the receiving fiber channel 8227 may form an angle with the extension direction of the excitation fiber channel 8225, and the angle may be 60°. The signal-to-noise ratio of the light detection member 821 may be greater than 60dB.

The detecting seat body 8221 is arranged with a heating member storage groove 8229a on a side where the excitation fiber channel 8225 is arranged, for accommodating a heating device such as a heating resistor. The detecting seat body 8221 can heat the detection card through the heating device. The heating member in the heating member storage groove 8229a may be electrically connected to the second circuit board 84 to achieve heating under the control of the second circuit board 84.

The detecting seat body 8221 is arranged with a heating member storage groove 8229b on a side close to the sample addition chamber component 83, for accommodating a heating device such as a heating resistor. The detecting seat body 8221 can heat the detection card through the heating device. The heating member in the heating member storage groove 8229b may be electrically connected to the second circuit board 84 to achieve heating under the control of the second circuit board 84.

In some embodiments, the detecting seat body 8221 may be integrally structured with the support seat body 81.

Referring to FIG. 37, the first clamping piece 823 may be made of a rigid material such as plastic, metal, etc. The first clamping piece 823 may include a clamping body 8231. The clamping body 8231 may be in the form of a strip plate structure, and may of course be of other structures, which is not described in detail. The middle part of the clamping body 8231 may abut against a side of the detecting seat 822, for example, the detecting seat body 8221, where the excitation fiber channel 8225 is arranged. Each of two ends of the clamping body 8231 is arranged with a fixing portion 8232 for being mounted and fixed to the mounting table 819 on a corresponding side of the detecting seat 822, for example, the detecting seat body 8221, and the fixing connection may be achieved by means of a snap fit, a plug-in connection, welding, gluing, etc. Multiple clamping holes 8233 are defined along an edge on the middle of the clamping body 8231 to leave a space for the excitation fiber 8226. The clamping body 8231 forms a tooth 8234 between each adjacent two clamping holes 8233. The clamping body 8231 abuts against a side of the detecting seat 822, for example, the detecting seat body 8221, where the excitation fiber channel 8225 is arranged, such that the excitation fiber connector 8226b is clamped by the two adjacent teeth 8234 in the excitation fiber channel 8225, such that the excitation fiber body 8226a is secured in the excitation fiber optic channel 8225 through the two adjacent teeth 8234, and the excitation fiber optic body 8226a is disposed between the two adjacent teeth 8234. In this way, the fixing of the light detection member 821 is achieved.

In some embodiments, in order to leave a space for the heating member storage groove 8229a, the clamping body 8231 defines a perforation 8235 at a position opposite the heating member storage groove 8229a, such that the heating device extends from the perforation 8235 into the heating member storage groove 8229a.

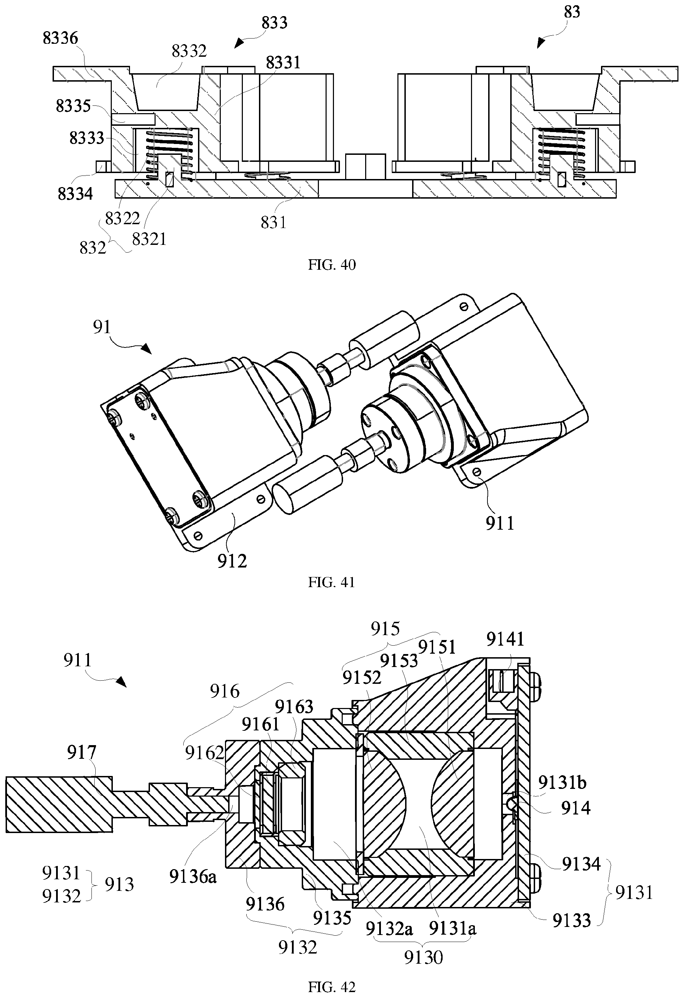

Referring to FIGS. 39 and 40, FIG. 39 is a structural schematic view of the sample addition chamber component 83 in FIG. 34, and FIG. 40 is a cross-sectional schematic view of the sample addition chamber component 83 along line XXXIX-XXXIX in FIG. 39. The sample addition chamber component 83 may include a holding plate 831 fixedly arranged on the support plate 724, a support component 832 arranged on the holding plate 831, and a sample addition chamber mount 833 arranged on the support component 832. The sample addition chamber mount 833 is configured to fix the detection card and to heat the detection card. The sample addition chamber mount 833 cooperates with the heating component 54, for example, the second heating member 542, to heat the detection card.

The holding plate 831 may be made of a rigid material such as plastic or metal. The holding plate 831 may be in the form of a plate, but may alternatively have other forms. The holding plate 831 is fixed to the support plate 724 by a screw connection, a plug-in connection, welding, gluing, etc. In some embodiments, the holding plate 831 is fixed to the support seat body 81 by a screw connection, a plug-in connection, welding, gluing, etc. In some embodiments, the holding plate 831 may be omitted, and the support component 832 may be directly fixedly connected to the support plate 724. In some embodiments, in a case of the support plate 724 being omitted, the holding plate 831 may be directly fixedly connected to the first fastening plate 722 and the second fastening plate 723. In some embodiments, in a case of the support plate 724 being omitted, the holding plate 831 may be fixedly connected to the support portion 715.

The support component 832 may include a sleeve pillar 8321 arranged on a side of the holding plate 831 away from the support plate 724 and a spring 8322 arranged on the sleeve pillar 8321. The spring 8322 abuts against the holding plate 831 at one end and against the sample addition chamber mount 833 at the other end, for adjusting the distance between the sample addition chamber mount 833 and the holding plate 831. In some embodiments, the sleeve pillar 8321 may be omitted. In some embodiments, the spring 8322 may be replaced by an elastic element made of a different material. In some embodiments, the sleeve pillar 8321 may be part of the holding plate 831. In some embodiments, the sleeve pillar 8321 may be arranged on the sample addition chamber mount 833. In some embodiments, the spring 8322 may be replaced by other elastic members such as plastic, torsion springs, metal strips with elastic deformation, etc.

The sample addition chamber mount 833 is configured to place the detection card. The sample addition chamber mount 833 may include a mount body 8331. The mount body 8331 may be made of a rigid and heat-conductive material such as plastic or metal.

The mount body 8331 is configured to be arranged in the support seat body 81, for example, the fastening hole 812, to slide in the fastening hole 812. The mount body 8331 defines a sample addition chamber receiving groove 8332 on a side away from the holding plate 831 for receiving the detection card. A sleeve groove 8333 is defined on a side of the mount body 8331 facing the support component 832, such that the spring 8322 abuts against the mount body 8331 when being placed in the sleeve groove 8333. In some embodiments, the sleeve groove 8333 may be omitted.

A snap-in edge 8334 is arranged on an edge on a side of the mount body 8331 facing the support component 832, such that the mount body 8331 extends from a side of the support seat body 81 towards the support component 832 into the fastening hole 812, thereby preventing the mount body 8331 from slipping on the support seat body 81 on a side of the support seat body 81 away from the support component 832.

The mount body 8331 defines a heating member storage groove 8335 for accommodating a heating device such as a heating resistor, such that the mount body 8331 can heat the detection card. The heating device may be electrically connected to the second circuit board 84 to achieve heating under the control of the second circuit board 84. In some embodiments, the heating member storage groove 8335 is disposed between the sleeve groove 8333 and the sample addition chamber receiving groove 8332.

In order to better heat the detection card, avoid condensation of heated water vapor affecting the detection process, and improve detection accuracy, the mount body 8331 may be further arranged with an abutting portion 8336 arranged on an edge of the sample addition chamber receiving groove 8332 to abut against the detection card. In some embodiments, the abutting portion 8336 may further be configured to position the detection card.

Referring to FIG. 34, the second circuit board 84 may be electrically connected to the heating device in the detection chamber component 82 and the heating device in the sample addition chamber component 83, respectively, in order to control the heating devices for heating.

The second circuit board 84 may be in the form of a ring structure and may be sleeved around the sample addition chamber component 83. The second circuit board 84 may be directly fixed to the support seat body 81 on a side close to the support frame 70, for example, the support plate 724, by a screw connection, a snap fit, a plug-in connection, welding, gluing, etc. In some embodiments, the second circuit board 84 may be directly fixed to the support frame 70, for example, the support plate 724. In some embodiments, the second circuit board 84 may be directly fixed to the support frame 70, for example, the support portion 715. In some embodiments, the second circuit board 84 may be directly fixed to the sample addition chamber component 83, for example, the holding plate 831.

Understandably, the designations "first circuit board", "second circuit board", and "circuit board", etc. may be interchanged in some embodiments. For example, in some embodiments, the "first circuit board" in other embodiments is referred to as a "second circuit board", and correspondingly, the "second circuit board" in other embodiments is referred to as a "first circuit board".

In some embodiments, the second circuit board 84 may be omitted when it is not required to share the working pressure with the control circuit board 40, and the heating device in the detection chamber component 82 and the heating device in the sample addition chamber component 83 may be directly electrically connected to the control circuit board 40.

Referring to FIG. 33, the detection component 90 may include a light generator 91 arranged on the support frame 70, for example, the base body 711, a light-receiving component 92 arranged on the support frame 70, for example, the base body 711, and a detection chamber component 82 arranged on the support seat 80, for example, the support seat body 81 (i.e. the detection chamber component 82 of the support seat 80 described earlier, which may be an element shared by the support seat 80 and the detection assembly 90). The light generator 91 and the light-receiving component 92 are each electrically connected to the control circuit board 40. The light generator 91 is configured to generate excitation light and may generate excitation light under the control of the control circuit board 40. The excitation light can be transmitted to the detection chamber component 82 to excite the detection card and generate fluorescence, which can be received by the light-receiving component 92 to generate a detection signal under the control of the control circuit board 40. The detection signal is transmitted to the control circuit board 40 and controls the same to process and generate diagnostic data.

Further referring to FIGS. 33 and 41, FIG. 41 is a structural schematic view of the light generator 91 in FIG. 33. The number of the light generators 91 may be one or more than one. The number of the light generators 91 may be one of 2, 3, 4, 5, 6, etc. In some embodiments, the number of the light generators 91 may be 2. That is, the light generators 91 include a first light generator 911 and a second light generator 912.

Both the first light generator 911 and the second light generator 912 may be fixed to the fixing seat 72, for example, the mounting seat 721, by means of a screw connection, a snap fit, a plug-in connection, welding, gluing, etc. An excitation light output end of the first light generator 911 may pass through the fixing hole 7221 to be fixed to the first fastening plate 722. An excitation light output end of the second light generator 912 may pass through the fixing hole 7231 to be fixed to the second fastening plate 723.

Referring to FIG. 42, FIG. 42 is a cross-sectional schematic view of the first light generator 91 in FIG. 41. The light generator 91, for example, the first light generator 911, may include a main housing 913 arranged with a containment cavity 9130, a light source 914 arranged in the containment cavity 9130, a first lens module 915 arranged in the containment cavity 9130, a functional diaphragm group 916 arranged in the containment cavity 9130, and an excitation fiber 917 extending into the containment cavity 9130. The light source 914 may be electrically connected to the control circuit board 40 via wiring and configured to generate excitation light under the control of the control circuit board 40. The excitation light is successively coupled into the excitation fiber 917 after passing through the first lens module 915 and the functional diaphragm group 916.

The main housing 913 may include a front housing 9131 arranged with a first sub-containment cavity 9131a and a rear housing 9132 which is snapped together with the front housing 9131 and arranged with a second sub-containment cavity 9132a. The first sub-containment cavity 9131a and the second sub-containment cavity 9132a form the containment cavity 9130.

The front housing 9131 may include a front housing body 9133 that is snapped together with the rear housing 9132 and a front housing cover 9134 that is disposed on a side of the front housing body 9133 away from the rear housing 9132.

The front housing body 9133 may be made of a rigid material such as plastic or metal. The front housing body 9133 defines the first sub-containment cavity 9131a. The front housing body 9133 defines a first storage hole 9131b on a side away from the rear housing 9132, which is in communication with the first sub-containment cavity 9131a, to leave a space for the light source 914.

The front housing cover 9134 may be made of a rigid material such as plastic or metal. The front housing cover 9134 may be snapped together with the front housing body 9133, for example by means of a screw connection, a snap fit, a plug-in connection, welding, gluing, etc. The front housing cover 9134 may include a wiring electrically connected to the light source 914 and a first electrical interface 9141 electrically connected to the wiring. The first electrical interface 9141 may be arranged on a side of the front housing cover 9134 that is snapped together with the front housing cover 9134. The first electrical interface 9141 may be electrically connected to the control circuit board 40.

The rear housing 9132 may include a rear housing body 9135 that is snapped together with the front housing 9131, for example, the front housing body 9133, and a rear housing cover 9136 that is arranged on a side of the rear housing body 9135 away from the front housing 9131, for example, the front housing body 9133.

The rear housing body 9135 may be made of a rigid material such as plastic or metal. The rear housing body 9135 defines the second sub-containment cavity 9132a. The rear housing body 9135 is fixedly connected to the front housing 9131, for example, the front housing body 9133, by means of a screw connection, a snap fit, a plug-in connection, welding, gluing, etc.

The rear housing cover 9136 may be made of a rigid material such as plastic or metal. The rear housing cover 9136 defines a second storage hole 9136a communicating with the second sub-containment cavity 9132a for mounting the excitation fiber 917.

The light source 914 may be an LED, in particular, it may be a blue LED with a peak wavelength of 470 nm. Of course, it may be another type of light source. The light source 914 may be electrically connected to the wiring on the front housing cover 9134 to achieve an electrical connection to the control circuit board 40. The light source 914 is arranged on a side of the front housing cover 9134 close to the front housing body 9133. The light source 914 is arranged opposite the first storage hole 9131b. In some embodiments, the light source 914 extends into the first storage hole 9131b. Of course, the light source 914 may extend into the first sub-containment cavity 9131a from the first storage hole 9131b.

The first lens module 915 is arranged in the first sub-containment cavity 9131a. An optical axis of the first lens module 915 may be the same as that of the light source 914, such that the excitation light emitted by the light source 914 can pass through. In this way, the excitation light can be beaming reduced and focal-length reduced, thereby better coupling the excitation light into the excitation fiber 917. The first lens module 915 may include a first lens 9151, a second lens 9152 having an optical axis consistent with that of the first lens 9151, and a first retaining ring 9153 for fixing the first lens 9151 and the second lens 9152. The optical axis of the first lens 9151 is the same as that of the light source 914. The optical axis of the first lens 9151 or the second lens 9152 may be referred to as the optical axis of the first lens module 915.

In some embodiments, the lenses, e.g., the first lens 9151 and the second lens 9152, are positive lenses having a positive focal length. The lenses, e.g., the first lens 9151 and the second lens 9152, may be, in particular, plano-convex lenses. A plano-convex lens is a positive lens. The main functions of a plano-convex lens in an optical system are beam expansion, imaging, beam collimation, focusing collimation, beam collimation point light source, etc. A plano-convex lens has one side that is convex and one side that is flat.

The incident surface of the first lens 9151 is flat and the outgoing surface is convex. The incident surface of the second lens 9152 is convex and the outgoing surface is flat. The incident surface of the first lens 9151 is opposite the light source 914. The incident surface of the second lens 9152 is opposite the outgoing surface of the first lens 9151. The outgoing surface of the second lens 9152 is opposite the functional diaphragm group 916.

The first retaining ring 9153 may be sleeved around the first lens 9151 and the second lens 9152 to fix the first lens 9151 and the second lens 9152. When the first lens module 915 is placed in the first sub-containment cavity 9131a, a side of the first retaining ring 9153 facing the light source 914 abuts against the front housing 9131, for example, the front housing body 9133, and a side of the first retaining ring 9153 away from the light source 914 abuts against the rear housing 9132, for example, the rear housing body 9135, to fix the front housing 9131 and the rear housing 9132 to the first lens module 915.

It is understood that in some embodiments, the first lens module 915 may include other types of lenses, such as convex lenses, concave lenses, etc., which are not described in detail. The first lens 9151 and the second lens 9152 in the first lens module 915 may be arranged in other ways than those mentioned above. For example, the first lens 9151 and the second lens 9152 may be directly fixed to the front housing 9131, for example, the front housing body 9133, by means of a screw connection, a snap fit, a plug-in connection, gluing, etc.

The functional diaphragm group 916 has functions such as stray light filtering and excitation light adjustment. The functional diaphragm group 916 may include a filter 9161, a light homogenizer 9162, and a second retaining ring 9163 arranged in the second sub-containment cavity 9132a.

The filter 9161 is configured to receive the excitation light transmitted through the first lens module 915, for example, the second lens 9152, in order to filter out stray light in the excitation light. The filter 9161 is also called a fluorescence filter. A fluorescent filter is a key optical component applied in life science instruments and biomedicine, and its main function is to select and separate the characteristic band spectra of the excitation light and emitted fluorescence of substances in fluorescence testing and analysis systems in biology and medicine, which will then be observed through a fluorescence microscope. **In** some embodiments, the filter 9161 may be an excitation filter. An excitation filter, also known as an exciting filter or exciter filter, is a filter in a fluorescence microscope or fluorescence imaging system that only allows light of the excitation fluorescence wavelength to pass through. Of course, nowadays, laser light (i.e., the light source 914 can emit laser light) can be used directly as excitation light.

The filter 9161 abuts against the rear housing 9132, for example, the rear housing body 9135, on a side away from the first lens module 915. The filter 9161 abuts against the second retaining ring 9163 on a side close to the first lens module 915, for example, the second lens 9152, to fix the filter 9161 and the rear housing 9132. Of course, the filter 9161 may be fixed to the rear housing 9132, for example, the rear housing body 9135, in other ways, for example by means of a screw connection, a snap fit, a plug-in connection, gluing, etc.

**In** some embodiments, the filter 9161 may be an excitation filter. Specifically, the filter 9161 may be an excitation filter with an excitation wavelength of 450-475 nm (EX450-475).

The light homogenizer 9162 is configured to receive the excitation light after passing through the filter 9161. The light homogenizer 9162, also known as an even light piece, diffuser, or homogenizer, is configured to convert the excitation light into a uniform light spot of any shape.

The light homogenizer 9162 is configured to receive the excitation light passing through the filter 9161. A side of the light homogenizer 9162 close to the filter 9161 abuts against the filter 9161, and a side of the light homogenizer 9162 away from the filter 9161 abuts against the rear housing 9132, for example, the rear housing cover 9136, to fix the light homogenizer 9162. Of course, the light homogenizer 9162 may be fixed to the rear housing 9132 in other ways, for example by means of a screw connection, a snap fit, a plug-in connection, gluing, etc.

An end of the excitation fiber 917 may extend into the rear housing 9132, for example, the second storage hole 9136a, such that the excitation light passing through the light homogenizer 9162 enters the excitation fiber 917. Of course, the excitation fiber 917 may extend into the rear housing 9132, for example, the second sub-containment cavity 9132a.

The other end of the excitation fiber 917 may be coupled to at least one excitation fiber 8226, such that multiple light detection members 821 can be detected using the same excitation light, which may reduce the detection error caused by different excitation lights. In some embodiments, the number of the light detection members 821 is 6, and the excitation fiber 917 of the first light generator 911 may be coupled to the excitation fibers 8226 of three light detection members 821. The excitation fiber 917 of the second light generator 912 may be coupled to the excitation fibers 8226 of the three light detection members 821.

In some embodiments, the diameter of the excitation fiber 917 is about 2.5 mm. In particular, the diameter may be 2.5 mm.

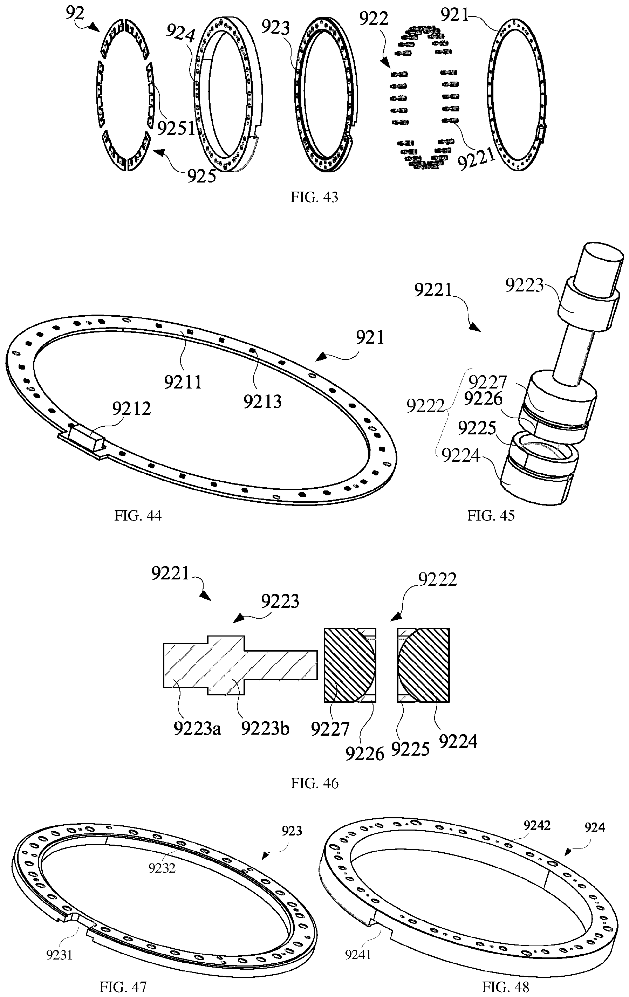

Referring to FIG. 43, FIG. 43 is an exploded view of the light-receiving component 92 in FIG. 33. The light-receiving component 92 may include a light-receiving member 921 electrically connected to the control circuit board 40, a light path component 922 for optical path connection with the detection chamber component 82, a first washer 923 arranged on the light-receiving member 921 and for fixing the light path component 922, a second washer 924 arranged on the first washer 923 and for fixing the light path component 922, and a clamping component 925 arranged on the second washer 924 and for fixing the light path component 922. Fluorescence is transmitted via the light path component 922 to the light-receiving member 921. The light-receiving member 921 generates a detection signal and transmits the detection signal to the control circuit board 40.

Referring to FIG. 44, FIG. 44 is a mechanism view of the light-receiving member 921 in FIG. 33. The light-receiving member 921 may include a fixing plate 9211 formed in the shape of a loop and arranged with wiring, a second electrical interface 9212 arranged on the fixing plate 9211 and electrically connected to the wiring, and light sensors 9213 arranged peripherally on the fixing plate 9211 and electrically connected to the wiring. The light-receiving member 921 may be configured to receive fluorescence. The light-receiving member 921 is electrically connected to the control circuit board 40 via the second electrical interface 9212 in order to transmit the detection signal generated by the fluorescent light to the control circuit board 40.

The fixing plate 9211 may be arranged on the support frame 70, for example, the base body 711, at the isolation groove 713 and the fixing portion 714. The fixing plate 9211 may be spaced from the base body 711 at the isolation groove 713. Of course, the fixing plate 9211 may extend into the isolation groove 713 and form a snap-fit structure with the base body 711. The fixing plate 9211 may be connected and fixed to the base body 711 by means of a screw connection, a snap fit, a plug-in connection, welding, gluing, etc. at the fixing portion 714. The fixing plate 9211 may surround the fixing groove 712. In some embodiments, the fixing plate 9211 may be similar in size to the support seat 80, for example, the support seat body 81, or even the same size, such that the receiving fiber channel 8227 of the support seat 80, for example, the detection chamber component 82, is disposed above the light sensors 9213, or even directly above the light sensors 9213, thereby reducing the difficulty of arranging the receiving fiber 8228.

In some embodiments, the light sensor 9213 is a photodiode.

Referring to FIG. 43, the light path component 922 may include at least one sub-light path component 9221. In some embodiments, the number of the sub-light path components 9221 may correspond to the number of the light sensors 9213 of the light-receiving member 921, such that the sub-light path components 9221 correspond to the light sensors 9213 in a one-to-one correspondence.

Referring to FIGS. 45 and 46, FIG. 45 is a structural schematic view of the sub-light path component 9221 in FIG. 43, and FIG. 46 is a cross-sectional schematic view of the sub-light path component 9221 in FIG. 45. The sub-light path component 9221 may include a second lens module 9222 for transmitting fluorescence to the light sensor 9213 and a receiving fiber 9223 for transmitting fluorescence to the second lens module 9222.

The second lens module 9222 may include a third lens 9224 arranged in the first washer 923, a third retaining ring 9225 for fixing the third lens 9224 in the first washer 923, a fourth retaining ring 9226 arranged in the second washer 924, and a fourth lens 9227 fixed in the second washer 924 by the fourth retaining ring 9226.

Understandably, the designations "first lens", "second lens", "third lens", "fourth lens", and "lens", etc. may be interchanged in some embodiments. For example, in some embodiments, the "first lens" in other embodiments is referred to as a "second lens" and, accordingly, the "second lens" in other embodiments is referred to as a "first lens".

In some embodiments, the lenses, for example, the third lens 9224 and the fourth lens 9227, are positive lenses having a positive focal length. The lenses, for example, the third lens 9224 and the fourth lens 9227, may be, in particular, plano-convex lenses. A plano-convex lens is a positive lens. The main functions of a plano-convex lens in an optical system are beam expansion, imaging, beam collimation, focusing collimation, beam collimation point light source, etc. A plano-convex lens has one side that is convex and one side that is flat.

The incident surface of the third lens 9224 is convex and the outgoing surface is flat. The incident surface of the fourth lens 9227 is flat and the outgoing surface is convex. The incident surface of the third lens 9224 is arranged opposite to the outgoing surface of the fourth lens 9227. The outgoing surface of the third lens 9224 is arranged opposite the light sensor 9213. The incoming surface of the fourth lens 9227 is arranged opposite the receiving fiber 9223.

In some embodiments, an emission filter (emitting filter, barrier filter, emitter) may further be arranged between the third lens 9224 and the fourth lens 9227. An emission filter is a filter configured to selectively transmit the fluorescence emitted by the detected substance, and it cuts off light in other ranges except for the spontaneous fluorescence of the detected substance. The wavelength of the emitted light is usually longer than that of the excitation light. A narrowband filter, a bandpass filter, or a long-bandpass filter may be selected as the emission filter.

In some embodiments, the emission filter may be, in particular, an excitation filter of the type EM522-645 (emission wavelength 522-645 nm).

The third retaining ring 9225 is arranged on the incident side of the third lens 9224 to press the third lens 9224 against the first washer 923, thereby fixing the third lens 9224.

The fourth retaining ring 9226 is arranged on the outgoing side of the fourth lens 9227 to press the fourth lens 9227 against the second washer 924, thereby fixing the fourth lens 9227.

Understandably, the designations "first retaining ring", "second retaining ring", "third retaining ring", "fourth retaining ring", and "retaining ring", etc. may be interchanged in some embodiments. For example, in some embodiments, the "first retaining ring" in other embodiments is referred to as a "second retaining ring," and correspondingly, the "second retaining ring" in other embodiments is referred to as a "first retaining ring."

It is understood that in some embodiments, the second lens module 9222 may further include other types of lenses such as convex lenses, concave lenses, etc., and other functional diaphragms such as a light homogenizer, a light filter, etc., without being redundant. The third lens 9224 and the fourth lens 9227 may be arranged in other ways than those mentioned above. For example, the third lens 9224 may be directly fixed to the first washer 923 by means of adhesion, insertion, snap fit, screwing, etc. For example, the fourth lens 9227 may be directly fixed to the second washer 924 by means of a screw connection, a snap fit, a plug-in connection, gluing, etc.

In some embodiments, the second lens module 9222 is arranged with an emission filter between the third lens 9224 and the fourth lens 9227. An emission filter is a filter configured to selectively transmit the fluorescence emitted by the detected substance, and it cuts off light in other ranges except for the spontaneous fluorescence of the detected substance. The wavelength of the emitted light is usually longer than that of the excitation light. A narrowband filter, a bandpass filter, or a long-bandpass filter may be selected as the emission filter.

In some embodiments, the emission filter may be disposed between the first washer 923 and the second washer 924 to achieve a fixed connection of the emission filter.

The receiving fiber 9223 may include a receiving fiber body 9223a and a receiving fiber connector 9223b disposed on an end of the receiving fiber body 9223a. The receiving fiber connector 9223b is disposed in the first washer 923 and/or the second washer 924 to transmit fluorescence to the second lens module 9222, for example, the fourth lens 9227. A connection between the receiving fiber body 9223a and the receiving fiber connector 9223b forms a fixing position for cooperating with the clamping component 925. In some embodiments, the receiving fiber 9223, for example, the receiving fiber body 9223a, has a diameter of about 2.5 mm. Specifically, the diameter may be 2.5 mm.

An end of the receiving fiber 9223 may be connected to the receiving fiber 8228 such that light is transmitted to the light sensor 9213 via the receiving fiber 8228 and the receiving fiber 9223.

Referring to FIG. 47, FIG. 47 is a structural schematic view of the first washer 923 in FIG. 43. The first washer 923 may be made of a rigid material such as metal or plastic. The first washer 923 may be ring-shaped and may be shaped to match the shape of the fixing plate 9211 such that the first washer 923 and the fixing plate 9211 can be arranged in a stacked manner.

The first washer 923 and the fixing plate 9211 may be fixed together by a screw connection, a snap fit, welding, gluing, etc.

The first washer 923 defines a clearance notch 9231 to leave a space for the light-receiving member 921, for example, the second electrical interface 9212. When the first washer 923 is arranged in a stack with the fixing plate 9211, the second electrical interface 9212 can be arranged in the clearance notch 9231.

The first washer 923 defines multiple first filling holes 9232 distributed peripherally, for mounting the second lens module 9222, for example, the third lens 9224 and the third retaining ring 9225. A side of the third lens 9224 facing the light sensor 9213 may abut against the first washer 923. A side of the third lens 9224 away from the light sensor 9213 may abut against the third retaining ring 9225, such that the third retaining ring 9225 is fixedly connected to the third lens 9224 in conjunction with the first washer 923.

The first filling holes 9232 may be arranged opposite the light sensors 9213 such that the light sensors 9213 can receive fluorescence. In some embodiments, the light sensor 9213 extends into the first filling hole 9232. The outgoing surface of the third lens 9224 may abut against the first washer 923. The third retaining ring 9225 may be fixedly connected to the first washer 923 to fixedly connect the third lens 9224.

Referring to FIG. 48, FIG. 48 is a structural schematic view of the second washer 924 in FIG. 43. The second washer 924 may be made of a rigid material such as metal or plastic. The second washer 924 may be in the form of a ring structure, and may be specifically shaped to match the first washer 923 such that the first washer 923 and the second washer 924 can be arranged in a stacked manner. The second washer 924 defines a clearance notch 9241 opposite the clearance notch 9231 to leave a space for the second electrical interface 9212. When the second washer 924, the first washer 923, and the fixing plate 9211 are arranged in a stack, the second electrical interface 9212 can be arranged in the clearance notch 9231 and the clearance notch 9241.

The first washer 923 may be fixed together with the second washer 924 by a screw connection, a snap fit, welding, gluing, etc. In some embodiments, the first washer 923 may be integrally structured with the second washer 924.

The second washer 924 defines multiple second filling holes 9242 distributed peripherally, for mounting the second lens module 9222, for example, the fourth lens 9227 and the fourth retaining ring 9226. The second filling holes 9242 may be arranged opposite the first filling holes 9232 such that the light sensors 9213 can receive fluorescence. A side of the fourth lens 9227 facing the light sensor 9213 may abut against the fourth retaining ring 9226. A side of the fourth lens 9227 away from the light sensor 9213 may abut against the second washer 924, such that the fourth retaining ring 9226 is fixedly connected to the fourth lens 9227 in conjunction with the second washer 924. The receiving fiber connector 9223b of the receiving fiber 9223 may extend away from the second washer 924 into the second filling hole 9242.

It is understood that the first washer 923 and the second washer 924 can form a component housing, and the first filling hole 9232 is connected to the second filling hole 9242 to form a filling hole.

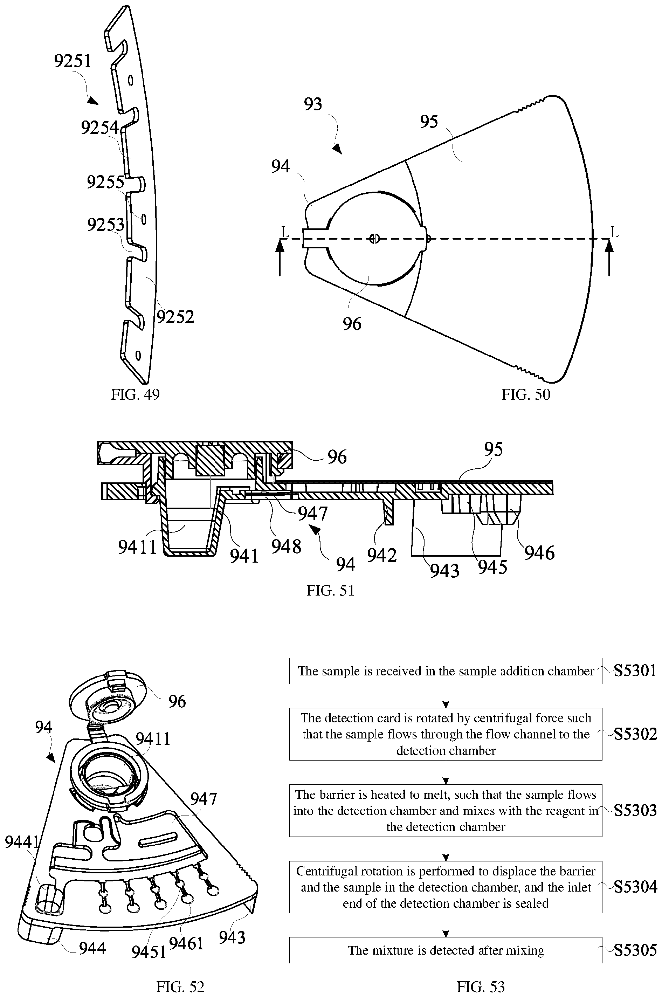

Referring to FIG. 43, the clamping component 925 is arranged on a side of the second washer 924 away from the first washer 923, and is configured to fix the receiving fiber 9223. The clamping component 925 may include multiple second clamping pieces 9251 distributed peripherally. Referring to FIG. 49, FIG. 49 is a structural schematic view of the second clamping piece 9251 in FIG. 43. The second clamping piece 9251 may be made of a rigid material such as plastic or metal. The second clamping piece 9251 may include a clamping body 9252. The clamping body 9252 may be structured as a strip-shaped body such that it can be arranged on the second washer 924. The clamping body 9252 defines multiple clamping holes 9253 along an extension direction thereof. The clamping holes 9253 extend inwardly from an edge. A tooth 9254 is formed between each adjacent two clamping holes 9253. By attaching the clamping body 9252 to a side of the second washer 924 away from the first washer 923, the receiving fiber connector 9223b is caught in the second filling hole 9242 by the teeth 9254, such that the receiving fiber body 9223a is disposed between two adjacent teeth 9254. In this way, a fixed connection between the receiving fiber 9223 and the second washer 924 is achieved.

Understandably, the designations "first clamping piece", "second clamping piece", and "clamping piece", etc. may be interchanged in some embodiments. For example, in some embodiments, the "first clamping piece" in other embodiments is referred to as a "second clamping piece", and correspondingly, the "second clamping piece" in other embodiments is referred to as a "first clamping piece".

A fixing portion 9255 is arranged on the clamping body 9252 to achieve a fixed connection between the clamping body 9252 and the second washer 924. In some embodiments, the fixing portion 9255 may be perforated, such that a structure such as a screw bolt can be passed through the fixing portion 9255, through the second washer 924 and the first washer 923, and then screwed to the light-receiving member 921, for example, the fixing plate 9211.

It can be understood that the clamping body 9252 may be connected and fixed to the second washer 924 in other ways, such as a snap fit or a plug-in connection, without being repetitive.

In some embodiments, all the second clamping pieces 9251 in the clamping component 925 are integrally formed.

Referring again to FIGS. 1 and 2, the control circuit board 40 may include a first sub-control circuit board 41 fixed to the rack 10, for example, the circuit mounting plate 13, and a second sub-control circuit board 42 disposed on a top of the rack 10, for example, the top plate 111. The first sub-control circuit board 41 is electrically connected to the second sub-control circuit board 42.

The first sub-control circuit board 41 may be arranged on the connecting post 1312 of the circuit mounting plate 13 in the rack 10, such that the first sub-control circuit board 41 is not directly connected to the mounting plate body 131. Of course, in some embodiments where the connecting post 1312 is omitted, the first sub-control circuit board 41 may be directly fixed to the mounting plate body 131.

The first sub-control circuit board 41 may be electrically connected to the rack 10, for example, the first drive member 1212, in order to control the sliding position of the detection card conveying seat 20 relative to the rack 10.

The first sub-control circuit board 41 may be electrically connected to the pressure plate 50, for example, the first circuit board 55, in order to control the electromagnetic member 52 to magnetically attract the pressing member 53, thereby controlling the heating component 54 to heat the detection card.

The first sub-control circuit board 41 may be electrically connected to the transporting assembly 60, for example, the second drive member 6141, in order to control the third drive member 64 and the card tray 65 to slide relative to the sliding frame 61.

The first sub-control circuit board 41 may be electrically connected to the transporting assembly 60, for example, the third drive member 64, in order to control the third drive member 64 to drive the card tray 65 to centrifuge the detection card.

The first sub-control circuit board 41 may be electrically connected to the detection chamber component 82, for example, a heating device, in order to control the detecting seat 822 to heat the detection card.

The first sub-control circuit board 41 may be electrically connected to the sample addition chamber component 83, for example, a heating device, in order to control the sample addition chamber seat 833 to heat the detection card.

The first sub-control circuit board 41 may be electrically connected to the detection assembly 90, for example, the light source 914, in order to control the light source 914 to emit excitation light.

The first sub-control circuit board 41 may be electrically connected to the detection assembly 90, for example, the light sensor 9213, in order to control the light sensor 9213 to receive fluorescence.

The first sub-control circuit board 41 may be electrically connected to the rack 10, for example, the first limiting switch 15, and the detection card conveying seat 20, for example, the light sensor 616, in order to control the sliding position of the card tray 65 driven by the third drive member 64 in the transporting member 62.

The first sub-control circuit board 41 may be electrically connected to the rack 10, for example, the first sub-limiting switch 162 and the second sub-limiting switch 163, in order to control the sliding position of the transporting assembly 60.

The first sub-control circuit board 41 may be electrically connected to the transporting member 62, for example, the positioning light generator 615, and the support frame 70, for example, the positioning light receiver 716, in order to control the position of the detection card.

The second sub-control circuit board 42 may be arranged on the top plate 111 of the rack 10. In some embodiments, when the molecular diagnostic device 100 is arranged with a housing, the second sub-control circuit board 42 may be arranged in a position, opposite the top plate 111, of the housing.

The second sub-control circuit board 42 may be electrically connected to an output device such as a display or printer to output diagnostic data of the molecular diagnostic device 100 via the output device.

The second sub-control circuit board 42 may be electrically connected to an input device such as a display, a keyboard, and the code scanning device 14, such that a control command can be input to the molecular diagnostic device 100 via the input device, for example, to the control circuit board 40, to enable the molecular diagnostic device 100 to control the detection card conveying seat 20 and/or the detection card detecting seat 30 via the control circuit board 40.

In some embodiments, one of the second sub-control circuit board 42 and the first sub-control circuit board 41 may be omitted, and the two may be integrated on a single sub-control circuit board.

Next, a detection card is described, which can be applied in the molecular diagnostic device 100 of the above embodiments to complete the detection of a sample loaded on the detection card and further process to form diagnostic data.

Referring to FIG. 50, FIG. 50 is a structural schematic view of a detection card 93 according to some embodiments of the present disclosure. The detection card 93 is also referred to as a molecular diagnostic centrifugal detection/test card. The detection card 93 may include a card body 94 arranged with a sample addition chamber, a flow channel, a waste liquid chamber, an isolation chamber, and a detection chamber, an isolation layer 95 covering a side of the card body 94, and a cover 96 covering the sample addition chamber of the card body 94.

Further referring to FIGS. 50, 51, and 52, FIG. 51 is a cross-sectional schematic view of the detection card 93 along L-L in FIG. 50, and FIG. 52 is a perspective structural schematic view of the detection card 93 in FIG. 50. The card body 94 is made of a rigid material such as plastic. Specifically, the card body 94 may be made of ABS (Acrylonitrile Butadiene Styrene plastic), PDMS (Polydimethylsiloxane), PC (Polycarbonate), PMMA (Polymethyl methacrylate), PS (general purpose polystyrene), PP (polypropylene), COC (copolymers of cycloolefin), or COP (cyclo olefin polymer), etc., processed by injection molding, CNC machining, or 3D printing.

The card body 94 may have an overall plate-like structure, which is generally fan-shaped, and may be specifically fan-ring-shaped, fan-leaf-shaped, or pie-shaped. For example, the card body 94 may be a fan-shaped structure formed by successively connecting two straight sides and one curved side end to end. For example, the card body 94 may be a fan-ring-shaped structure formed by successively connecting a straight side, an outer curved side, a straight side, and an inner curved side end to end. Of course, the card body 94 may have other shapes, which will not be described in detail.

In some embodiments, the angle between the two straight sides of the fan-shaped structure of the card body 94 may be 40°-60°, the diameter of the inner curved side may be 10mm-100mm, and the diameter of the outer curved side may be 100mm-200mm. By virtue of the detection card 93 of this size and structure, at least six detection cards 93 can be arranged in a row in a detection plane of the molecular diagnostic device 100 to form a circular surface, thereby enabling at least 6 detection cards 93 to be detected simultaneously, thereby improving the overall detection efficiency, which is able to cope with larger-scale detection needs.

The card body 94 is arranged with a mounting portion 941 that is protruded towards a side away from the isolation layer 95 and is disposed near a center of the outer curved side or the inner curved side. The card body 94 is arranged with a sample addition chamber 9411 that is recessed on a side near the isolation layer 95 and in a position opposite the mounting portion 941, for adding a sample to the sample addition chamber 9411. The sample addition chamber 9411 is mainly configured for a pretreatment of the sample (liquid sample), which may include one or more pretreatment methods, such as chemical treatment, thermal treatment, enzymatic treatment, and physical separation. In some embodiments, the volume of the sample addition chamber 9411 is about 200-2000 µL. The sample addition chamber 9411 may be pre-filled with a dry reagent, which may be air-dried/heated in place or be added to the sample addition chamber 9411 as lyophilized reagents.

A fourth snap-in part 942 is arranged on a side of the card body 94 away from the isolation layer 95 and near the outer curved side to cooperate with the transporting assembly 60, for example, the second snap-in part 654. In some embodiments, the fourth snap-in part 942 may be a protrusion. It is understood that the second snap-in part 654 may be positionally interchanged with the fourth snap-in part 942, and in addition, the second snap-in part 654 and the fourth snap-in part 942 may be fastened in other ways.

Understandably, the designations "first snap-in part", "second snap-in part", "third snap-in part", "fourth snap-in part", and "snap-in part", etc. may be interchanged in some embodiments. For example, in some embodiments, the "first snap-in part" in other embodiments is referred to as a "second snap-in part", and correspondingly, the "second snap-in part" in other embodiments is referred to as a "first snap-in part".

The card body 94 is arranged with a first limiting portion 943 bent at an edge portion of a straight side near the outer curved side to a side away from the isolation layer 95, and a second limiting portion 944 protruding at an edge portion of the other straight side near the outer curved side to a side away from the isolation layer 95. The first limiting portion 943 cooperates with the second limiting portion 944 to fix the detection card 93, such that the detection card 93 may be centrifuged smoothly. The card body 94 is arranged with a waste liquid chamber 9441 on a side close to the isolation layer 95 and recessed in a position opposite the second limiting portion 944. The card body 94 is arranged with multiple plug-in part groups uniformly distributed on the side away from the isolation layer 95 and between the first limiting portion 943 and the second limiting portion 944 along an extension direction of the outer curved side. Each of the plug-in part groups may include a first plug-in part 945 and a second plug-in part 946. A line connecting the first plug-in part 945 and the second plug-in part 946 may pass through the center of the outer curved side. The first plug-in part 945 is disposed between the mounting portion 941 and the second plug-in part 946. The first plug-in part 945 and the second plug-in part 946 may cooperate with the detection card detecting seat 30, for example, the separation groove 8224 and the detection slot 8223.

The card body 94 is arranged with a separation chamber 9451 recessed on the side close to the isolation layer 95 and in a position opposite the first plug-in part 945. The separation chamber 9451 is arranged with a fusible barrier. The barrier can be switched between a melted state and an unmelted state (typically a solid state). When not being tested with the detection card 93, the barrier may be controlled to be in an unmelted state, in which case the barrier prevents the sample from entering the detection chamber 9461 (as shown in FIG. 52) via the flow channel. In some embodiments, the barrier may be paraffin, microcrystalline wax, synthetic wax, or natural wax.

The card body 94 is arranged with a detection chamber 9461 recessed on the side close to the isolation layer 95 and opposite the second plug-in part 946. The detection chamber 9461 is arranged with a reagent therein. The separation chamber 9451 is in communication with the detection chamber 9461 on a side close to the isolation layer 95. The barrier in the separation chamber 9451 may further serve to seal off and separate the reagent and prevent it from flowing back into the separation chamber 9451, such that the reagent is maintained in the detection chamber 9461. When the detection is being performed, the barrier may be controlled to be in a melted state, in which case the sample can enter the detection chamber 9461 through the dispensing chamber 9411 to react with the reagent in the detection chamber 9461 to complete the detection.

A reagent and a fusible barrier may be arranged in a stack manner in the detection chamber 9461. In some embodiments, the barrier may be paraffin, microcrystalline wax, synthetic wax, or natural wax. The barrier is characterized in that it is solid at room temperature and low temperature, while becomes liquid after heating to a specific temperature, and has no inhibitory effect on the nucleic acid amplification reaction. In some embodiments, the reagent may be a dry reagent, which includes one or more of a primer and DNA (deoxyribonucleic acid) binding dye used in the amplification reaction, an enzyme, magnesium sulfate, potassium chloride, and dNTPs (nucleoside triphosphate). The dry reagent is loaded in a liquid state into the detection chamber 9461 and formed into a solid state by a drying process, where the temperature of the drying process is less than the melting temperature of the barrier, and the drying process includes air drying, heat drying, and freeze drying. During a detection heating process, both the reagent and the barrier are in a liquid state. Since the specific gravity of the barrier is less than that of the reagent, the barrier will be displaced out of the detection chamber 9461 under the action of a centrifugal field, thereby not affecting the reaction and detection.

In some embodiments, the barrier is loaded into the detection chamber 9461 in a melted state and shaped by natural solidification or cooling solidification. When the detection is not performed, the barrier may be controlled to be in an unmelted state, in which case the reagent may be sealed and stored in isolation by the barrier. When the detection is to be performed, the barrier may be controlled to be in a melted state, for example, by heating the detection card 93, such that the barrier melts when heated. In this case, the barrier can be removed from the detection chamber 9461 under the action of centrifugal force and flow to the isolation chamber 9451, and the sample can enter the detection chamber 9461, and then the barrier solidifies again to seal an opening of the detection chamber 9461, thereby forming an isolated seal between multiple detection chambers 9461, such that the detection chambers 9461 can react or be tested independently of each other.

The card body 94 is arranged with a flow channel 947 on the side close to the isolation layer 95 to connect the sample addition chamber 9411 with the separation chamber 9451.

The card body 94 defines an abutting groove 948 on a side away from the isolation layer 95 and opposite to the flow channel 947, so as to cooperate with the abutting portion 8336. For example, the abutting portion 8336 can be placed in the abutting groove 948 to heat a portion at the flow channel 947, so as to prevent the condensation of water vapor in the flow channel 947, thereby reducing the impact on the subsequent detection process and improving the detection accuracy. In some embodiments, the abutting groove 948 may be omitted.

The isolation layer 95 may be in the form of a membrane, but may alternatively be in other structures. The isolation layer 95 may be made of materials such as pressure-sensitive adhesives, UV-curable adhesives, or optical-grade double-sided adhesive tape, and may be made of a material similar to the card body 94. The isolation layer 95 may be attached to the card body 94 and be sealed and fixed by, for example, ultrasonic welding, laser welding, adhesive sealing, etc., to isolate the flow channel 947, the waste liquid chamber 9441, the isolation chamber 9451, and the detection chamber 9461.

The cover 96 is arranged covering the opening of the sample addition chamber 9411, to seal and isolate the sample addition chamber 9411. When it is required to add a sample, the cover 96 can be opened, the sample can be added to the sample addition chamber 9411, and then the cover 96 can be closed. The cover 96 can block water and allow air to pass through, which may discharge the water vapor generated during heating and reduce the air pressure in the detection card 93, thereby ensuring good air permeability, and block the escape of contaminants such as aerosols and biomolecules generated during the amplification reaction, thereby avoiding contamination of personnel and the environment during detection.

When the detection card 93 is centrifuged, the sample liquid passes through the sample addition chamber 9411 and the flow channel 947, in which case the barrier is in a solid state and seals the detection chamber 9461, such that the sample liquid cannot flow into the detection chamber 9461. After the sample liquid is heated, the barrier melts due to the heat and flows into the detection chamber 9461, such that the flow channel 947 and the detection chamber 9461 are in communication and the sample liquid can flow into the detection chamber 9461. Since the specific gravity of the barrier is less than that of the reagent, under the action of the centrifugal field, the barrier will be displaced above the reagent, without affecting the reaction and detection, and at the same time, the detection chamber 9461 can be sealed.

Some embodiments of the present disclosure further provide a method for performing a detection based on the above detection card 93. The method may be applied to the molecular diagnostic device 100 of the above embodiments. Referring to FIG. 53, FIG. 53 is a schematic view of a process of using the detection card in FIG. 50. The process includes operations at blocks illustrated herein.

At block S5301: The sample is received in the sample addition chamber.

After the sample is added to the sample addition chamber 9411, the sample is required to be pre-heated, which can be done by means of a metal heating block, a heated air flow, electromagnetic waves (infrared radiation, laser, microwave), etc. The heating area of the detection card may be an area near the sample addition chamber. The heating process requires heating to a specified temperature, such as 90 °C. After reaching the specified temperature, the sample is pretreated by holding it at the specified temperature for 3-10 minutes. After the pretreatment is complete, the temperature of the sample liquid is lowered to a specified temperature, such as 60 °C.

At block S5302: The detection card is rotated by centrifugal force such that the sample flows through the flow channel to the detection chamber.

The detection card is subjected to rotation control for centrifugation. For example, the rotation direction can be controlled to be clockwise, the rotation speed can be greater than 1000 rpm, and the rotation time can be about 10-15 s. By rotating, the sample liquid can flow from the sample addition chamber through the flow channel to the detection chamber, so as to facilitate the subsequent filling of the sample in the detection chamber. The excess sample liquid will enter the waste liquid chamber.

At block S5303: The barrier is heated to melt, such that the sample flows into the detection chamber and mixes with the reagent in the detection chamber.

The area near the detection chamber is required to be heated to a temperature higher than the melting point of the barrier, such that the barrier melts and the sample mixes with the reagent in the detection chamber.

At block S5304: Centrifugal rotation is performed to displace the barrier and the sample in the detection chamber, and the inlet end of the detection chamber is sealed.

The detection card is subjected to rotation control again. The motor may be rotated clockwise at a speed of more than 1000 rpm for 10-15 s. In this case, the sample enters the detection chamber due to the rotation of the detection card, and the barrier and the aqueous solution in the detection chamber are displaced, and the barrier is transferred to the inlet end of the detection chamber, thereby sealing each detection chamber. Then, the motor control parameters are changed to cause the detection card to rotate alternately clockwise and counterclockwise. For example, the detection card may be controlled to rotate clockwise first at a speed of 3000 rpm for 1 s, then counterclockwise at a speed of 3000 rpm for 1 s, and so on, alternately for 10-15 times. This alternating clockwise and counterclockwise rotation completely dissolves and mixes the sample in the detection chamber with the reagent.

At the same time, the barrier melts and flows to the inlet end of the detection chamber under the action of centrifugal force to seal the inlet end of the detection chamber.

At block S5305: The mixture is detected after mixing.

The amplification reaction and detection are performed. When real-time detection is adopted, the detection and amplification reaction are performed simultaneously. When endpoint detection is adopted, the detection is performed after the amplification is complete. The amplification reaction may be carried out in the following way: the area near the detection chamber is heated to a temperature in the range of 60°C to 75°C. After the specified temperature is reached, the amplification reaction is completed by holding the temperature for 30-60 minutes as required.

The process of detecting a sample using the molecular diagnostic device 100 and the detection card 93 is described below.

The control circuit board 40 sets basic information about the detection card 93, for example, the number and type of samples to be tested, the heating temperature, the number of revolutions, and the operating parameters, through an input device. After the basic information has been set, the detection of the detection card 93 is started through the input device.

The detection card 93 is loaded with a sample.

Under the control of the control circuit board 40, the first drive device 1212 controls the first lead screw 1221 and the second lead screw 1222 to rotate via the synchronisation component 1213, respectively, such that the pressure plate 50 drives the transporting assembly 60 to slide on the first guide rail 1126 towards the top plate 111. The stop plate 5813 triggers the second limiting switch 16, for example, the second sub-limiting switch 163, and the stop plate 50 reaches a predetermined position. The first drive device 1212 stops running after the control circuit board 40 receives a signal that the second sub-limiting switch 163 has been triggered.

The second drive member 6141, under the control of the control circuit board 40, causes the transporting member 62 to slide along the second guide 613 away from the first connecting plate 6111 via the lead screw 6142. The transporting member 62 reaches a predetermined position when, for example, the second limiting switch 15 is triggered by the transporting member 62. The second drive member 6141 stops when the control circuit board 40 receives a signal that the first limiting switch 15 has been triggered.

The detection card 93 loaded with the sample is placed at the recess 653 of the transporting member 62, for example, the card tray 65. The detection card 93, for example, the mounting portion 941, is placed in the receiving hole 655. The detection card 93, for example, the fourth snap-in part 942, is secured with the second snap-in part 654 of the card tray 65, such that the detection card 93 is in place.

The control circuit board 40 scans the information mark on the card tray 65 with the code scanning device 14 to determine whether it is the user-defined detection card 93. When it is not the user-defined detection card 93, an early warning prompt will be issued. When it is the user-defined detection card 93, a next step will be performed.

Under the control of the control circuit board 40, the third drive member 64 starts rotating, driving the card tray 65 to rotate, such that a next recess 653 for placing a detection card 93 reaches a predetermined position, and then a next detection card 93 is placed.

After the detection cards 93 are placed in the recesses 653 on the card tray 65, the detection cards 93 will be evenly distributed around the periphery of the card tray 65. When the number of the detection cards 93 is insufficient to be evenly distributed around the periphery of the card tray 65, a balancing card may be placed in a corresponding recess 653 of the card tray 65 such that the balancing card and the detection cards 93 are evenly distributed around the periphery of the card tray 65 together. At this point, the detection cards 93 have been placed.

Under the control of the control circuit board 40, the second drive member 6141 causes the transporting member 62 to slide along the second guide 613 towards the first connecting plate 6111 via the lead screw 6142. The transporting member 62 reaches a predetermined position when, for example, the first limit member 634 triggers the light sensor 616. The second drive member 6141 stops running after the control circuit board 40 receives a signal that the light sensor 616 has been triggered.

Under the control of the control circuit board 40, the sliding frame 61, for example, the positioning light generator 615 emits light, which is transmitted to the card tray 65 via the positioning holes 576 and 517.

When the light passes through the positioning hole 6522 on the card tray 65 again, it is transmitted directly via the support seat 80, for example, the positioning hole 814, to the positioning light receiver 716. The control circuit board 40 then confirms that the detection card is in a predetermined position.

When the light cannot pass through the positioning hole 6522 on the card tray 65, the positioning light receiver 716 will not be able to receive the light emitted by the positioning light generator 615. The control circuit board 40 will control the third drive member 64, such that the third drive member 64 drives the card tray 65 to rotate. In this way, the positioning hole 6522 on the card tray 65 is opposite the positioning hole 576, and the light will pass through the positioning holes 576, 517, 6522, and then be received by the positioning light receiver 716. Then, a next step will be performed.

Under the control of the control circuit board 40, the first drive device 1212 controls the first lead screw 1221 and the second lead screw 1222 to rotate via the synchronisation component 1213, respectively, such that the pressure plate 50 drives the transporting assembly 60 to slide on the first guide rail 1126 away from the top plate 111. When the transporting member 62, for example, the card tray 65, almost touches the support seat 80, for example, the support seat body 81, the first positioning member 656 of the card tray 65 facing the support seat body 81 will extend into the second positioning member 813. Due to the special structure of the first positioning member 656, the first positioning member 656 will be easily placed in the second positioning member 813, thereby achieving the positioning of the detection card 93.

When the card tray 65 abuts against the support seat 80, for example, the support seat body 81, the detection card 93 will be disposed on the support seat 80. The detection card 93, for example, the mounting portion 941, is arranged in the sample addition chamber receiving groove 8332 of the sample addition chamber mount 833. The detection card 93, for example, the first plug-in part 945, is arranged in the light detection member 821, for example, the separation groove 8224. The detection card 93, for example, the second plug-in part 946, is arranged in the light detection member 821, for example, the detection slot 8223. The detection card 93, for example, the first limiting portion 943, is arranged in the support seat body 81, for example, the extension slot 815, and abuts against the mounting table 816. The detection card 93, for example, the second limiting portion 944, is arranged in the support seat body 81, for example, the extension slot 815, and abuts against the mounting table 816. Thus, the placement of the detection card 93 on the support seat 80 is completed.

When the second limiting switch 16, for example, the first sub-limiting switch 162, is triggered by the limit plate 5813, the pressure plate 50 reaches a predetermined position. The first drive device 1212 stops running after the control circuit board 40 receives a signal that the first sub-limiting switch 162 has been triggered. At this point, the pressure plate 50, for example, the heating component 54, abuts against portions of the detection card 93 for arranging the isolation chamber 9451 and the detection chamber 9461. The pressing member 53, for example, the clearance portion 5312 and the sub-clearance portion 5313, releases the cover 96 of the detection card 93 to secure the cover 96. In addition, the locking member 56 is compressed, releasing the fixing of the pressing element 53.

Under the control of the control circuit board 40, the heating device in the sample addition chamber component 83, for example, the sample addition chamber mount 833, and the heating device in the second heating member 542 are heated to complete the heating of the detection card 93, for example, the sample addition chamber 9411. The heating pretreatment of the sample is achieved.

In the presence of the electromagnetic member 52, the electromagnetic force is required to be cancelled under the control of the control circuit board 40, such that the pressing member 53 is placed above the card tray 65. Specifically, the pressing member 53, for example, the first snap-in part 5314, is sleeved on the third snap-in part 6521 of the card tray 65, such that the pressing member 53 is fixed to the card tray 65. In addition, the card tray 65 is pressed against the pressing member 53 more tightly by the force generated by the electromagnet and permanent magnet inside the card tray 65. In the absence of the pressing member 53, the electromagnetic member 52 alone is applied to fix the pressing member 53.

Under the control of the control circuit board 40, the first drive member 1212 controls the rotation of the first lead screw 1221 and the second lead screw 1222 respectively via the synchronisation component 1213, causing the pressure plate 50 to drive the transporting assembly 60 to slide on the first guide rail 1126 towards the top plate 111. When the limit plate 5813 triggers the second limiting switch 16, for example, the second sub-limiting switch 163, the pressure plate 50 reaches a predetermined position. The first drive device 1212 stops running after the control circuit board 40 receives a signal that the second sub-limiting switch 163 has been triggered.

Under the control of the control circuit board 40, the third drive member 64 starts to rotate, driving the card tray 65 to rotate, so as to achieve a first centrifugation of the detection card. After completion of the first centrifugation, the positioning light generator 615 and the positioning light receiver 716 cooperate to position the detection card again.

Under the control of the control circuit board 40, the detection card 93 is again transported to the support seat 80, for example, the support seat body 81.

Under the control of the control circuit board 40, the heating device in the first heating member 541 is controlled to heat up, and the heating device in the light detection member 821 is controlled to heat up. This achieves a second heating of the detection card 93.

The detection card 93 is then centrifuged again.

Finally, the detection card 93 is transported to the support seat 80, for example, the support seat body 81.

Under the control of the control circuit board 40, the light generator 91 emits excitation light to excite the mixture in the detection chamber 9461 of the detection card 93 in the detection slot 8223. The light sensor 9213 in the light-receiving component 92 receives the fluorescence. The control circuit board 40 receives the detection signal and processes it to form diagnostic data.

The above is some embodiments of the present disclosure. It should be noted that for those skilled in the art, it is possible to make a number of improvements and refinements without departing from the principles of the present disclosure, and these improvements and refinements are considered to be within the scope of the present disclosure.

## Claims

1. A detection card conveying seat for a molecular diagnostic device, comprising:
a pressure plate, arranged with a first slide rail component, wherein the pressure plate is slidable along a sliding direction of the first slide rail component; and
a transporting assembly, configured to place a detection card and comprising:
a sliding frame, wherein an abutting force exists between the sliding frame and the pressure plate in the sliding direction, and the sliding frame is slidable together with the pressure plate along the sliding direction under an action of the abutting force; and
a card tray, connected to the sliding frame and configured to place the detection card, wherein the detection card is configured to be disposed on a side of the pressure plate away from the sliding frame along the sliding direction; the pressure plate is configured to move toward the detection card and movable to a position abutting against the detection card, in condition of the sliding frame being subjected to a force that overcomes the abutting force.

2. The detection card conveying seat according to claim 1, wherein the sliding direction is a direction of gravity and the abutting force comprises a gravity of the sliding frame.

3. The detection card conveying seat according to claim 2, wherein an elastic member is arranged between the pressure plate and the sliding frame; an end of the elastic member is connected to the sliding frame, and another end of the elastic member is connected to the pressure plate; the abutting force is configured to be controlled under an action of an elastic deformation of the elastic member.

4. The detection card conveying seat according to claim 1, wherein the pressure plate comprises:
a pressure plate body, wherein the abutting force exists between the sliding frame and the pressure plate body in the sliding direction, and the first slide rail component is arranged on the pressure plate body.

5. The detection card conveying seat according to claim 4, wherein the first slide rail component comprises a plurality of slide rails arranged around the pressure plate body.

6. The detection card conveying seat according to claim 4, wherein the pressure plate further comprises a pressing member; the pressing member is configured to be disposed on a side of the card tray close to the detection card in condition of the detection card being arranged on the card tray, for clamping and fixing the detection card in cooperation with the card tray.

7. The detection card conveying seat according to claim 6, wherein the pressure plate body comprises:
a first housing and a second housing that are connected and fixed to each other, wherein the pressing member is detachably arranged on a side of the first housing away from the second housing.

8. The detection card conveying seat according to claim 7, wherein the pressure plate further comprises:
an electromagnetic member, arranged on the side of the first housing away from the second housing and configured to generate a magnetic force upon being energized, wherein the electromagnetic member is further configured to be fixed and connected to the pressing member under an action of the magnetic force.

9. The detection card conveying seat according to claim 8, wherein the first housing defines a notch, and the second housing defines another notch; the notch of the first housing extends from an edge of the first housing inwardly, and the notch of the second housing extends from an edge of the second housing inwardly; the notch of the first housing is in communication with the notch of the second housing; the card tray is slidably connected to the sliding frame, and the card tray is configured to slide relative to the sliding frame and slide in the notch of the first housing and the notch of the second housing.

10. The detection card conveying seat according to claim 9, wherein the pressing member comprises:
a first pressing member and a second pressing member that are spaced apart, wherein a gap between the first pressing member and the second pressing member is configured to be disposed opposite to the notch of the first housing in condition of the first pressing member and the second pressing member being both arranged on the first housing, for enabling the card tray to slide in the gap between the first pressing member and the second pressing member relative to the sliding frame.

11. The detection card conveying seat according to claim 10, wherein each of the first pressing member and the second pressing member comprises:
a pressing member body, arranged with a clearance portion, wherein the pressing member body is configured to clamp and fix the detection card in cooperation with the card tray, in condition of a sample addition chamber of the detection card being disposed in the clearance portion.

12. The detection card conveying seat according to any one of claims 8-11, wherein the pressure plate further comprises a first heating member configured to abut against and heat the detection card.

13. The detection card conveying seat according to claim 12, wherein the side of the first housing away from the second housing defines a clearance groove; the pressing member is configured to be disposed in the clearance groove in condition of the pressing member being connected to the electromagnetic member; the electromagnetic member and the first heating member are disposed in the clearance groove.

14. The detection card conveying seat according to claim 7, wherein the pressure plate further comprises:
a second heating member, configured to be arranged around the pressing member in condition of the pressing member being arranged on the first housing, for abutting against and heating a detection chamber of the detection card.

15. The detection card conveying seat according to claim 14, wherein the first housing defines a plurality of snap-fit holes passing through the first housing; the plurality of snap-fit holes are configured to be arranged around the pressing member in condition of the pressing member being arranged on the first housing; each second heating member is arranged in a corresponding snap-fit hole.

16. The detection card conveying seat according to claim 15, wherein an edge on a side of each snap-fit hole away from the second housing is arranged with a protruding edge to be snapped together with the second heating member.

17. The detection card conveying seat according to claim 16, wherein a spring is arranged between the second heating member and the second housing to adjust a distance between the second heating member and the second housing.

18. The detection card conveying seat according to claim 17, wherein a side of the first housing toward the second housing defines a receiving groove, and the plurality of snap-fit holes are arranged along a periphery of the receiving groove; the pressure plate further comprises a circuit board electrically connected to the second heating member, and the circuit board is disposed in the receiving groove.

19. The detection card conveying seat according to claim 7, wherein a screw connection is arranged on the first housing to be screwed with a lead screw.

20. The detection card conveying seat according to claim 6, wherein the card tray comprises:
a card tray body, configured to arrange a plurality of the detection cards around a rotating shaft and to rotate the detection cards around the rotating shaft to centrifuge the detection cards, wherein the card tray body is arranged with a plurality of first snap-in parts to be snapped together with the detection cards; each of the detection cards is arranged with a sample addition chamber and a detection chamber; the card tray body defines a receiving hole, and the sample addition chamber is configured to be disposed in the receiving hole to be heated; and
a plurality of ribs, arranged on a side of the card tray body where the detection cards are arranged, wherein the plurality of ribs are disposed around the rotating shaft, and each adjacent two ribs are configured to arrange a corresponding detection card between the adjacent two ribs; the detection chamber is configured to be disposed outside an edge of the rotating shaft along a radial direction, so as to be detected; the pressing member is configured to be disposed opposite to the card tray body and on a side of the plurality of ribs away from the card tray body, in condition of the card tray clamping and fixing the detection card.

21. The detection card conveying seat according to claim 20, wherein a surface of the plurality of ribs on a side away from the card tray body is configured to be flush with a surface of the detection card disposed on the card tray body.

22. The detection card conveying seat according to claim 20 or 21, wherein a second snap-in part is arranged on the plurality of ribs, and the pressing member is arranged with a third snap-in part; the second snap-in part is configured to be snapped together with the third snap-in part.

23. The detection card conveying seat according to claim 22, wherein the second snap-in part is a protruding post and the third snap-in part is a connecting hole, and the protruding post is configured to be disposed in the connecting hole to realize a snap fit with the pressing member.

24. The detection card conveying seat according to claim 23, wherein the card tray body is connected to be pressing member under an action of a magnetic force.

25. The detection card conveying seat according to claim 20 or 21, wherein the pressure plate defines a positioning hole, and the card tray body defines another positioning hole; the positioning hole of the pressure plate and the positioning hole of the card tray body are configured to be overlapped for positioning a rotating position of the card tray body around the rotating shaft.

26. The detection card conveying seat according to claim 1, wherein the transporting assembly further comprises:
a sliding seat, slidably connected to the sliding frame, wherein the card tray is arranged on the sliding seat; the sliding seat is arranged with a first drive member, and the first drive member is transmission-connected to the card tray to centrifugate the card tray.

27. The detection card conveying seat according to claim 26, wherein the sliding frame comprises:
a fixing frame;
a second slide rail component, arranged on the fixing frame and slidable in the sliding direction; and
a first guide rail, arranged on the fixing frame, wherein the sliding seat is slidably connected to the first guide rail to slide along an extension direction of the first guide rail.

28. The detection card conveying seat according to claim 27, wherein the sliding frame further comprises:
a first drive device, arranged on the fixing frame and configured to drive the sliding seat to slide on the first guide rail.

29. The detection card conveying seat according to claim 28, wherein the first drive device comprises:
a second drive member, arranged on the fixing frame; and
a lead screw, transmission-connected to the second drive member, rotatably connected to the fixing frame, and screw-connected to the sliding seat, so as to drive the sliding seat to slide on the first guide rail.

30. The detection card conveying seat according to any one of claims 27-29, wherein the fixing frame is arranged with a light sensor, and the sliding seat is arranged with a first limit member; the sliding seat is configured to slide relative to the fixing frame to a position where the first limit member triggers the light sensor; the first drive device stops driving the sliding seat to slide in response to the light sensor being triggered.

31. A detection card conveying seat for a molecular diagnostic device, comprising:
a pressure plate, arranged with a first slide rail component; and
a transporting assembly, configured to place a detection card and comprising:
a sliding frame, arranged with a second slide rail component, wherein a sliding direction of the second slide rail component is consistent with a sliding direction of the first slide rail component; and
a card tray, slidably connected to the sliding frame and configured to slide to a position for mounting the detection card, wherein the detection card is configured to be disposed on a side of the pressure plate away from the sliding frame along the sliding direction of the second slide rail component; the pressure plate is configured to move toward the detection card and movable to a position abutting against the detection card.

32. A molecular diagnostic device, comprising:
a rack, having a frame structure;
a pressure plate, slidably connected to the rack to slide relative to the rack along a sliding direction; and
a transporting assembly, configured to place a detection card and comprising:
a sliding frame, slidably connected to the rack to slide relative to the rack along the sliding direction, wherein an abutting force exists between the sliding frame and the pressure plate in the sliding direction, and the sliding frame is slidable together with the pressure plate relative to the rack along the sliding direction under an action of the abutting force; and
a card tray, slidably connected to the sliding frame and configured to place the detection card, wherein the detection card is configured to be disposed on a side of the pressure plate away from the sliding frame along the sliding direction; the pressure plate is configured to move toward the detection card and movable to a position abutting against the detection card, in condition of the sliding frame being subjected to a force that overcomes the abutting force.

33. The molecular diagnostic device according to claim 32, further comprising:
a detection card detecting seat, arranged on the rack and configured to detect the detection card, wherein the sliding frame is configured to slide relative to the rack along the sliding direction to a position where the sliding frame abuts against the detection card detecting seat, for placing the detection card on the detection card detecting seat and overcoming the abutting force.
